Europäisches Patentamt

European Patent Office

Office européen des brevets

(11) Publication number: **0 269 374**

**A2**

(12) **EUROPEAN PATENT APPLICATION**

(21) Application number: 87310244.6

(51) Int. Cl.⁴: **B25J 9/18**

(22) Date of filing: 19.11.87

(30) Priority: 20.11.86 US 932992
20.11.86 US 932982
20.11.86 US 932991
20.11.86 US 932983

(43) Date of publication of application:
01.06.88 Bulletin 88/22

(84) Designated Contracting States:
DE FR GB IT SE

(71) Applicant: **UNIMATION INC.**
**Shelter Rock Lane**
**Danbury Connecticut 06810(US)**

(72) Inventor: **Daggett, Kenneth Edward**
**3724 Glen Eagle Drive**
**Murrysville, PA 15668(US)**
Inventor: **Onaga, Eimei Mind**
**10 Ox Drive**
**Brookfield Center, CT 06805(US)**
Inventor: **Casler, Richard James, Jr.**
**32 Maltbie Road**
**Brookfield, CT 06804(US)**
Inventor: **Booth, Barrett Lawrence**
**7 High Acres Road**
**Brookfield, CT 06804(US)**
Inventor: **Jalbert, Vincent P.**
**115 Richardson Drive**
**Middlebury, CT 06762(US)**

(74) Representative: **van Berlyn, Ronald Gilbert**
**23, Centre Heights**
**London, NW3 6JG(GB)**

(54) **Modular robot control system.**

(57) A modular digital robot control includes an electronic arm interface board for performing robot arm control dependent functions, an electronic torque processor board with paired microprocessors for operating the respective torque control loops for the robot joint motors, and an electronic servo control board with paired microprocessors for operating position and velocity control loops for the respective joint motors, said electronic boards being interfaced together by a digital bus. A system resource facility is provided for supporting communication between the microprocessors of the various boards and with input/output devices and other systems. A motion program which uses trajectory planning and interpolation to generate position commands in accordance with predefined moves set forth in a robot program is stored on the servo control board in a basic control configuration or is stored on an additional system control board in an expanded control configuration. A communication interface for the paired microprocessors of each board includes first and second memory banks which are cross-switched at a control sampling rate to provide a coordinated exchange of information between its respective pair of microprocessors.

## MODULAR ROBOT CONTROL SYSTEM

The present invention relates to robots and more particularly to digital multi-axis robot control systems and the modular architecture with which such systems may be configured to offer a wide range of applications as a result of control performance expandability and interfacability.

The development of robotic systems has been accelerating and as a result robotic hardware and software capabilities have been expanding to enable more demanding and more complex robot tasks to be performed. As robots become more capable, new robot application areas are opened which in turn encourage the development of higher levels of robot capability.

Industrial robots are manufactured in a variety of designs and sizes to perform a wide variety of industrial production tasks. Hydraulic or pneumatic drive power can be employed to produce robot arm motion, but electric drive power is being employed increasingly.

In electric control systems, variations can occur from robot type in a number of ways including the number of joints to be driven, the size and type of joint drives (such as hydraulic or electric), the type of electric drive (such as DC brush type or DC brushless), the type of position feedback (incremental or absolute), the type of velocity feedback (tachometer or position change derived), etc.

Moreover, wide variations can occur in the work cell environment and the factory environment in which a particular robot is to be placed. For example, one or more robots may be grouped together to work on a coordinated basis possibly with other machines and controllers and with a variety of input/output devices. At the factory level, production management and coordination may require that supervisory computer control be placed on the individual robot or group of robots.

Further, different users may have different needs with respect to the level and sophistication of control performance. Robot controls thus should have sufficient configuration flexibility to enable economic accommodation of the control configuration to variable control performance requirements.

In a multi-axis robot control, a significant amount of mathematical processing capability is required in a single control microprocessor for the implementation of servo control calculations at any one control loop level in the respective control channels for the robot axes. The total processing capability needed for all control levels in all of the axis control channels is extensive.

Generally, commercially available microprocessors have inadequate processing capability to meet the needs of multi-axis robot control. Therefore, multiple interactive microprocessors need to be harnessed to meet the needs of multi-axis robot control.

In the referenced and other multi-microprocessor control configurations, provision has to be made, and preferably efficiently made, for implementing intermicroprocessor communication. Thus, in a paired microprocessor arrangement, command information and data must be transferred from the controlling microprocessor to the slave microprocessor, status information and data must be transferred from the slave microprocessor to the controlling microprocessor and provision must be made for interfacing upward and downward control communications with the intermicroprocessor interface.

In the case of digital signal processors and other cases where operations in one of the microprocessors cannot be suspended, inter-processor communication schemes have typically required direct intervention by both microprocessors in the communication task. Such administrative overhead can consume a significant portion of available processing capability and thereby tend to defeat the purpose in using multiprocessors in the first place.

## THE OBJECTS

An object of the present invention is to provide a robot control system with an overall hierarchical and modular structural organization to enable it to provide the control task partitioning and the data communication capabilities needed to allow for cost effective and cost efficient performance enhancements as robot technology continues to develop.

A further object of the present invention is to provide a digital multi-axis robot control system which has a hierarchical task oriented structure that partitions real time sensory interactive control into organized modules.

A still further object of the present invention is to provide a robot control system which is capable of being configured either as a widely applicable basic robot control or optionally as a higher performance robot control by means of modular hierarchical extension of the basic control.

A still further object of the present invention is to provide a robot control system which can be structured both to produce reliable and effective robot operation and to have sufficient flexibility and control and communication capability to enable ready and economic adaptation of the control for use with the wide variety of commercially available robots, for use in the wide variety of user work cell and factory environments, and for use with a performance control level suitable to the customer application.

A still further object of the present invention is to provide an electronic circuit board configuration which implements a digital robot control system and provides for flexibility and economic packaging of different robot controls for different robots and/or different customer needs for like robots.

A still further object of the present invention is to provide a digital robot control employing interactive microprocessors which provide improvement in robot control performance with cost effectiveness and manufacturing economy.

## THE STATEMENT OF THE INVENTION

With these objects in view, the present invention resides in a digital control for a robot having a plurality of arm joints each driven by a corresponding electric motor. Each motor is supplied drive current by a power amplifier. Respective digital feedback control loop means controls respectively the power amplifiers for the joint motors. Means are provided for generating motor current, position and velocity feedback signals for the control loop means which includes digital position and velocity control loops, and a digital torque control loop responsive to torque commands from the position and velocity control loops to generate voltage commands for operating the associated power amplifier and joint motor. The invention is characterized by system resource means which provides general support for the operation of the digital feedback control loop means and includes data communicating means for interfacing with local input/output devices and other systems and devices. A first microprocessor servo means is coupled to the system resource means and generates the voltage commands in response to position commands and the current, position and velocity feedback signals. Further means are provided for generating the position commands in accordance with predetermined moves set forth in a robot program, said means including planning program means for generating a motion profile with specified motion parameters for implementing each robot program command and further including trajectory program means for generating said position commands to satisfy each robot program command in accordance with its motion profile. A second microprocessor means is adapted to be coupled to the system resource means. The position command generating means includes the first microprocessor servo means for execution of the planning and trajectory program means in a basic control configuration for the robot or includes the second microprocessor means for execution of the planning and trajectory program means in an expanded performance control configuration for the robot. Further included in the robot control is an interfacing memory means for coupling the first and second microprocessor means for data communication therebetween when the expanded control configuration is employed.

## DESCRIPTION OF THE DRAWINGS

The invention will become more readily apparent from the following description of preferred embodiments thereof shown, by way of example only, in the accompanying drawings, wherein:

Figure 1 shows a perspective view of a robot which is operated with more advanced and more accurate performance when controlled by a system making use of the invention;

Figure 2 shows a generalized block diagram of a control loop arrangement employing position, velocity and torque control loops in which the invention may be embodied;

Figure 3 shows a more detailed block diagram of a control loop arrangement employing position, velocity and torque control loops in which the invention preferably is embodied;

Figure 4 shows a functional block diagram of a robot control architecture arranged in accordance with unique hierarchical, modular, and communication concepts;

Figure 5 shows a hardware control block diagram which embodies the architecture of Figure 4;

Figure 6A shows a block diagram of a basic robot control with an optional modular extension which provides higher control performance in accordance with the present invention;

Figure 6B shows a block diagram of a system resource facility employed as part of the basic control of Figure 5A;

Figure 6C shows a block diagram of a generalized servo control in which multiple microprocessors are interfaced in accordance with the invention;

3

Figures 7-1 and 7-2 show a block diagram of a servo control board employed in the robot control;

Figures 8-1 and 8-2 show a block diagram of a torque processor board employed in the robot control;

Figures 9A and 9B each slow a block diagram of an arm interface board which may be employed in the robot control;

Figures 10A-10L show various flow charts for programming employed on the SCM board;

Figure 11A shows a block diagram schematic diagram of a system control board which provides an optional extension of the basic robot control;

Figure 11B shows a data flow and timing diagram for the SCM and TP boards;

Figure 12A shows an event timing chart for the TP board;

Figures 12B-1 through 12I show flow charts for programming implemented on the TP board;

Figures 13A through 13T show circuit schematics of the AIF board depicted in Figure 9A which especially adapts it for use with DC brushless motors and tachometer and absolute position feedback;

Figures 14A through 14K show circuit schematics of the AIF board depicted in Figure 9B which especially adapts it for use with DC brush type motors and incremental position feedback and velocity feedback derived from positional change;

Figures 15A through 15C together show a top schematic view of the AIF board/device interconnection provided on it as well as SCM, TP, SC, Memory and various interface boards and CRT, panel and other I/O devices that are interconnected to the AIF board; and

Figures 16A-16C show respective bridge configurations for brushless and brush type DC joint motors.

## DESCRIPTION OF THE PREFERRED EMBODIMENT ROBOTS - GENERALLY

Robot capabilities generally range from simple repetitive point-to-point motions to complex motions that are computer controlled and sequenced as part of an integrated manufacturing system. In factory applications, robots can perform a wide variety of tasks in various manufacturing applications including: die casting, spot welding, arc welding, investment casting, forging, press working, spray painting, plastic molding, machine tool loading, heat treatment, metal deburring, palletizing, brick manufacturing, glass manufacturing, etc. For more complete consideration of robots and their uses, reference is made to a book entitled "Robotics In Practice" published in 1980 by Joseph F. Engelberger.

To perform work within its sphere of influence, a robot typically is provided with an arm, a wrist subassembly and an end effector. The coordinate system employed for the robot arm typically is Cartesian, cylindrical, polar or revolute. Generally, three motion axes are employed to deliver the wrist subassembly anywhere within the sphere of influence and three additional motion axes are employed for universal orientation of the end effector. A drive system is used for each motion axis, and it may be electrical, hydraulic or pneumatic.

## PUMA ROBOT

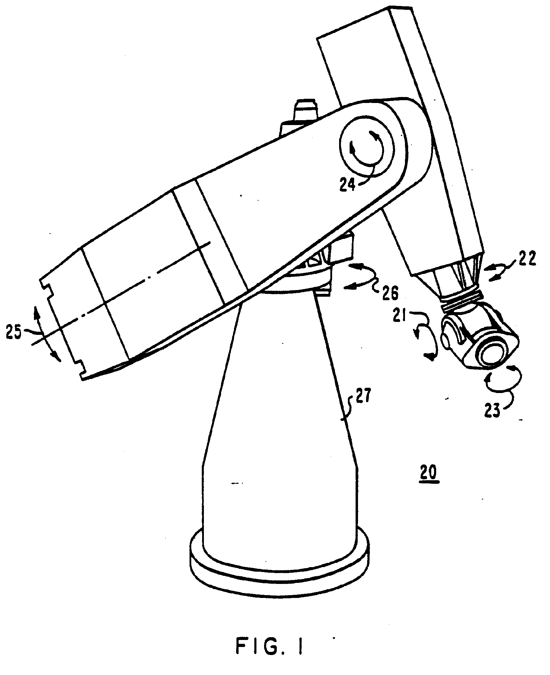

More particularly, there is shown in Figure 1 a six-axis industrial electric robot 20 which is illustrative of a wide variety of robots that can be operated in accordance with the principles of the invention. The robot 20 is a relatively powerful electric robot sold by Unimation Company, a wholly-owned company of the present assignee, under the trade name UNIMATE PUMA SERIES 700. The Model 761 PUMA has a 22 pound payload capacity and a reach of 59.1 inches. The Model 762 PUMA has a 44 pound payload capacity and a reach of 49.2 inches.

PUMA 700 Series robots are designed with flexibility and durability to ensure long life and optimum performance in even the harshest, most demanding manufacturing environments. Specific customer needs for either higher payload or extended reach determine which model is suitable for a particular task.

With its longer reach, the PUMA 761 is ideally suited for precise, repetitive tasks such as arc welding and sealant dispensing. The PUMA 762 performs high-precision material handling, machine loading, inspection, testing, joining and assembly in medium and heavier weight applications. The PUMA robots occupy minimal floor space, yet a large work envelope allows the robots to service multiple machines and work surfaces.

Each axis motion is generated by a brush type DC electric motor, with axis position feedback generated by incremental encoders. As shown, the wrist is provided with three articulations, i.e., an up/down rotation indicated by arrow 21 and a left/right rotation indicated by arrow 22 and a third motion indicated by arrow 23. Elbow and shoulder rotations in the up/down direction are respectively indicated by arrows 24 and 25. Finally, a left/right arm rotation on a base 27 is indicated by arrow 26.

## ROBOT CONTROL

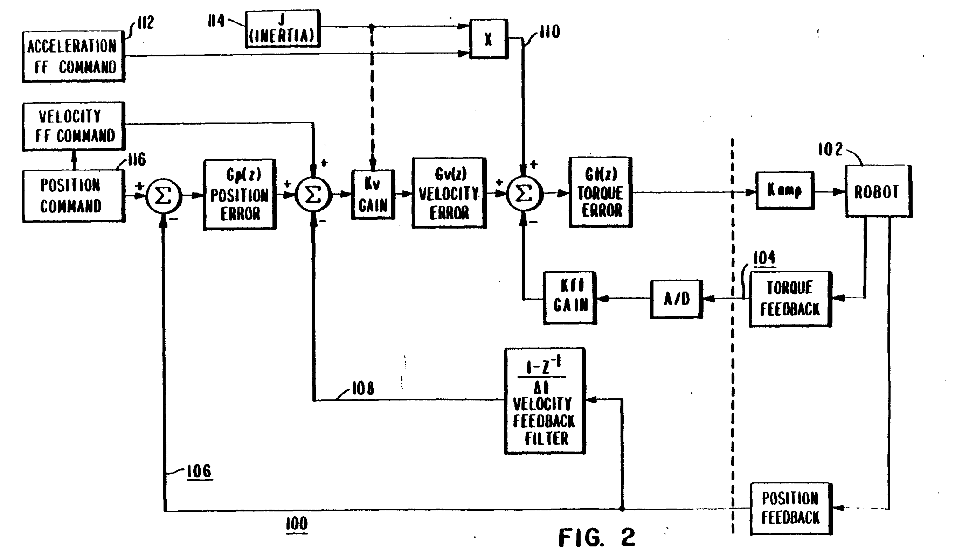

The present invention is directed to a robot control 30 (Figure 2) which can operate the robot 20 of Figure 1 and other Unimation robots including the larger 860 robot which employs brushless DC axis motors and absolute position feedback. Generally, however, the robot control 30 is universally and flexibly applicable to differing kinds and sizes of robots in stand alone or robotic network operation.

As a result of its universality, the robot control 30 can be arranged to operate a complete family of robots. Thus, all hydraulically and electrically driven robot arms manufactured by Unimation, a company of Westinghouse, assignee of the present invention, can be operated by the robot control 30. The key to the family usage, or more generally the universality of the robot control lies in modularization and in minimizing the use of arm dependent hardware and avoiding the use of any arm dependent hardware in as much of the modular control structure as possible. The robot control 30 is identified by the acronym UNIVALTM and operates with completely digital servo control to provide better robot performance with lower cost.

## CONTROL LOOPS

In Figure 2, there is shown an embodiment of a generalized control loop configuration 100 employable in the robot control. Thus, each robot arm joint motor 102 is operated by a torque control loop 104. An outer position control loop 106 is tandem connected to a velocity control loop 108 which in turn drives the torque control loop 104. A feedforward acceleration control loop 110 is responsive to acceleration command 112 and arm and load inertia 114 is also directly coupled to the input of the torque control loop 104. The robot arm is operated by the control loop 100 in accordance with a robot program through a stream of program position commands 116 applied to the position control loop.

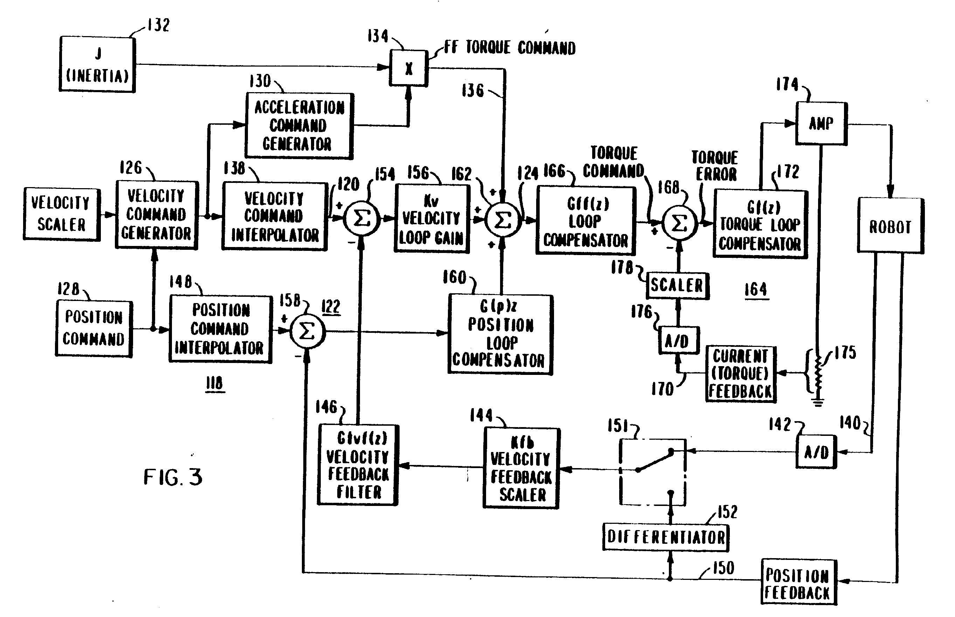

Figure 3 shows the preferred generalized control loop configuration 118 presently employed in the UNIVAL robot control. It is preferably implemented as a com pletely digital control. With the provision of hierarchical architecture and multiprocessor architecture and floating point hardware as described herein or in other patent applications referenced above, the trajectory cycle can be characterized with a cycle time in the range of 32 to 8 milliseconds depending on the employed modular configuration.

In the preferred control loop arrangement 118, position and velocity control loops 120 and 122 are parallel fed to the input of a torque control loop 124. Velocity commands are generated by block 126 from position commands received by block 128. In turn, feedforward acceleration commands are generated by block 130 from the velocity commands. Computed inertia (load and arm) 132 is multiplied against the acceleration command as indicated by reference character 134 in the feedforward acceleration control loop 136.

In the velocity loop 120, the velocity command in the present embodiment is generated once every 8 to 32 milliseconds depending on the modular configuration of the robot control. The basic robot control described subsequently herein has a trajectory cycle time of 32 milliseconds while the enhanced contact has a trajectory cycle of 8 milliseconds.

In any case, a velocity command generator 138 interpolates velocity commands at the rate of 1 each millisecond which corresponds with the velocity feedback sampling rate in velocity feedback path 140. As shown, velocity feedback for a Unimation 860 robot is produced by tachometer signals which are converted from analog to digital by converter 142. A scaler 144 and a filter 146 round out the velocity feedback circuitry.

Similarly, in the position control loop 122, an interpolator 148 generates position commands every millisecond in correspondence with the position feedback sampling rate in feedback path 150. In the Unimation 860 robot control, position feedback is absolute and the velocity and position feedback paths 140 and 150 operate as just described (with switch 151 as shown). For Unimation PUMA robots, tachometers are not available and velocity feedback is computed from incremental position feedback as indicated by block 152 (with the switch 151 swinging to its other position).

Velocity error is generated by summer 154 with gain applied by loop 156. Similarly, position error is generated by summer 158 with gain applied by box 160.

Velocity and position errors and feedforward acceleration command are summed in summer 162. Gain is applied to box 166 to generate a torque command which is applied to the input of torque control loop 164 every millisecond. Torque error is generated in summer 168 by summing the torque command (motor current command) with current feedback from feedback path 170. Box 172 applies a torque loop gain to the torque error and output commands (motor voltage commands) are applied to a power amplifier 174 which supplies the motor drive current for robot joint operation. Current feedback from resistor 175 is generated every 250 microseconds and converted to digital signals by box 176 with scaling applied by box 178.

## OVERVIEW OF CONTROL ARCHITECTURE

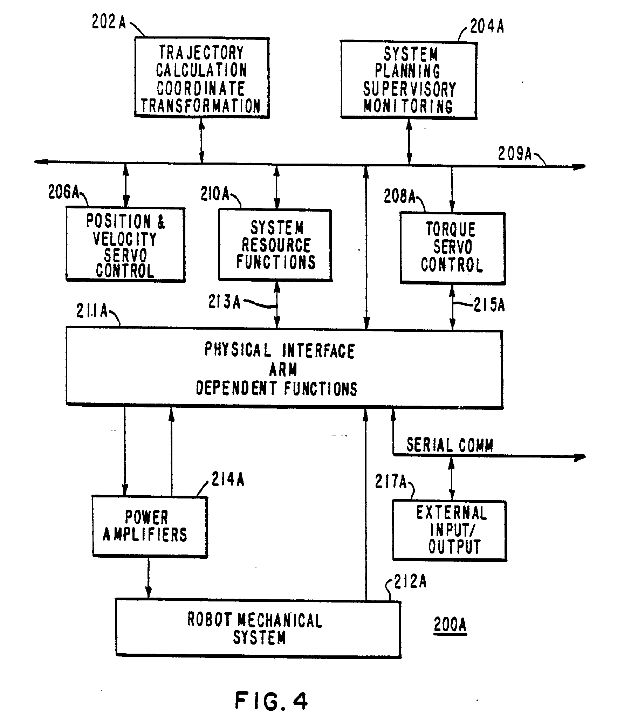

A basic robot control system architecture 200A (Figure 4) enables provision of all functions needed for modern, intelligent robot controls to be implemented in a base set of modules. The architecture 200A thus provides a highly modular organization of control and sensory systems with communications between system modules and tasks occurring through well defined interfaces. The partitioning of the basic control system into well defined functional levels and functional areas within each level enables high performance robot control to be achieved efficiently yet makes the control highly accommodating to modification with advancing technology.

As new features or algorithms are developed, required changes in the robot control are structurally defined by the control system partitioning. Standard interfacing between hierarchical levels enables changes to be made at any level without affecting other system modules. Functional subsystems can be added to the basic control system without requiring redesign of the base system or existing modules. Thus, increased performance or increased functional capability is achieved with convenience and economy.

More particularly, the robot control architecture 200A includes command/supervisory blocks 202A and 204A which respectively provide 1) trajectory calculations and coordinate transformations; and 2) system planning and system monitoring. Commands are implemented by a position/velocity control block 206A, a torque control block 208A and system resource functions 210A. Intermodule communication is performed over a system trunk 209A and preferably direct trunks 213A and 215A.

Arm dependent and other functions are provided in a physical interface 211A to the robot mechanical system 212A and its power amplifiers 214A. Communications with external input/output devices 217A and other controllers or computers are executed through the physical interface 211A. Communications capability is a basic system resource included in the system resource functions 210A.

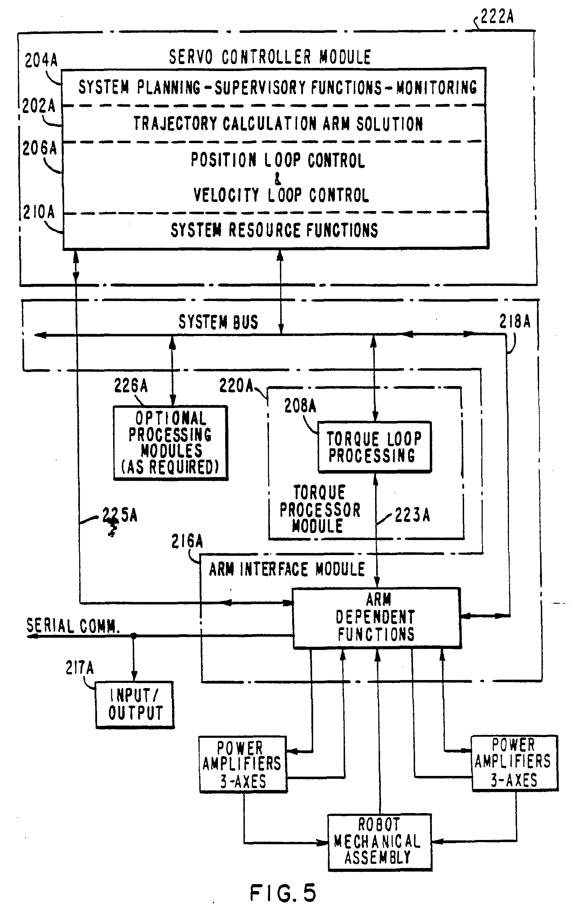

Mapping of the control functional architecture to hardware modules is shown in the diagram of Figure 5. Thus, an arm interface module (AIF) 216A at the lowest board hierarchical level includes the arm dependent functions and provides system bus circuitry 218A corresponding to the trunk 209A of Figure 4.

A torque processor board 220A provides torque loop control at the next higher board hierarchical level. The AIF board is also interconnected to the power amplifiers and the robot mechanical assembly as shown.

A servo control board (SCM) 222A is employed at the highest board hierarchical level of the basic robot control to implement velocity and position control 206A in one of its functional areas, system resource functions 210A in another of its functional areas, and command/supervisory functions 202A and 204A in another of its functional areas.

The system bus 218A interconnects the AIF board 216A with the TP and SCM boards 218A and 222A. Additional direct buses 223A and 225A connect the AIF board 216A with the TP board 218A and the SCM board 222A, respectively. The bus connections provide the intermodule communications needed within the control architecture in accordance with the invention.

Optional processing modules 226A can be connected to the system bus 218A to expand the basic robot control or to provide additional features or additional interfacing for the basic robot control. For example, a system control board referred to subsequently herein can be connected to the system bus 218A to perform the command and supervisory functions and thereby enable the basic robot control to have greater available computing capacity and provide higher levels of robot control performance.

## OVERVIEW - ELECTRONIC BOARDS

Implementation of the looping for the robot control 30 is achieved by the use of digital control circuitry disposed on a plurality of electronic boards. The organization of the circuitry on the boards and the partitioning of programming among various microprocessors enables advanced robot control performance to be achieved with a modular control configuration characterized with economy of manufacture, facilitates variability of configuration which enables universality of use, and flexibility in choice of level of control performance.

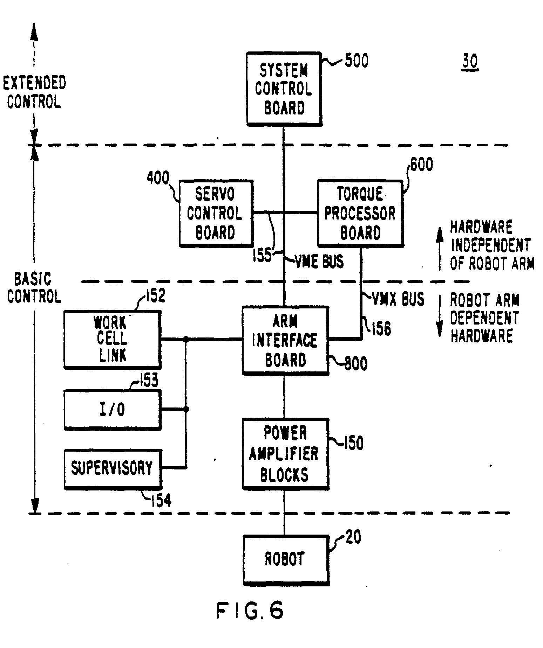

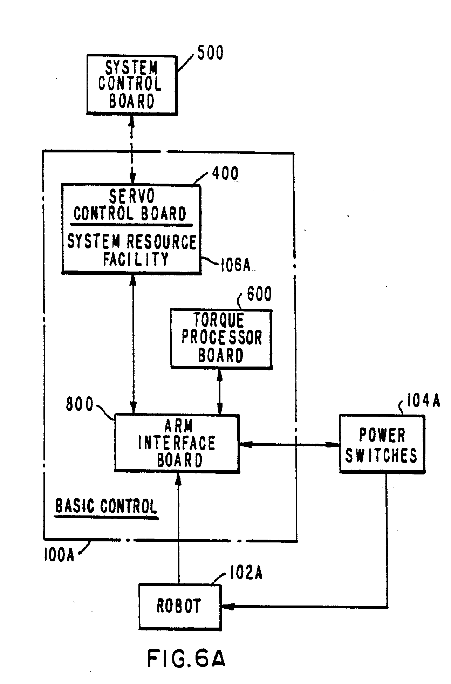

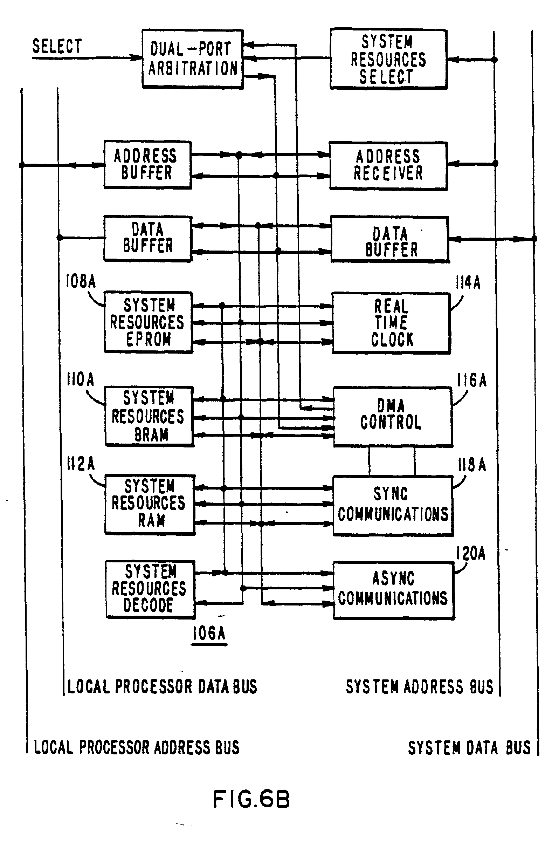

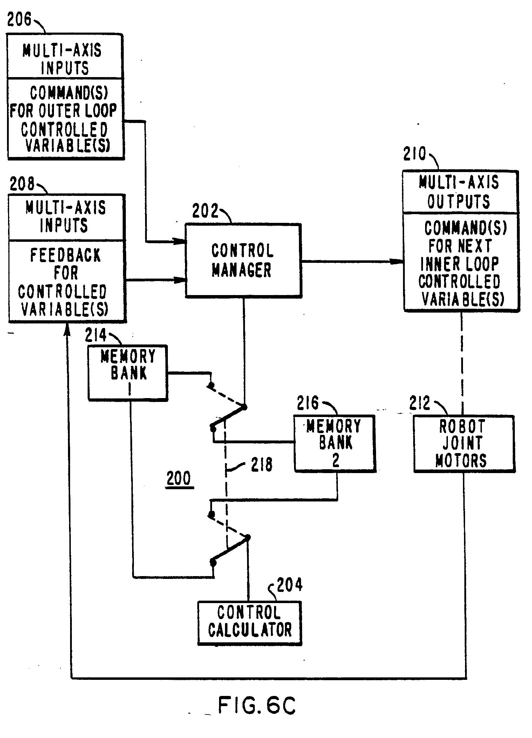

As shown in Figure 6, the control board configuration includes an arm interface board 800 which preferably houses all circuitry dependent on the type of robot arm being controlled. For example, position feedback circuitry will differ according to whether absolute or incremental position feedback is used by the robot arm to be controlled. Thus, two or possibly more varieties of the arm interface board 800 can be employed to provide digital control systems for any of a variety of different sizes or types of robot arms. Any particular robot arm would require use of the arm interface board which is structured to work with that robot arm.

The arm interface (AIF) board 800 also houses generic circuitry such as VME bus control circuitry which is generally related to two or more boards and not to any one board in particular.

Control signals (pulse width modulated) are generated from the AIF board 800 to control power amplifier blocks 150 which supply motor currents to the robot joint motors. The AIF board 800 also operates as a channel for external coupling of the robot control 30 to other robot controls in a work cell as indicated by the reference character 152, to programmable controllers and other input/output devices 153 in an area network and to higher level computers 154 for supervisory control.

A torque processor (TP) board 600 and a servo control board 400 are generic circuit boards used with the AIF board 800 and power amplifier blocks 150 in all robot control systems for all robot types. The three circuit boards 400, 600 and 800 provide complete 6 axis control for a robot arm and thus form a basic control configuration for the UNIVAL™ family of robot controls as well as other robot controls.

The torque processor board 600 provides motor torque control in response to commands from the servo control board 400. In turn, the servo control board 400 provides arm solutions and position and velocity control in accordance with a robot control program.

Extended control capability and/or system functioning is achieved by interconnecting additional electronic boards or devices to the basic control 400, 600, 800. For example, with the addition of a system control board 500 and partitioning of predetermined program functions including the arm solutions from the servo control board 400 to the system control board 500, the UNIVAL™ control can operate the robot 20 and other robots with significantly faster control action, i.e., with a trajectory cycle shortened from thirty-two milliseconds to eight milliseconds.

Interboard data communications for control and other purposes occur over multiple signal paths in a VME bus 155. Additionally, a VMX bus 156 is provided for connection between the torque processor board 600 and the AIF board 800.

Multiple pin interconnectors (not shown in Figure 6) are provided on the AIF, TP and SCM boards and any other connectable units to facilitate VME and VMX interboard bus connections modular and board assembly for the robot control 30. Other connectors are provided on the AIF board 800 for external input/output connections.

More detail on the board circuit structure is presented hereinbelow.

## OVERVIEW - MODULARLY EXPANDABLE BASIC ROBOT CONTROL

As shown in Figure 6A, a basic robot control 100A is configured with a servo control board 400, a torque processor board 600 and an arm interface board 800 to provide stand alone control for a robot 102A through power switches 104A. The basic robot control 100A has stand alone control capability as a result of the fact that it includes a system resource facility 106A, in this instance on the servo control board 400. In providing stand alone robot control, the basic control 100A provides complete implementation of supervisory control, planning, trajectory calculations, arm solutions, and position and velocity and torque loop closure.

Generally, the system resource facility 106A (Figure 6B) provides functions related to the overall robot control system and required for direction and support of control loop operation but not specifically related to the position and velocity control looping on the SCM board 400 nor the torque control loop on the torque processor board 600. At the same time, the system resource facility and the SCM board circuitry are organized in such a manner that certain portable resource functions can be removed from the SCM board 400 for performance at a higher control level thereby enabling the basic control system to operate with a higher performance capability.

Specifically, the trajectory cycle time can be shortened with the expanded control, for example from 32 milliseconds to 8 milliseconds. In this instance, it is preferred that the portable resource functions be performed on the system control board 900 which can be simply plugged into the arm interface board 800 along with the SCM and TP boards 600 and 800.

More particularly, the system resource functions are implemented in a dual port memory configuration and include EPROM 108A, battery backed-up RAM 110A for storage of non-volatile data, static RAM 112A, a real-time clock 114A, and a communications facility which includes a DMA controller 116A and two multi-protocol, dual channel communications controllers 118A and 120A.

With dual port memory operation, equal access is provided to the system resource section from either the local SCM processor or from the system bus (i.e., a higher level processor such as one on the system control board 900). Since the system resource functions serve as slave devices to the system bus, these facilities and their functions can be controlled either from the SCM local processor or from an optional higher level processor connected to the system bus. Operation of these facilities by an optional processor, or processors, with capability of serving as a system bus master permits the SCM local processor to be freed from the related processing tasks. Thus, robot control systems with varying levels of performance and functionality can be implemented cost effectively.

The SCM board 400 is structured to provide as much system flexibility as is reasonably possible and to make high use of available Large Scale Integrated (LSI) circuitry. This is one of the reasons that the DMA and communications facilities are implemented in the system resource area as opposed to being directly connected to the local processor bus. This architecture not only frees the local processor from direct intervention in communications data movement, it also eliminates the local processor bus communications related overhead, thus allowing high speed serial communications to be conducted without significant impact on controlling processor program execution time.

The system resource EPROM 108A stores the robot arm solutions program and associated constants. Incorporation of this feature into the system resource area permits robot control systems with varying degrees of performance to be implemented. Thus, the arm solutions program is available to either the SCM local processor for trajectory calculations in low cost systems, or it is made available to an optional processing module in higher cost and higher performance systems.

The system resource battery backed-up RAM 110A provides storage for non-volatile data, such as error information that is made available to the system in general. The system resource static RAM 112A is used for implementation of communications and as an interface vehicle between the SCM and other optional, higher level controlling processors.

The system resource real-time clock provides a general purpose facility for time stamping various processes within the robot controller. The system resource communications facility provides an interface between the robot controller local I/O devices (including operator panel, CRT's, etc.) and peripheral controllers, and provides an interface to other robot controllers or a higher level robot controller in work cell applications.

The system resource facility 106A provides a total of four communications channels. These channels are implemented through two multi-protocol communications controllers. Two of the communications channels can be used for BIT-BUS or other SDLC communications, and two of the channels are strictly intended for asynchronous communications. The distinction between these channels relates to implementation of support circuitry required to facilitate BIT-BUS and high baud rate serial communications.

The four channel DMA controller is dedicated for use with one of the communications controllers. This provides full duplex serial communications on two communications channels. These communications channels can be operated in either synchronous or asynchronous modes without requiring processor intervention for transfer of data. The other communications controller is intended strictly for operation in the asynchronous mode.

A significant implementation feature of the system resource facility relates to arbitration for access to system resource devices and control of the access. There are three sources of request for system resource access: the SCM local processor, the system bus and the DMA controller.

The DMA controller is implemented within the system resource area. Priority for granting access, when simultaneous requests are present, is dynamically controlled. Dynamic priority allocation ensures that the DMA controller is granted every other system resource access bus cycle and that the local processor and the system bus are each granted one out of every three system resource access bus cycle. This ensures that no single requester will be able to completely absorb system resource access. As a result, the DMA controller has to wait at most one system resource access cycle; and the local processor or system bus has to wait at most two system resource access bus cycles before its request is granted.

With one exception, granting access to the DMA controller automatically results in the system bus being given the highest priority, followed by the local processor, for the next system resource access cycle. Also, granting access to either the local processor or the system bus automatically results in the requester receiving service being assigned the lowest priority with the DMA controller being assigned the highest priority. Since granting access to the DMA controller normally results in the system bus being assigned the highest priority, special care must be taken to prevent alternate DMA and system bus requests from locking out local processor request. Thus, a system bus access followed by a DMA access results in the local processor being granted the highest priority for the next access.

## OVERVIEW OF IMPROVED SERVO CONTROL HAVING BANK-SWITCHED MICROPROCESSORS

In Figure 6C, there is shown a general representation of a robot control system in which a servo control 200 operates robot joint motor drives in accordance with the invention. The servo control 200 functions in one or more control loops; for example, it may provide the control processing needed for the robot position and velocity control loops in cascade (Figure 2) or in parallel (Figure 3) or it may provide the control processing needed for the robot torque control loop (Figure 3).

The servo control 200 is structured about a microprocessor 202 called a control manager and another microprocessor 204 called a control calculator. The combination of the control manager 202 and the control calculator 204 functions efficiently to perform servo control tasks and control support tasks for multiple robot axes.

Generally, the control manager 202 has high data processing capability and performs control support tasks, while the control calculator 204 has high calculating capability and performs control calculation tasks. Commands for the controlled variable for the multiple axes are received by the control manager 202 from the next higher control level as indicated by block 206. Feedback for the controlled variable for the multiple axes is also received by the control manager 202 from the robot as indicated by the block 208. Calculated control commands generated by the control calculator 204 are applied as outputs to the next lower level control loop as shown by block 210 or interfaced as outputs to drive the robot joint motors 212.

Input/output control data needed for control calculations is transferred by the control manager 202 through a bank switched or ping-pong memory having a first memory bank 214 and a second memory bank 216. As indicated schematically by a double pole double throw switch 218, each microprocessor 202 or 204 is connected to one of the memory banks and the connections are simultaneously cross-switched when the symbolic switch 218 is operated. In this way, each microprocessor can communicate with the other microprocessor essentially without impacting control processing performance.

An inter-microprocessor communications interface is thus provided by memory bank switching. During a first bank switch state, the control manager 202 loads command and feedback data into the bank it then "owns", and the control calculator 204 takes previously loaded control and feedback data from the other bank which it then "owns". The control calculator 204 next runs calculations for all robot axes using stored control algorithm(s) and the current control data and then deposits the calculated results in its memory bank. Memory bank switching then occurs from the first state to the next or second state under the control of the control manager 202 so that the new control control data is made available for control calculations in the next sample period. Bank switching occurs in the present embodiment at the cyclic rate of once every 250 microseconds.

In the digital robot control disclosed herein, a servo control embodying the invention is applied at two levels of the control. At the torque control loop level, the servo control with bank switched memory is employed to make motor voltage command calculations in the torque loop. At higher levels, the servo control makes velocity command and torque command calculations in the position and velocity loops. Accordingly, one servo control with bank switched memory is provided on the SCM board 400 and another servo control with bank switched memory is provided on the TP board 600 as will be described in more detail hereinbelow.

## BASIC ROBOT CONTROL - SERVO CONTROL BOARD SERVO CONTROL BOARD

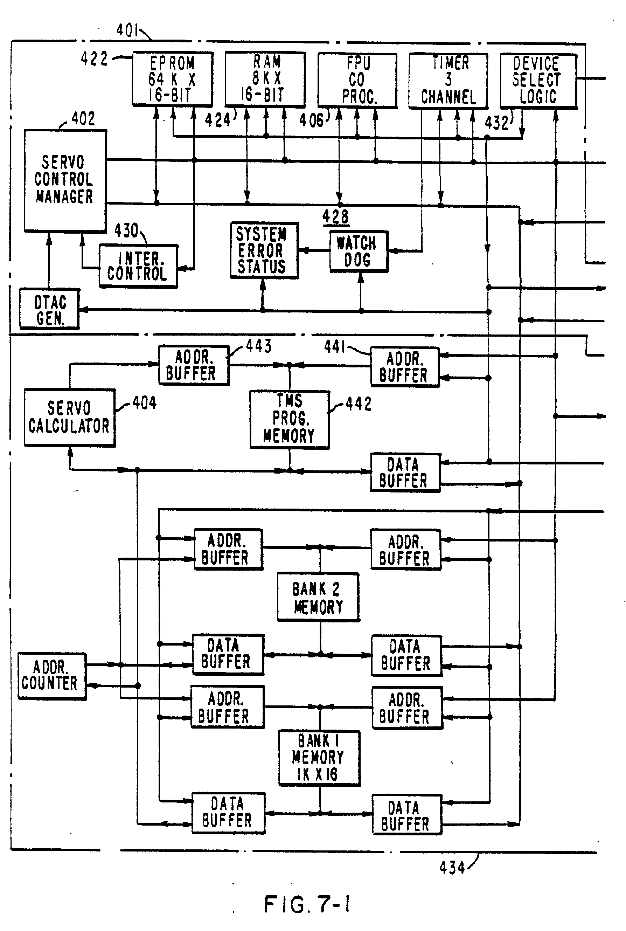

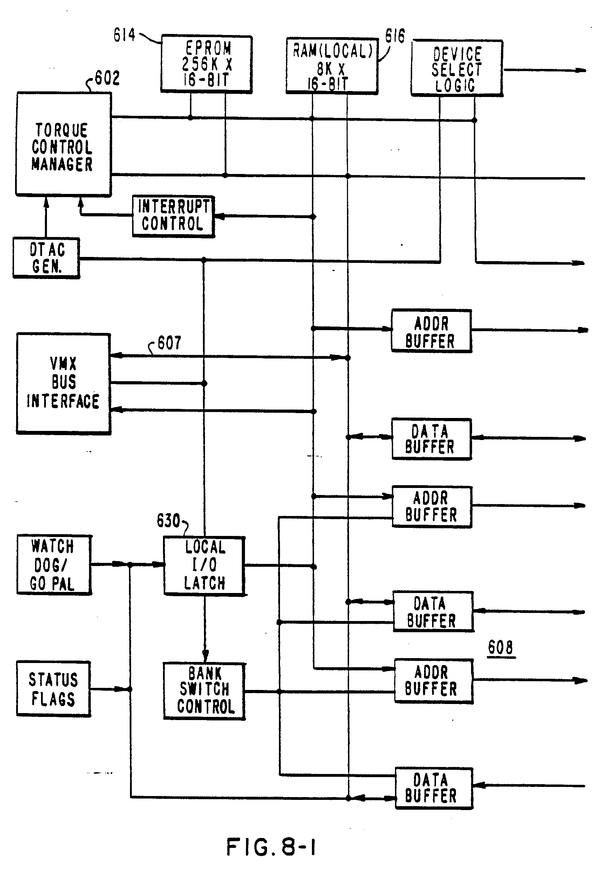

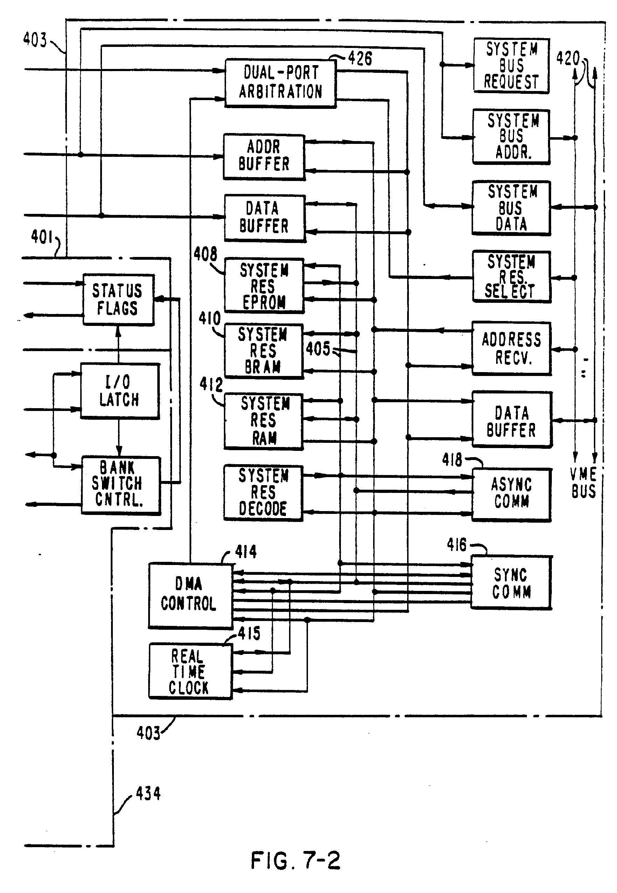

A servo control module (SCM) or board 400 (Figures 7-1 and 7-2) is structured in accordance with the modular architecture of the robot control system to operate as a core board for a complete basic robot control and generate arm solutions from stored robot program commands or to operate as part of an expanded robot control and receive for implementation arm solutions produced from robot program commands by the higher level system control board 500. The generation of arm solutions involves the execution of robot control functions including robot program language interpretation, path planning, trajectory calculations (intermediate position commands and axis coordination) and transformation of position information between Cartesian and robot joint and robot tool coordinate systems. The SCM board 400

9

additionally provides communications interfacing with related peripherals and a host controller if provided.

The SCM board 400 is provided with program controlled digital circuitry to implement arm motion control loops for the robot control system. Motion control is achieved for each axis through a control loop arrangement which preferably includes interrelated position, velocity, and acceleration control loops from which torque commands are developed for implementation by the torque processor module 600. The digital servo control is a coordinated multiprocessor servo control that generates output torque commands from (1) position and velocity commands provided for each axis by the arm solution and (2) position and velocity feedback signals obtained from the position encoders and the tachometers through the arm interface module 800.

In the SCM control loop operation, a position error is calculated for each axis from the applied axis position command and the axis position feedback. A velocity error is calculated for each axis from a velocity command derived from successive position commands and from the axis velocity feedback. Preferably, the position and velocity control loops are operated in parallel, i.e., the position and velocity errors are summed to produce a torque command for the torque control loop on the torque control module 600. Additionally, an acceleration command preferably is derived from successive velocity commands and applied in a feedforward acceleration control loop which generates an acceleration based torque command for summation with the position and velocity errors in generating the SCM output torque command.

The frequency with which loop calculations are made is selected to produce robot arm motion which is fast, accurate, smooth and stable. For example, the frequency employed can be such as to provide a trajectory cycle of 32 milliseconds as in the present case. If desired, a faster trajectory cycle, i.e., as short as 8 milliseconds, can be achieved.

## SCM DIGITAL CIRCUITRY

As observed in Figures 7-1 and 7-2, the SCM board 400 generally comprises two sections, i.e., a local processor section 401 and a system resource section 403. The system resource section 403 employs a bus 405 and provides functions related to the overall robot control system and not specifically related to execution of the position and velocity control loops.

These functions include EPROM for storage of the robot arm solutions, battery backed-up RAM for storage of non-volatile data, static RAM, real-time clock, a DMA controller and two multi-protocol, dual channel communications controllers.

As described hereabove (Fig. 6C), the system resource area 403 is implemented as dual-port memory. As such, equal access to the system resource section is provided from either a local processor or from the VME bus. The system resource functions appear as a bus slave to the VME bus 420. This provides the capability for these related functions to be controlled either from the SCM local processor, or from an optional processor connected to the system bus.

In the local processor section 401, the SCM digital circuitry includes coordinated digital coprocessors and interface and resource circuitry needed for specified performance, i.e., to provide control calculations and control data management needed for accurate and efficient control of all axes and to provide interfacing communication with a host controller, peripheral devices and other robot controllers. Preferably, a servo control manager 402 operates with a servo calculator 404 which functions as a slave processor principally to make position and velocity control loop calculations (i.e., feedback filters, loop gains, position and velocity errors, etc.).

The servo control manager 402 directs control, status and program data to and from the SCM board 400 and to and from the servo position/velocity control calculator 404. The servo control manager 402 can be a Motorola 68000 which has a high data processing capability. By separating data management and control calculation tasks in accordance with the respective capabilities of the processors 402 and 404, a basic circuit organization is provided as a basis for achieving substantially improved control performance with manufacturing and user economy.

In the illustrated embodiment, implementation of the local processor section of the SCM board 400 is based on usage of a 68000 processor as the servo control manager 402 and two coprocessors. Both coprocessors serve as peripheral devices to the 68000. One of the coprocessors 406 (preferably National Semiconductor 32081), provides floating-point calculation capability when arm solutions are to be provided by the SCM board 400. The other coprocessor, or slave processor, is the position/velocity servo calculator 404 and is implemented with a Texas Instruments TMS-32010 Digital Signal Processor. The position/velocity processor provides high speed fixed point calculation capability.

The remaining functions which are a part of the local processor section include local memory, both EPROM 422 and RAM 424, a peripheral timer/counter device 432, interrupt control 430, and system error monitoring devices 428. The local processor 402 can serve as a master to the VME bus for access to the TPM or other related type functions. However, the SCM board 400 does not provide VME bus system controller type functions which normally include system reset generation, bus arbitration for access to the bus and system bus clock generation, since these functions are implemented on the arm interface board 800.

The SCM board 400 is arranged to provide as much systems flexibility as is reasonably possible, and to obtain the maximum performance from available large scale integrated (LSI) circuitry. This is one of the reasons that the DMA and communications facilities are implemented in the system resource area as opposed to being directly connected to the local processor bus. This architecture not only frees the servo control manager 400 from direct intervention in communications data movement, it also eliminates the local processor bus communications related overhead, thus allowing high speed serial communications to be conducted without significant impact on program execution time in the servo control manager 400. Also, by placing these functions in the system resource area, these facilities can be operated by any other optional processor with capability of serving as a VME bus master. This would then totally free the servo control manager 400 from communications related processing. This organization allows the complete functionality required for a robot control system to be implemented in a cost effective manner and on a minimal set of boards while also allowing increased performance controllers to be implemented without impacting the overall system design.

Another significant area is the interface 434 between the servo control manager 402 and the servo calculator 404. Here, a special dual port memory organization, referred to as "ping-pong" or "bank switched" memory allows either processor to communicate with the other without impacting the processing performance of either processor.

## SERVO CALCULATOR SIGNAL INTERFACE

The TMS 320 servo calculator processor 404 utilizes a modified "Harvard" architecture for speed and flexibility. In a strict Harvard architecture, program and data memory lie in two separate spaces, permitting a full overlap of instruction fetch and execution. The TMS 320 provides very high speed fixed point computational capability as it uses internal hardware to implement functions that other processors typically perform in software or microprogrammed firmware. As an example, the TMS 320 contains a hardware multiplier to perform a $16 \times 16$ bit multiplication in 200 nanoseconds. There is also a hardware barrel shifter for shifting data on its way into the ALU. This permits alignment of data and multiplication to be performed in a single instruction.

The input and output signal interface provided by the TMS 320 can be classified in functional groups consisting of an address bus, a data bus, transfer control and system control.

The address bus (A0 through A11) is a 12-bit unidirectional bus. It provide the address for bus operation during all TMS 320 cycles. During input/output cycles, address lines A0, A1 and A2 provide information about what port is being addressed for interchange of data, while lines A3 through A11 are all set to the logical "0" state. This provides the capability of addressing 4K words of program memory and eight peripheral or I/O ports. The data bus (D0 through D15) is a 16-bit bidirectional, three-state bus. It provides the general purpose data path for interface with the TMS 320. The data bus only supports transfers of word length, 16 bits wide, fields of data.

The transfer control signal group consists of a program memory read enable signal (MEMb), a data memory read enable signal (DENb), and a write enable signal (WEb). The MEMb signal, asserted low, to enable instruction fetches from the program memory. The DENb signal, asserted low, indicates that the TMS 320 is accepting data over the data bus from the addressed I/O port. The WEb signal, asserted low, indicates that data from the TMS 320 is available on the data bus. Note that this signal line is asserted for all external chip write operations. Distinction between program memory and I/O operations must be made by decoding the state of the address bus. A condition where address lines A3 through All are all zero indicates to external devices that the data is to be directed to an I/O device. It is to be noted that the TMS 320 does not provide capability for wait state generation. Accordingly, all external devices interfaced to the TMS 320 must respond appropriately within the TMS 320 bus cycles.

The system control signal group consist of a reset signal (RSb), an interrupt signal (INTb) and a branch control status input signal (BIOb). The RSb signal is asserted low to force initialization of the TMS 320. The TMS 320 data bus is held in the tri-state condition during the time that RS is asserted. However, note that the address bus is always actively driven by the TMS 320, even during assertion of RSb. The INTb signal is used by external devices to indicate requirement for interrupt service. Interrupts are recognized by the TMS 320 by applying a signal with a negative going edge to the INTb pin. The TMS 320 further requires that the signal be asserted low for a minimum of one clock cycle flowing the negative transition. The BIOb signal input pin is used for program branch control. If the BIOb signal is low asserted upon execution of the BIOZ instruction, the TMS 320 will transfer program control to the address specified by the instruction.

## SERVO CONTROL DATA MANAGEMENT AND CALCULATIONS INTERFACE -THE PING-PONG OR BANK SWITCHED MEMORY-

Digital interface circuitry 434 (Fig. 7-1) enables control data to be transferred to and from the servo control calculator 404 under the control of the servo control data manager 402. As previously indicated, a signal processor having fast calculating capability like the TMS 320 is very efficient at performing computation operations. However, the TMS 320 program memory or I/O operations cannot easily be suspended as required to allow concurrent memory access by the processor 402. As such, the spatial digital interface circuitry 434 is needed to enable usage of the device 404 in a coprocessor application 402. These interface circuits 434 provide the capability for the data manage 402 to load the program memory of the calculator 404 and provide a facility for interchange of data between the processors 402 and 404. Access to the calculator program memory by the data manager 402 requires the calculator 404 be in the reset condition that is the calculator reset input that must be asserted. The state of the calculator reset signal, FRESb is directly controllable as a latched output from the data manager 402.

The primary interface for interchange of data between the processors 402 and 404 is provided by implementation of a concept referred to as bank switched memory. The bank switched memory consists of two identical, physically separate, 1K by 16-bit RAM arrays. These arrays are referred to as banks. From the data manager side, both banks are resident within the same memory address space and from the calculator side, both banks are resident within the same I/O address space. During the time that the reset signal is asserted to the calculator 404 both of the banks are controlled by the data manager 402, and any write to the bank memory results in writing both banks. However, a read from the bank results in reading data from the bank selected for the data manager 402 by the bank switch logic.

At any time that the calculator reset signal is non-asserted, ownership of one of the memory banks is associated with the data manager 402 and ownership of the other bank is associated with the calculator 404. Since the memory appears as a single 1K by 16-bit RAM, access to the memory by either processor is totally transparent to operations by the other processor. This provides for simultaneous access to the interface memory by both processors. Control and handshake signals are associated with switching of the bank ownership.

Four states are associated with the servo control data manager/calculator interface. These states are referred to as idle, go, processing, and done. Assertion of the calculator reset signal forces the interface to be in the idle state. The interface remains in the idle state until the go state is requested by the data manager 402. Bank switching can only be effected while the interface is in the idle state. A request for bank switching, at any other time is not performed until the idle state is reached.

In operation, the data manager 402 writes data including commands and data in the bank memory, requests a bank switch, and sets the go state. Switching of the banks makes this information available to the calculator 404. The calculator 404 detects the go state, sets the processing state, and operates on the data, writing the results back into the bank memory. Concurrently, the data manager 402 can write the bank memory with the next set of commands and data transparent to the calculator operation. The calculator 404 sets the done state upon completion of the required processing. The data manager 402 detects the done state, forces the idle state, and switches the banks to obtain access to the calculation results.

As previously stated, the bank switch memory appears as I/O locations to the calculator 404. Limitations in the number of I/O ports available necessitates usage of circuitry external to the calculator 404 for efficient usage of the bank switch memory. Four of the eight calculator I/O ports are associated with the bank switch memory and handshake flags. Address generation for access to the memory by the calculator 404 is provided by a binary up/down counter. The counter is operated in either post-decrement or post-increment mode. Execution of an output to port 0 results in the counter being loaded with the data value being output. This data value then serves as the bank memory address for the next bank memory operation. I/O ports 1 and 2 are used for actual interchange of data with the bank memory. Operations on I/O port 1 result in either reading or writing of the bank memory with a post-increment of the memory address. Operations on port 2 result in either reading or writing of the bank memory with a post-decrement of the memory address. Thus, the memory address counter need only be present with an address at the beginning of a series of read or write operations.

The TMS 320 BIOb pin and I/O port 3 are associated with the handshake interface with the 68000. The 68000 request the TMS 320 enter the GO state by outputting a data value of XXX1 to address 7EA07. This forces the TMS 320 BIOb signal pin the a logical "1". The TMS 320, under software execution, acknowledges reception of the "GO" state by outputting a data value of XXX1 to I/O port 3. This provides indication to the 68000 that the TMS 320 has entered the "processing" state. After completion of the required processing the TMS 320 sets the DONE state by outputting a XXX2 to I/O port 3. The 68000 then forces the IDLE state by outputting a XXX0 to address 7EA07. Indication of the IDLE state is reflected by the BIOb signal pin being at a logical "0".

The TMS 320 program memory, 4K by 16-bit, is implemented with static high speed, access time of 70 nanoseconds or less, RAM provided by device U42. Contents of this memory must be downloaded by the 68000 before the TMS can be allowed to begin program execution. Access to the TMS 320 program memory by the 68000 is only allowed when the TMS 320 is being held reset, FRESb signal asserted. The 68000 can force the TMS 320 to be reset by writing a 0 to location 7EA01. Writing a 1 to 7EA01 will release the reset to the TMS 320.

Assertion of the FRESb signal to the TMS 320 will force the TMS 320 to be reset. During reset, the TMS 320 will force its data and control lines to the tri-state condition. However, the address lines are not tri-stated. Therefore, address buffers, are required to permit access to the program memory by the 68000. The TMS 320 provides three signals for external indication of the operation being performed. These signals are FMEMb, which is asserted for indication of a program memory read operation; FDENb, which is asserted for indication of an I/O read operation; and FWEb, which is asserted for indication of either a program memory or I/O write operation.

It is to be noted that circuitry external to the TMS 320 on the SCM supports program memory write operations by the TMS 320. However, since only one control signal, FWEb, is provided for external indication of a write operation, external address decoding is required to differentiate between program memory and I/O write operations. On the SCM, any write operation with the TMS 320 address bus bit A11 at a logical "1" is interpreted as a program memory write operation, and correspondingly, any write operation with A11 at a logical "0" is interpreted as a write to the I/O port address selected by address bus bits A0 through A2. Program memory write operations are performed through execution of the table write instruction. The memory devices used for implementation of the TMS 320 program memory provide two input control signals, write enable, WEb, and chip select, CSb. A memory read operation is performed by assertion of the CEb signal with the WEb signal non-asserted. A memory write operation is performed by assertion of both control signals. It is to be noted these devices do not provide an output enable signal. Therefore, assertion of CSb and WEb during memory write operations must be essentially coincident in order to prevent data bus contention between the memory devices and the data bus drivers.

The TMS 320 program memory control signals are multiplexed between either the 68000 or the TMS 320, depending on the state of the TMS 320 reset signal, FRESb. Byte operations from the 68000 are supported. The signal ENTPAb being in the logical "0" state indicate that the 68000 is attempting to access the TMS 320 program memory with the TMS 320 reset. This allows the 68000 write high, WTHIGHb, and write low, WTLOWb, signals to be multiplexed to the write enable inputs of the respective bytes of TMS 320 program memory. This also allows the 68000 data strobe signals, LPUDSb and LPLDSb to be multiplexed the chip enable inputs of the respective bytes of the TMS 320 program memory. ENTPAb being in the logical "1" state selects the TMS 320 related control signals for multiplexing to the TMS 320 program memory control lines. The write enable input to both bytes will then be asserted whenever the FMEWb signal is asserted, and the chip enable input will be asserted whenever either FMEMb or FMEWb is asserted.

The TMS 320 provides for implementation of 8 I/O ports. The SCM implementation utilizes 4 of these I/O ports for operations related to the bank memory. No attempt is made to fully decode the I/O port addresses. As such, the 4 unused ports overlap the 4 used ports. That is, for example, TMS 320 operations on part 0 or port 4 will result in the same function being performed. Device U46 is used to provide decoding of the TMS 320 port address for I/O operations. This device decodes the TMS 320 least significant two address signal lines to provide the decoded bank memory related control signals.

[Note: The signal VTIEN provides an input to the "system go" PAL. This signal being in the logical one state indicates that transitions from the logical "0" to the logical "1" state of VTICK are to produce interrupts. It also indicates that the watch dog timer 428 is to be enabled].

## PROGRAMMMED OPERATION OF SERVO CONTROL BOARD

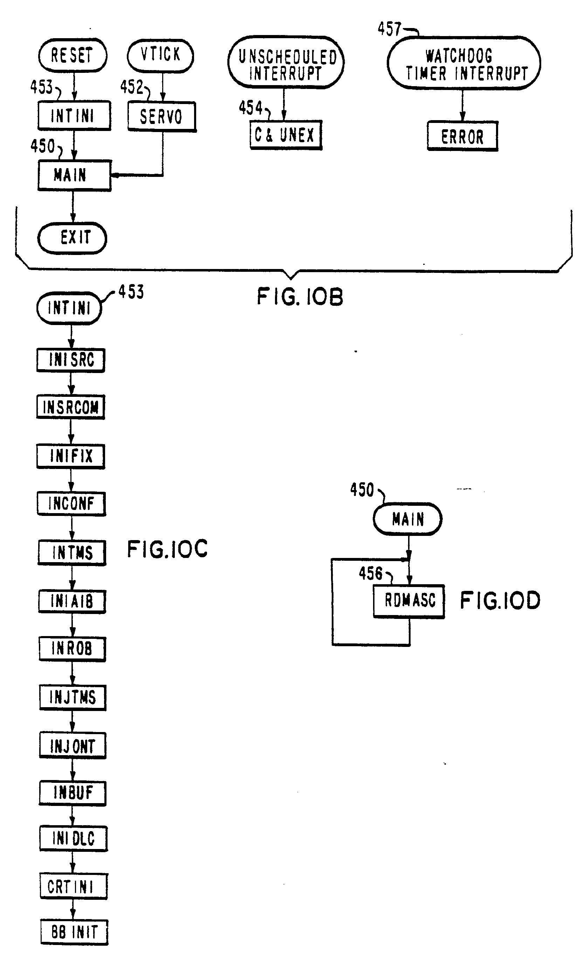

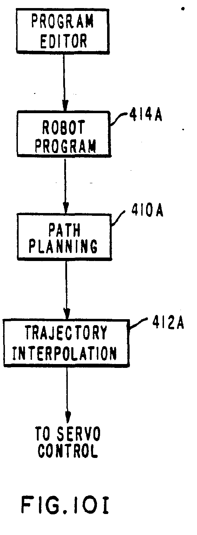

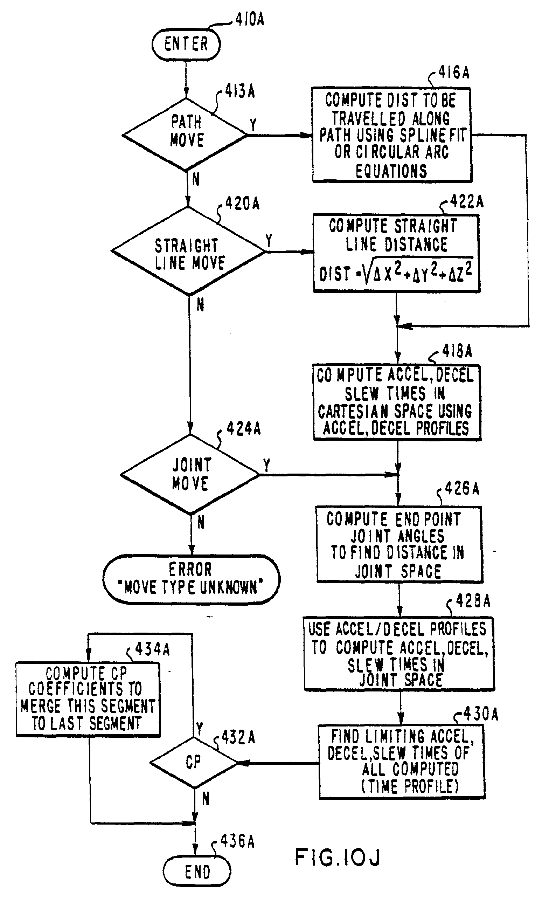

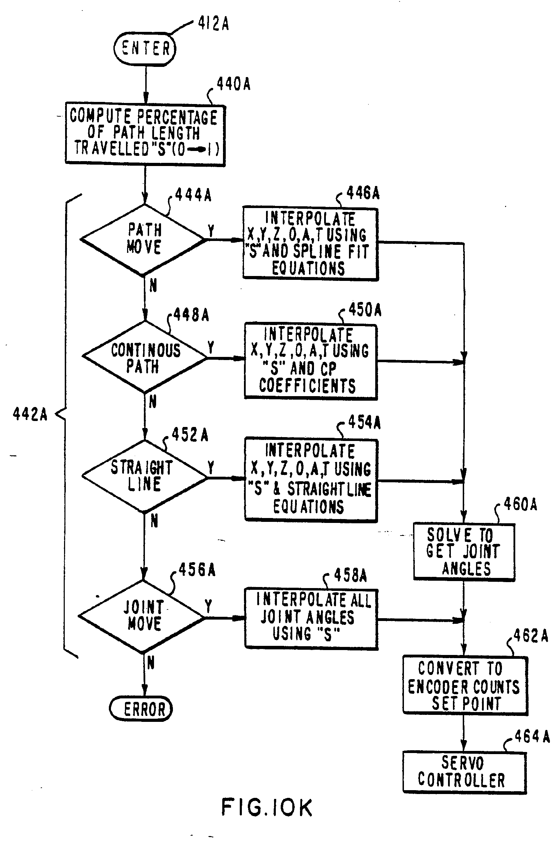

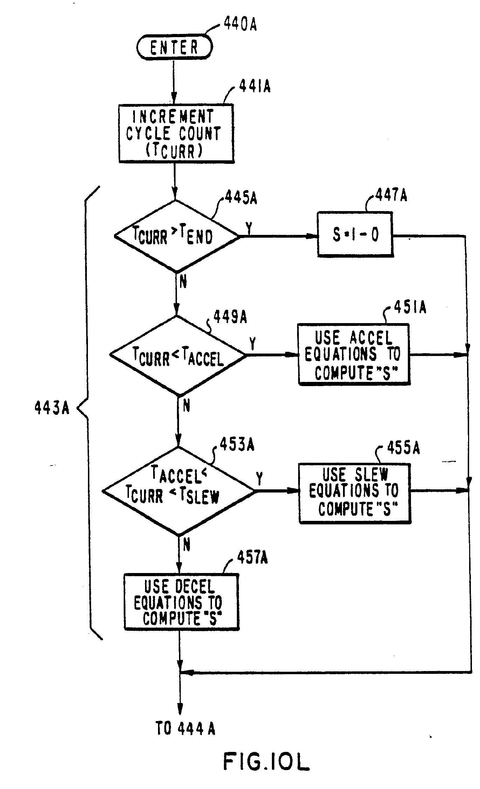

As schematically shown in Figure 10B, the program system for the servo control data manager 402 comprises a background program 450 called MAIN and a cyclically operated foreground interrupt routine 452 called SERVO. When the system is started as indicated to RESET, an initialization routine 453 is executed prior to continuous running of the MAIN program 450. In addition to the cyclically executed SERVO interrupt 452, an interrupt routine 454 called C&UNEX operates in the foreground on demand to process unscheduled or unexpected interrupts. Further, a special highest priority routine 457 called the watch dog timer interrupt functions in response to operation of the external watch dog hardware.

Where the robot control system includes the system control board 500 for higher performance through higher computing capacity, the MAIN program provides for receiving and distributing position commands from the system control board 500. In the minimum or basic robot control system configuration, the system control board 500 is not included and the MAIN program 450 further performs arm solutions to generate position commands locally on the servo control board 400. Additional description on the minimum robot control is presented subsequently herein.

The rate at which the MAIN program 450 is interrupted for the cyclical execution of the SERVO routine 452 is controlled by the signal VTICK generated once each millisecond on the VME bus 155 from the arm interface board 800. The basic functions provided by the SERVO routine 452 are:

1) transfer control data to and from the servo calculator 404;
2) transfer control data to and from the torque processor board 600;
3) receive sensor feedback data over the VME bus 155 from the arm interface board 800;
4) interface to the supporting background task RDMASC;
5) perform synchronous data logging;
6) perform one shot data logging;
7) place broadcast data in a blackboard storage area;
8) shut the system down if serious error conditions occur.

In the servo calculator, two basic functions are performed. First, downloaded position command data is interpolated for each of the 31 ticks between long ticks in the VALCYCLE, and velocity and acceleration command data are computed from the position command data for each tick. Next, servo calculations are made for each axis after each tick for the position, velocity and acceleration commands then applicable and the concurrently received position and velocity feedback. As a result, a torque command is computed for each axis after every tick for execution by the torque processor board.

The initialization routine is shown in greater detail in Figure 10C. The process essentially comprises the performance of a series of tasks as indicated in the successive blocks in Figure 10C. The following list provides further information on the nature of these tasks:

| TASK | INITIALIZATION |
|---|---|
| INISRC | bit-bus emulator for handshake |
| INSCROM | feedback interface |
| INIFIX | global variables |
| INCONF | robot default configuration |
| INTMS | servo calculator-download program store |
| INIAIB | torque processor board 600 |
| INROB | robot software configuration |
| INJTMS | bank switch memory |

```
INJONT      joint data structure via servo calculator
              program memory and torque processor
              board shared RAM reads
INBUF       internal buffer management areas
INIDLC      one shot and synchronous data logger
              interface
CRTINI      input/output hardware-servo control
              board 400
BBINIT      bit-bus emulator interface and handshake
              with system control board 350
```

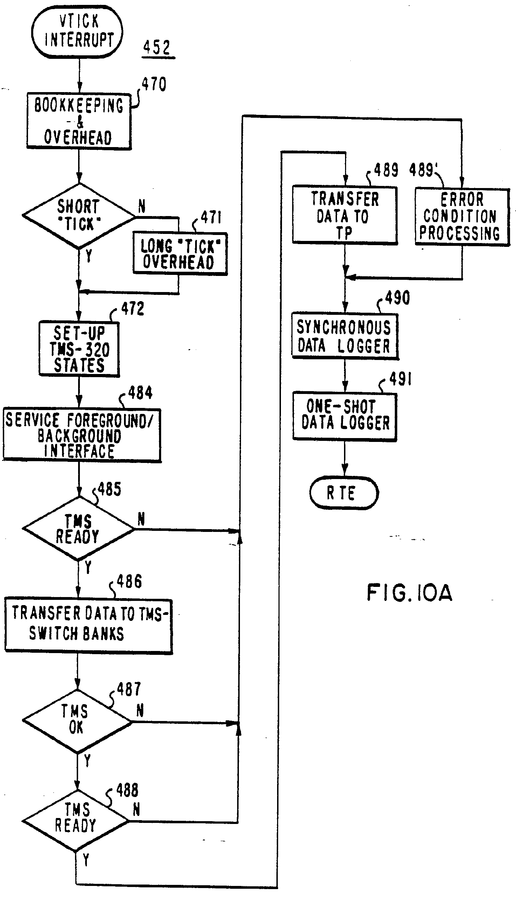

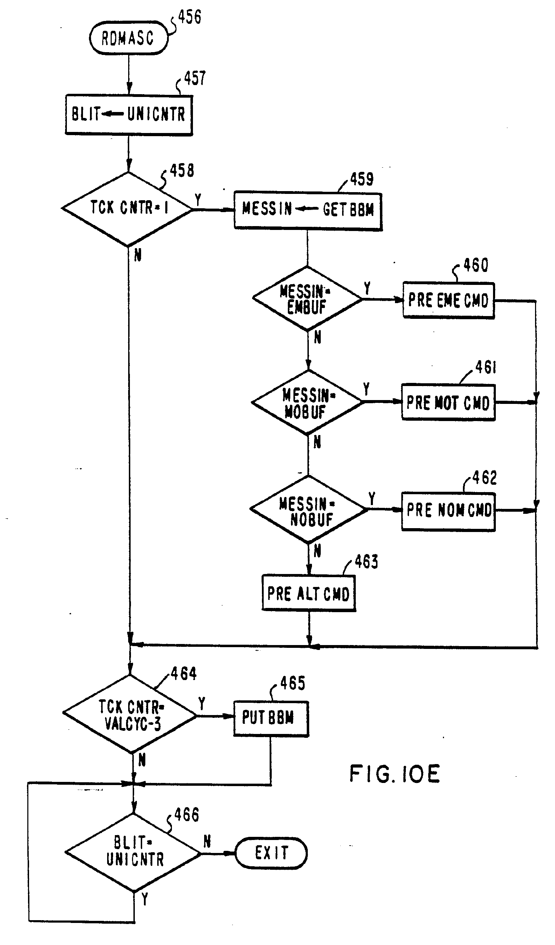

Once the system is initialized, the MAIN program 450 (Figure 10D) begins continuous cyclical background execution. As shown in Figures 10D and 10E, a routine 456 called RDMASC is run to provide ongoing reading of system position commands from the bit-bus emulator which is a designated memory area in shared RAM where system commands are deposited when received from the system control board 500.

Viewed as a whole, the background and interrupt routine can take on the following finite servo states:

0 - Start-up state
1 - Initializing state
2 - Calibrating state
3 - Servo disabled state
4 - Servo enabled, hold state
5 - Servo enabled, moving state The background task is responsible for assuring that valid state transitions occur, and for sequencing the interrupt task to new states. The interrupt task is therefore written to accept "commanded" states and to supply "current" states. In addition, the background task is sequenced via commands from the bit-bus emulator. The following state transition table defines this operation:

| Current State | Command ID from bit-bus | | | | | | | | | |
|---|---|---|---|---|---|---|---|---|---|---|
| | 36 | 17 | 45 | 1 | 16 | 34 | 20 | 2 | 18 | 46 |
| 1 | -1 | -1 | -1 | -1 | -1 | 2 | -1 | -1 | -1 | -1 |
| 2 | -1 | 3 | -1 | -1 | -1 | 2 | -1 | -1 | -1 | -1 |
| 3 | 3 | 3 | 3 | 4 | -1 | -1 | -1 | 3 | -1 | 3 |
| 4 | 4 | -1 | -1 | 3 | -1 | -1 | 5 | 4 | 4 | 4 |
| 5 | -1 | -1 | -1 | 3 | 4 | -1 | 5 | -1 | -1 | -1 |

Where a "-1" indicates an illegal state transition. The bit-bus commands are defined as follows:
36 - Where command
17 - Calibrate command
45 - Install servo parameters command
1 - Enable/disable servos command
16 - Hold command
34 - Initialize command
20 - Normal motion command
2 - Brake command
18 - Limp command
46 - Upload current servo parameters command

Generally, a set of position commands is generated for the servo loops once each Valcycle, in this case once every 32 milliseconds. In turn, each Valcycle is measured by Vticks which are generated on the VME bus once every millisecond. There are thirty-two (32) Vticks in each VALCYCLE in this case.

A cycle counter named TCKCNTR counts the Vticks in each VALCYCLE. A running counter called UNICNTR keeps a summing count on Vticks up to $2^{31}$ ticks.

When the next previous VALCYCLE has been ended as indicated by the UNICNTR in block 457, block 458 operates on the beginning of the new VALCYCLE when TCKCNTR = 1 to initiate reception of the new set of position commands for the new VALCYCLE. Thus, block 459 reads the new commands from the bit-bus emulator.

If the command includes an emergency command (such as disable servo), block 460 directs the emergency command to an emergency command buffer. Block 461 sends motion (position) commands to a motion command buffer. Similarly, block 462 sends the non-motion commands to a non-motion command buffer.

The blocks 460, 461 and 462 perform similar basic functions. First, the command is read from the Bit-Bus emulator in shared RAM. Next, prescribed checks are made to validate the command. Finally, the command is routed to the designated buffer in local non-shared internal RAM.

If no direction is found to transfer a system command to an internal RAM buffer, block 463 records a no command error and prepares an alternate command (same as last command or a shutdown if this is the second occurrence of this no command error).

Next, blocks 464 and 465 send a response to the system control board 500 that the newest command has been received when the value of the tick counter nears the end of the current VALCYCLE, i.e., when it equals the VALCYC minus three. Block 466 next repeatedly polls UNICNTR until RDMASC is to be reexecuted to receive the next system command.

When a VTICK occurs (i.e., once every millisecond), RDMASC is temporarily interrupted for execution of the SERVO routine 452. As shown in the flowchart in Figure 10A, the SERVO routine 452 first performs needed bookkeeping and overhead tasks as indicated in block 470. For example, the watchdog timer is reset for the 2 millisecond interrupt. If the tick is a long tick, i.e., the tick counter equals one to mark the start of a new VALCYCLE, block 471 performs certain additional overhead tasks. The basic functions performed are: reset tick counter to 1; route the new position command from the system control board to the servo calculator; and process changes of state in the SERVO routine.

## LOADING DATA FOR SWITCHING TO THE SERVO CALCULATOR

If the tick is a short tick, i.e., an intermediate tick in the 32 tick cycle, or after long tick overhead has been performed, block 472 prepares for transferring data to the servo calculator by loading data to the bank switched memory according to the state in which the servo calculator is to be.

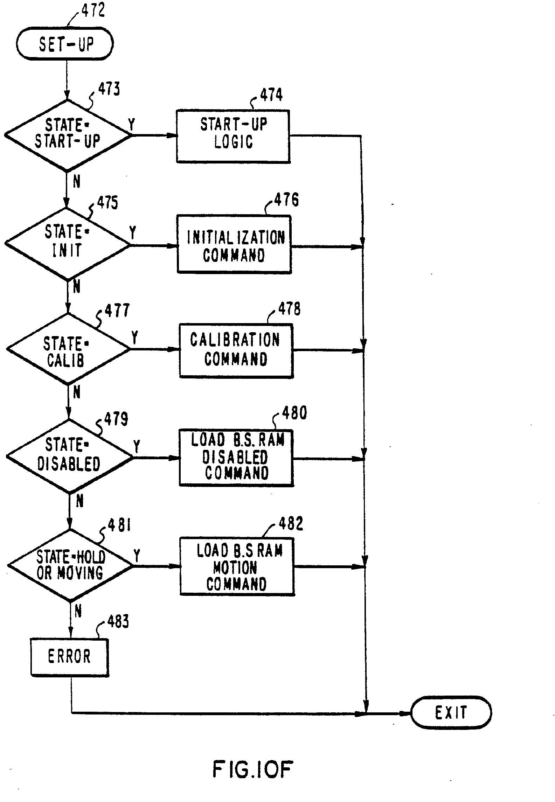

The flowchart in Figure 10F shows the servo calculator setup in greater detail. If block 473 finds the calculator is to be in the start-up state, block 474 fetches data needed for start-up logic for downloading to the servo calculator 404. For the initialization state, blocks 475 and 476 fetch initialization command data for downloading to the servo calculator 404. Similarly, calibration command data is readied for the servo calculator 404 by blocks 477 and 478 for the calculator calibration state.

If the calculator is to be disabled, blocks 479 and 480 load into the bank switched memory a disabled command. Finally, if the calculator state is to be "Hold" or "Motion", which covers most of the operating line, blocks 481 and 482 load motion command data into the bank switched memory. If none of the listed states are detected, block 483 records an error.

## DATA FLOW AND TIMING

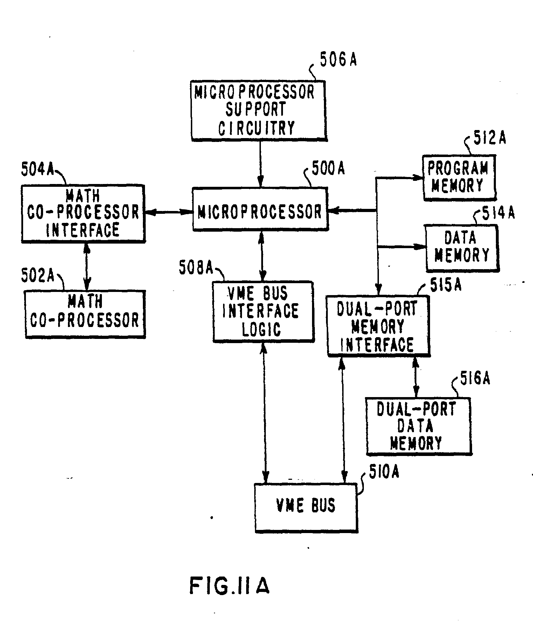

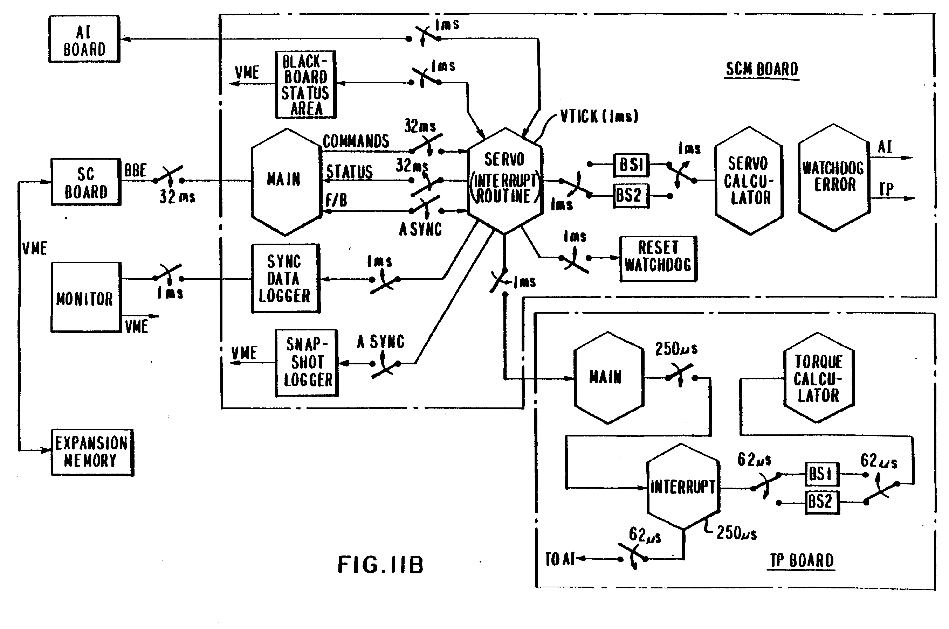

In the HOLD/MOTION state, control data generally flows as follows as seen in overview Figure 11B. Once every VALCYCLE, i.e., once every 32 milliseconds in this case, position command data for all axes is received by the servo control board main program from the system control board and shuttled through the bank switch memory to the servo calculator. Feedback data (position and velocity) is generated for each axis every millisecond and it is transferred to the servo calculator through the bank switched memory every millisecond by the servo control data manager through operation of the servo interrupt routine.

The servo calculator computes a torque command every millisecond for each axis from the command and feedback data. In turn, the torque commands are transferred every millisecond by the servo control data manager from the bank switched memory to the torque processor board. On the TP board, torque calculations based on torque commands and current feedback are performed to generate motor voltage commands for all axes every 250 microseconds.

## SWITCHING DATA TO THE SERVO CALCULATOR

After completion of the setup subroutine 472, block 484 performs whatever data transfer service is needed for the foreground/background interface within the servo control data manager 402.

## "MAILBOX" INTERFACE FOR 68K FOREGROUND/BACKGROUND TASKS

In order to use effectively the interrupt routines in the 68K it has become necessary to perform various asynchronous "setup" operations in the background task, while using the foreground task(s) to instantiate the changes. This approach allows the foreground tasks to have complete control of subordinate processors and devices. It also allows the less time critical setup to be spread out over several servo cycles. (In this discussion background refers to the non-interrupt task.)

A shared RAM mailbox interface was chosen to allow the background routine to communicate a list of tasks to be performed by the foreground routine. Each task request is encoded into a "packet" which contains the information required by the foreground task. The packet structure was designed to be simple yet as generic and efficient (in terms of decoding and execution costs) as possible. The following table describes the format of the interface:

```
Offset
(bytes)                           Contents

    0            Semaphore byte (1=Full, 4=Empty)
    1            Number of Packets (requests)
   2-3          | →  Command Field
   4-5   first  |    Message size (number of 16-bit words)
   6-9   packet |    FROM Address Field
   a-d          | →  TO Address Field
   e-15  Second packet (items 2-d from above)
  16-1d  Third packet
```

For the servo interrupt routine the elements in each packet are interpreted as follows (descriptions assume a single packet is presented):

Command Field (CF) : CF > 0 : TMS 320 servo command

*Load CF into the TMS command list (see "TMS Ping-Pong Memory Map")
*copy "message size" words from "FROM" and append to the TMS input buffer.
*set semaphore byte to "empty"

CF = O : Transfer data command
*copy "message size" words from "FROM" to "TO"
*set semaphore byte to "empty"

CF = -9999 : TMS reset command (allows direct writes to TMS program memory)
*disable (level 5 - VTICK) interrupts
*put TMS into reset state
*copy "message size" words from "FROM" and "TO"
*remove reset state from TMS
*set stick to bank 0
*enable (level 5 - VTICK) interrupts
*set sempahore byte to "empty"
CF < 0 : Multipass TMS 320 servo command
*set CF = -CF

17

*Load CF into the TMS command list
*copy "message size" words from "FROM" and append to the TMS input buffer.
*DO NOT set semaphore byte to "empty".

Notes:

*In order to avoid time consuming packet management for multipass commands, ALL packets will be reprocessed on the second pass if ANY packet is of type Multipass.
*Because resetting the TMS results in automatically switching to bank 0 (which may not be the bank earlier packets were stored in), the TMS bank memory is NOT switched if a TMS reset command is present. Therefore these commands should be sent separately.
*Currently 300 (hex bytes of system resource RAM is set aside for the mailbox area and for free space to store the data. The following list of suggested global symbol names further defines the area.

List of Global SymbolsFB__SHR   $0^\times 34900$        /* shared ram base address to start of
                             /* foreground/background semaphore area */
FB__SEM   $0^\times 0000$ + FB__SHR /* ptr to FB semaphore byte */
FB__NOP   $0^\times 0001$ + FB__SHR /* ptr to number of packets (byte) */
FB__CF1   $0^\times 0002$ + FB__SHR /* ptr to the first command field */
FB__MAX   $0^\times 0004$        /* maximum number of packets allowed */
FB__DAT   $0^\times 0032$ + FB__SHR /* ptr to area of free space to store data to
                             /* be transferred to foreground task */
FB__MXD   $0^\times 02ce$        /* maximum size of FB__DAT in bytes */
FB__EMPTY $0^\times 04$          /* no command list */
FB__FULL  $0^\times 01$          /* command list present */

If block 485 detects that the servo calculator 404 is ready, block 486 transfers the previously prepared position command and/or other data to the calculator 404 through the ping-pong memory. If the block 485 or block 487 finds that the servo calculator 404 is in a defective state, an error shutdown is commanded. The following command list provides greater detail on the data transferred to the servo calculator.

## Ping-Pong Memory Map

| Addresses | | | |
|---|---|---|---|
| 68k | TMS | Symbol | Contents |
| 3c000-3c007 | 0-7 | TMSCOM | TMS Command List |
| 3c010-3c09f | 8-4f | TMSIN | TMS Input Buffer |
| 3c0a0-3c0ff | 50-7f | TMSSTA | TMS Status Buffer |
| 3c100-3c11f | 80-8f | TMSTOR | TMS Torque Output Buffer |
| 3c120-3c21f | 90-10f | TMSLOG | TMS Logged Data Buffer |
| 3c220-3c7ff | 110-3ff | TMSGC | TMS General Communication Area |

Each of the buffers which comprise the 1k word ping-pong memory is described in detail below. The symbols shown in the table are simply suggested names to use for the start of each buffer to promote consistency between the 68k and TMS code. The buffers are organized such that the first two areas (TMSCOM and TMSIN) are read-only for the TMS (write-only for the 68k). The next three areas are write-only for the TMS and vise versa for the 68k. Whereas the final area (TMSGC) is a read/write area for both processors.

The TMS command list is simply a NULL command terminated list of task requests for the TMS to perform in a given cycle. Up to seven (7) commands can be included in a list. Each element is a 16-bit command used to direct the actions of the TMS. The preferred commands are as follows:

| Command | Action |
|---|---|
| 1 | Not currently used |
| 2 | Not currently used |
| 3 | Not currently used |
| 4 | Not currently used |
| 5 | Not currently used |
| 6 | Calibrate initial position and velocity |
| 7 | Calculate torque (execute servo with no cycle update) |
| 8 | Calculate torque (execute servo with cycle update) |
| 9 | Not currently used |
| a | Identify TMS servo parameters and version ID |

The TMS input buffer contains additional input data required by the TMS conditioned on the value of the command word and its relative location in the command list. Input data required by each command is stored sequentially in the same order as the commands in the command list. Currently this buffer has the following format if the command word = 8 (e.g., a cycle or "long" tick); note that the organization of this table is by 16-bit "short" word count. TMSIN if absolute encoders and tachometers are used (e.g. 860/rx)

| Word | Contents |
|---|---|
| 0 | Time stamp |
| 1 | Servo enable mask |
| 2 | Velocity scale factor |
| 3 | High word of position command for joint 1 |
| 4 | Low word of position command for joint 1 |
| 5 | Absolute encoder measurement for joint 1 |
| 6 | Absolute velocity measurement for joint 1 |
| 7-10 | Words 3-6 for joint 2 |
| 11-14 | Words 3-6 for joint 3 |
| 15-18 | Words 3-6 for joint 4 |
| 19-22 | Words 3-6 for joint 5 |
| 23-26 | Words 3-6 for joint 6 |

If the command word = 7 (e.g., a non-cycle or "short" tick) the TMS input buffer assumes the following form:

| Word | Contents |
|---|---|
| 0 | Time stamp |
| 1 | Servo enable mask |
| 2 | Absolute encoder measurement for joint 1 |
| 3 | Absolute velocity measurement for joint 1 |
| 4-5 | Words 2-3 for joint 2 |
| 6-7 | Words 2-3 for joint 3 |
| 8-9 | Words 2-3 for joint 4 |
| 10-11 | Words 2-3 for joint 5 |
| 12-13 | Words 2-3 for joint 6 |

19

TMSIN for command = 8 if ONLY incremental encoders are used (e.g., Puma line)

| Word | Contents |
|------|----------|
| 0 | Time stamp |
| 1 | Index interrupt/servo enable mask |
| 2 | Carry (wrap) for position feedback |
| 3 | Velocity scale factor (1608 format) |
| 4 | High word of position command for joint 1 (in 3208 form) |
| 5 | Low word of position command for joint 1 |
| 6 | Encoder count/index for joint 1 |
| 7-9 | Words 4-6 for joint 2 |
| 10-12 | Words 4-6 for joint 3 |
| 13-15 | Words 4-6 for joint 4 |
| 16-18 | Words 4-6 for joint 5 |
| 19-21 | Words 4-6 for joint 6 |

If the command word = 7 (e.g., a non-cycle or "short" tick) the TMS input buffer assumes the following form when using incremental encoders:

| Word | Contents |
|------|----------|
| 0 | Time stamp |
| 1 | Index interrupt/servo enable mask |
| 2 | Encoder count/index for joint 1 |
| 3 | Encoder count/index for joint 2 |
| 4 | Encoder count/index for joint 3 |
| 5 | Encoder count/index for joint 4 |
| 6 | Encoder count/index for joint 5 |
| 7 | Encoder count/index for joint 6 |

TMSIN for command = 8 if absolute resolvers are used (e.g., 100 robot)

| Word | Contents |
|------|----------|
| 0 | Time stamp |
| 1 | Servo enable mask |
| 2 | Velocity scale factor |
| 3 | High word of position command for joint 1 |
| 4 | Low word of position command for joint 2 |
| 5 | Absolute resolver measurement for joint 1 |
| 6-8 | Words 3-5 for joint 2 |
| 9-11 | Words 3-5 for joint 3 |
| 12-14 | Words 3-5 for joint 4 |
| 15-17 | Words 3-5 for joint 5 |
| 18-20 | Words 3-5 for joint 6 |

If the command word = 7 (e.g., a non-cycle or "short" tick) the TMS input buffer assumes the following form:

0 269 374

| Word | Contents |
|------|----------|
| 0 | Time stamp |
| 1 | Servo enable mask |
| 2 | Absolute resolver measurement for joint 1 |
| 3 | Absolute resolver measurement for joint 2 |
| 4 | Absolute resolver measurement for joint 3 |
| 5 | Absolute resolver measurement for joint 4 |
| 6 | Absolute resolver measurement for joint 5 |
| 7 | Absolute resolver measurement for joint 6 |

If the command word = 6 (e.g., a calibration command) the TMS input buffer is:

| Word | Contents |
|------|----------|
| 0 | Time stamp |
| 1 | Absolute position in encoder bits (3208) for joint 1 |
| 2 | Absolute position in encoder bits (3208) for joint 2 |
| 3 | Absolute position in encoder bits (3208) for joint 3 |
| 4 | Absolute position in encoder bits (3208) for joint 4 |
| 5 | Absolute position in encoder bits (3208) for joint 5 |
| | Absolute position in encoder bits (3208) for joint 6 |

If the command word = A (e.g., ID command), no inputs are required in the TMS 320 input buffer.

The purpose of the TMS 320 status buffer is to provide an area where any process can look to find out the current position/velocity of the arm. As such this buffer is ordered as follows:

21

| Word | Contents |
|------|----------|
| 0 | Time stamp (future) |
| 1 | Enable/disable bit mask |
| 2 | Limp status bit mask |
| 3 | Brake status bit mask |
| 4 | PFB, Position of joint 1 in encoder bits in 3208 form (high word) |
| 5 | PFB, Position of joint 1 in encoder bits (low word) |
| 6 | VFINO, Velocity of joint 1 in encoder bits/ servo-tick in 1608 form |
| 7-9 | 4-6 for joint 2 |
| 10-12 | 4-6 for joint 3 |
| 13-15 | 4-6 for joint 4 |
| 16-18 | 4-6 for joint 5 |
| 19-21 | 4-6 for joint 6 |
| 22 | Status (error/no error/command error) |
| 23 | Servo coincidence word (fine/course) |
| 24-25 | Error status (hi and low) |
| 26 | Input task bit mask (hi byte)/completion status bit mask (low byte) |

The torque output buffer contains the torques to be applied over the next servo tick. The torques are formatted such that the 68k can simply copy them directly to the appropriate device (DAC/TP board) without modification. This buffer is simply organized as:

| Word | Contents |
|------|----------|
| 0 | Torque output for joint 1 |
| 1 | Torque output for joint 2 |
| 2 | Torque output for joint 3 |
| 3 | Torque output for joint 4 |
| 4 | Torque output for joint 5 |
| 5 | Torque output for joint 6 |

The logged data buffer currently is composed of the following items all recorded at the servo sample rate:

| Word | Contents |
|------|----------|
| 0 | Joint 1 PCT, Position command in 3208 form (high word) |
| 1 | Joint 1 PCT, Position command (low word) (bits) |
| 2 | Joint 1 VCT, Velocity command in 1608 form (B/tick) |
| 3 | Joint 1 VFBF Filtered velocity feedback in 1608 form (B/tick) |
| 4 | Joint 1 Position error in 1605 form (bits) |
| 5 | Joint 1 Integration error in 32016 form (high word) |
| 6 | Joint 1 Integration error (low word) |
| 7 | Joint 1 Velocity error in 1608 form (B/tick) |
| 8 | Joint 1 DVHATC Accel command in 1608 (B/tick/tick) |
| 9 | Joint 1 SUM, Intermediate signal sum in 1600 form |
| 10-18 | 0-8 for joint 2 |
| 19-27 | 0-8 for joint 3 |
| 28-36 | 0-8 for joint 4 |
| 37-45 | 0-8 for joint 5 |
| 46-54 | 0-8 for joint 6 |

The General Communication area is used as a general read/write area for passing information to and from the servo calculator.

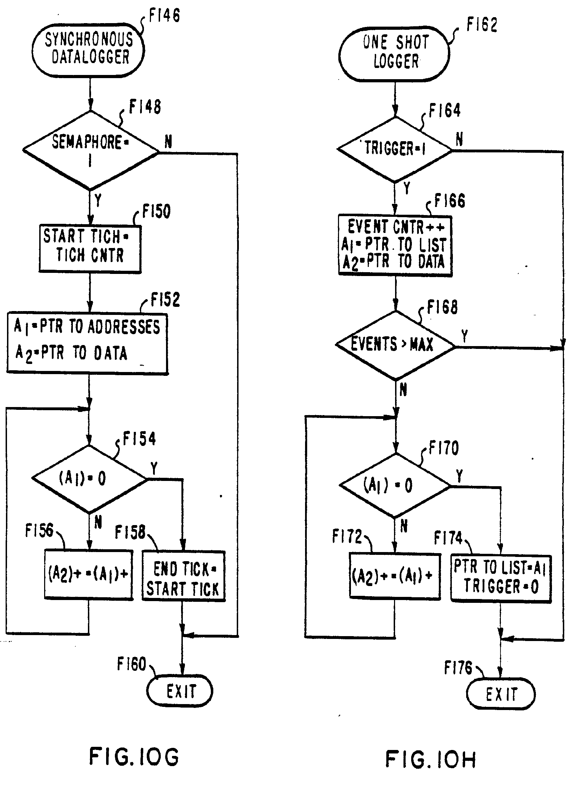

Next, block 488 determines whether the torque processor board 600 is ready for data transfer and if not an error shutdown is commanded. Normally, however, the TP board 600 would be ready and block 489 transfers torque command and/or other data to the TP board 600. Other data may include servo gains and correct gains for the particular robot being controlled, all of which would be down-loaded during step-up time. Blocks 490 and 491 then perform synchronous and one-shot data logging routines (see Figures 10G and 10H). The one-shot data logger 491 is flagged for operation by various routines when an error occurs.

## SCM Data Logger Mechanisms

Both data loggers are controlled by a shared RAM "mailbox" interface. In addition, both are invoked in the servo interrupt routine immediately following the execution of the servo code. Therefore, the fastest rate at which data can be logged is dictated by the servo update rate employed (currently this is 1 ms). In the case of the one-shot data logger, it can also be invoked via a subroutine call (JSR logone). This is provided so that condi tions present during unexpected errors can be recorded immediately (for example, prior to an emergency shutdown).

The shared RAM interface for the synchronous data logger is organized as follows (where all addresses are specified as offsets from a base address):

| Offset | Size | Contents |
|---|---|---|
| 0 | 8 bits | Semaphore (1 = > log data) |
| 1-3 | 24 bits | Not used |
| 4-5 | 16 bits | Starting tick counter |
| 6-7 | 16 bits | Not used |
| 8-9 | 16 bits | Ending tick counter |
| a-b | 16 bits | Not used |
| c-f | 32 bits | Pointer to list of addresses to log (32 bit data transfers) |
| 10-13 | 32 bits | Pointer to area in memory for SCM to deposit logged data |

Note: The areas which are not used in the above map will be eliminated in the future. They exist only because the original interface exclusively used long word quantities.

The shared RAM interface for the asynchronous one-shot data logger is organized as follows (where all addresses are specified as offsets from a base address):

| Offset | Size | Contents |
|---|---|---|
| 0 | 8 bits | One-shot trigger (1 = log, reset to 0) |
| 1 | 8 bits | Not used |
| 2-3 | 16 bits | Total event counter |

In the servo calculator, two basic functions are performed. First, downloaded position command data is interpolated for each of the 31 ticks between long ticks in the VALCYCLE, and velocity and acceleration command data are computed from the position command data for each tick. Next, servo calculations are made for each axis after each tick for the position, velocity and acceleration commands then applicable and the concurrently received position and velocity feedback. As a result, a torque command is computed for each axis after every tick for execution by the torque processor board.


## MOTION SOFTWARE AT THE SYSTEM LEVEL

The planning and trajectory (motion) software can be implemented on the SCM board 400 in a basic robot control or on the system control board 500 in an expanded robot control.

Robot position commands are generated by motion software at the system level. In the basic robot control, system motion software is resident on the SCM board 400.

As shown in Figure 10I, the motion system software includes a path planning program 410A and a trajectory interpolation program 412A. A robot program 414A prepared by the user, in this case preferably with use of the present assignee manufacturer's programming language called VAL II, specifies the robot destination points along its programmed path as well as certain other requests and specifications regarding robot operation. In effect, the planning and trajectory programs operate at the system level to process robot program outputs so as to enable robot controller execution of the robot program.

Thus, where a complicated path has been programmed, the robot program normally includes additional intermediate path points. Additionally, the robot program specifies tool tip speed, acceleration and deceleration as a percentage of maximum, and the type of path control, i.e., continuous or point-to-point.

The planning and trajectory programs can be installed on internal UNIVALTM board memory, preferably EPROM, or it may be loaded when placed in use into general board memory from floppy disk or other storage means. The user robot program is loaded into UNIVALTM board memory at the time of use.

In the case of the basic robot control, motion system software is resident on the SCM board 400. In expanded versions of the robot control, the system motion software is resident on the system control board. Of course, other variations are possible.

The planning program 410A runs on a demand basis, i.e., when a new destination point is received from the robot program. The trajectory program 412A runs cyclically at the system cycle rate, i.e., at the rate of once each 32 or 16 or 8 milliseconds in the preferred embodiment depending on the configuration of the robot control system as explained elsewhere herein.


## 1. PLANNING PROGRAM

Basically, planning is performed by the robot control to define how the robot tool tip is to move from its present position to its commanded destination. Thus, the planning program generates a time profile for acceleration, slew and deceleration for successive segments of motion defined by the robot program.

As shown in Figure 10J, the planning program 410A determines the type of move to be made for each segment and then computes the segment time profile in accordance with the type of move.

Thus, block 413A determines whether a prescribed path move has been specified. If so, box 416A computes the distance to be traveled along the path using spline fit equations (up to third order polynomials in the present embodiment) and/or circular arc equations. Block 418A then computes the acceleration, slew and deceleration times in Cartesian space making use of selected acceleration and deceleration profiles (squarewave, sinusoidal wave or table of values profiles in the present embodiment).

If a prescribed path move has not been directed, block 420A detects whether a straight line move is to be executed. In a straight line move, the tip of the tool moves along a straight line in Cartesian space and thus moves across the shortest distance between its present location and the destination location. A straight line move may not be the fastest move between two points since a joint move may be faster. The nature of the user application determines whether and when straight line moves are needed.

As in the case of a prescribed path move, the distance to be traveled in Cartesian space is computed when a straight line move has been directed. Thus, block 422A computes the straight line distance with use of the indicated formula.

A joint move is employed when the user wants the tool tip to be moved from one point to another in the shortest time. However, joint moves are avoided obstacles exist in the field of possible motion. In a joint move, all of the joints are moved in coordination to produce the shortest tool tip move regardless of the path of the tool tip.

Box 424A determines whether a joint move is to be executed. If so, block 426A computes the endpoint joint angles for all axes for the joint move. Next, the joint distance is computed in joint space by taking the difference between the destination and present joint angles for each axis. The joint move for each joint is accordingly established.

Similarly, block 426A computes the joint moves in joint space for prescribed path and straight line moves. Block 428A then computes the acceleration, slew and deceleration times in joint space from the joint distances using the selected acceleration/deceleration profiles, i.e.; the time profile for each joint motion is basically determined.

Box 430A next determines what limits apply to acceleration, slew and deceleration times to modify the time profiles in accordance with limits if necessary. The slowest limit time for any particular joint is set as a limit time for all of the joints, i.e., for the move as a whole. The acceleration/deceleration (torque) and velocity capabilities of the robot being controlled are used in setting time limits.

If box 432A determines that continuous path operation has been directed by the user, box 434A computes the continuous path coefficients to be used for smooth merging of the present motion segment with the upcoming motion segment. In smoothing the transition between the slews of successive motion segments, box 434A essentially eliminates unnecessary deceleration/acceleration in changing from one velocity to another.

Once continuous path smoothing calculations have been completed or if continuous path smoothing has not been required, block 436A ends execution of the planning program.

## 2. TRAJECTORY PROGRAM

The trajectory program 412A shown in Figure 10K is executed during each system cycle to generate joint position commands for the next system cycle. Generally, the trajectory program 412A computes for each upcoming system cycle the accumulated distance to be traveled for each joint when the upcoming cycle is completed. A factor referred to as "S" is computed in the distance calculation. Thus, S is the accumulated distance (S) as a percentage of the total distance to be traveled in terms of a normalized path length (0-1).

A new set of interpolated endpoints are generated to provide position commands for the robot axes for execution during the upcoming system cycle, i.e., the total user specified segment move is subdivided into cycle moves to be executed in successive system cycles (which may in this case have a length of 32, or 16 or 8 milliseconds).

The new position commands are based on the S calculation and the type of move being performed. In implementing the position commands, the servo control provides further real time interpolation by dividing each system cycle into millisecond intervals during which moves of equal distance are executed for each joint.

As shown in the flow chart of Figure 10K, block 440A first makes the distance computation for the upcoming system cycle, i.e., S is calculated. In boxes 442A, the type of move is determined and the interpolation calculations for that type move are executed.

Specifically, block 444A determines whether a prescribed path move has been directed, and if so box 446A calculates the Cartesian X, Y, Z, O, A, and T interpolations using the S distance factor, spline fit equations (up to 3rd order polynomials) and circular arc equations. The O, A, and T (or X, Y, Z, $\underline{n}$, $\underline{o}$, and $\underline{a}$ coordinates represent the orientation of the tool tip in angles.

Generally, in making interpolation calculations for the various types of path moves, the S factor operates as a percentage multiplier in computing for each axis the fraction of the total commanded move to be completed in the upcoming system cycle.

Box 448A determines whether a continuous path move has been directed, and if so box 450A calculates the X, Y, Z, O, A, and T interpolations using the S distance factor and stored continuous path coefficients. The latter are employed in equations that are used to produce smooth transitioning between different slew values in successive path segments.

In block 452A, a determination is made as to whether a straight line move has been directed. If so, box 454A makes the interpolation calculations for X, Y, Z, O, A and T using the S distance factor and straight line equations.

If a joint move is detected in box 456A, block 458A makes interpolation calculations for all of the joint angles using the S distance factor. Box 460A converts Cartesian interpolations to joint angles for the case of a prescribed path move, a continuous path move or a straight line move. The conversion to joint angles represents the arm solution and involves knowledge of kinematics of the robot arm, specifically the lengths of the various links and the angles between axes of rotation.

Finally, block 462A converts the interpolated joint angle commands to respective encoder counts operable as a set of position commands applied to the various robot axes by the servo controller 464A. The encoder count conversion reflects the resolution of the encoders, gear ratios and any mechanical coupling between joints (usually only wrist joints are coupled).

The S calculation is shown in greater detail in the flow chart in Figure 10L. Block 441A first increments the system cycle counter. Blocks 443A then the current cycle count to the time profile computed in the planning program for the current path segment. In this manner, the segment portion (acceleration, slew, deceleration) in which the tool tip is currently located is determined. The applicable acceleration, slew or deceleration value is accordingly identified for the S computation.

If box 445A detects that the cycle count exceeds the segment time, S is set equal to 1 by block 447A. If the acceleration segment portion is detected by box 449A, block 451A uses acceleration equations to compute S. Similarly, if block 453A detects the slew segment portion, box 455A uses slew equations to compute S.

Block 457A employs deceleration equations to compute S if the acceleration, slew and segment terminated blocks 445A, 449A, and 453A are negated. The S calculation routine is then completed and trajectory program execution returns to block 444A.

The following equations are employed in making the S calculation:

## Acceleration Equations

- square wave    $s = t^2 / (t_a * (2 * t_s + t_a + t_d)$

- sinusoidal profile    $s = \dfrac{t_a * [(t/t_a) - (\sin(180 * (t_a/t)))/pi}{[t_a + 2 * t_s + t_d]}$

## Deceleration Equations

- square wave

$s = ((2 * t_s + t_a + t_d) - ((tt-t)**2/t_d))/(2 * t_s + t_a + t_d)$

- sinusoidal profile    $s = \dfrac{t + t_s + (t_d/pi) * [\sin(180 * y/t_d)]}{(t_a + 2 * t_s + t_d)}$

where:   $y = (t - tt + t_d)$

## Slew Equation

$s = (2 * t - t_a)/(2 * t_s + t_a + t_d)$

--------------------
$t_a$ = acceleration time
$t_d$ = deceleration time
$t_s$ = slew time (constant velocity)
$t$ = current time
$tt = (t_a + t_s + t_d - t)$
$pi = 3.1417$

## SYSTEM CONTROL BOARD

The system control board 500 (see Figure 5) includes electronic circuitry that provides for executing system level functions in the case where the basic robot control is to be expanded to achieve a shorter trajectory cycle time or to achieve other higher level performance. As described elsewhere in this writeup or in the referenced patent applications, such expansion is conveniently configured by simply plugging the system control board 500 into the AIF board 800. The system control board 500 accordingly is provided with VME bus interface circuitry for this purpose.

Thus, the system control board microprocessor circuitry enables execution of the system level software in accordance with the user's robot program. As described in connection with the servo control board (SCM) 400, the system level motion software includes a planning program that generates time profiles for each move commanded by the robot program and a trajectory program for interpolating system cycle moves from the program command move, i.e., for generating position commands for the robot axes each system cycle.

As generally shown in Figure 11A, the system control board 500 employs a system control microprocessor 500A and a floating point math coprocessor 502A. The microprocessor 500A preferably is a Motorola 68000 which has high data processing capability. The calculator coprocessor 502A is preferably a National Semiconductor 16081 or Motoroloa 68801 which has floating point computational capability. An interface 504A couples the microprocessor 500A and the math coprocessor 502A.

Support circuitry 506A is provided for the processor 500A. It generally includes an interrupt structure, clock and reset circuits and bus error circuitry. Interface circuitry 508A couples the system control manager 500A to the VME bus 510A.

The microprocessor 500A generally operates as a planning and trajectory manager in executing the system motion programming. Data is moved to and from program memory 512A and data memory 514A and a dual port memory 516A for interboard data transfers and to and from the VME bus as required. Program steps requiring calculations are executed in the microprocessor and predetermined calculations are exported to calculator 502A.

## SYSTEM CONTROL BOARD CIRCUITRY

The circuitry for the system control board will be described in greater detail herebelow.

The system control data manager 500A is shown in Figure 11A along with clock generator/driver circuitry 506A used to provide computer system hardware timing. The timing circuitry includes a clock 3, flip-flops and drivers.

Program memory 512A provide program storage for the system control data manager. Motion software including the planning and trajectory programs is stored in the program memory. User (robot) program memory is stored on a user memory chip on the SCM board 400 and it is accessed over the VME bus. Special large extra user memory boards are employed for large user programs.

Local RAM memory 514A is provided for the system control data manager as shown in Figure 11A. Programmed array logic (PAL) decoders are used by the microprocessor to move data into and out of memory 514A. An acknowledge PAL sends acknowledgements to the microprocessor on data transfers.

Shared memory interfaces the system control data manager with the VME bus as shown in Figure 11A, 515A and 516A. It includes memory access gating circuits and two 6264 shared RAM circuits coupled to the system data bus and the local data bus. Memory access gating circuits operate with the system address bus and the local data bus. A PAL is used to process VME bus requests. Access control PALS control the transfer of data between the system control microprocessor and the VME bus.

A software timer 8254-2 generates software timing signals including a general purpose signal STIMR and a watchdog signal WDGPUL that is applied to an on board diagnostic PAL.

Interrupt interface circuitry includes the diagnostic PAL and a PAL interrupt controller. A buffer and flip-flops are also included.

Initialization circuitry for the system control data manager includes logic elements that operate from a buffer. A shift register generates a bus error signal if the microprocessor enters a memory access loop for a memory location that does not exist.

The arm calculator coprocessor 502A is shown in Figure 11A. Circuitry 504A that interfaces it to the system control microprocessor includes three flip-flops 74LS74.

## BASIC ROBOT CONTROL - TORQUE PROCESSOR BOARD TORQUE PROCESSOR BOARD CONCEPTS

The torque processor (TP) board 600 provides a functional interface to the robot joint drive motors. Functionally, the TP board 600 implements the lowest level of control in the hierarchical control system, providing closed loop servo torque control for six robot axes. Physically, the TP board 600 electrically interfaces the robot path planning control system and the servo control (SCM) board with the arm interface (AIF) board 800, which in turn interfaces to the robot joint drive motors. The primary function of the TP board 600 is to regulate robot joint motor currents to commanded values by modulating motor winding voltages using a pulse width modulation scheme.

The TP board 600 interfaces at one level to the SCM board, accepts from the SCM board torque commands and servo parameters for six axes and returns status data. The TP board 600 interfaces at a second lower level to the AIF board 800 providing servo voltage commands for the six robot axes. The AIF board 800 receives drive motor current, position and velocity feedback for closed loop control on the SCM and TP boards.

The TP microprocessors used in the specific embodiment are the Motorola 68000 (16-bit microprocessor operating at 10.0 Mhz system clock frequency), and the TI TMS-320 Signal Processor.

The TP board 600 provides a number of features including the following:

1. Torque loop control for six axes (250 micro sec per 6 axes) for brush and brushless motors;
2. Software adjustable current offset - eliminates potentiometers;
3. Downloadable gains - arm dependent parameters can be downloaded from the SCM board;
4. PWM compensation;
5. Commutation compensation;
6. Current averaging for data logging and other purposes;
7. Current limit check;
8. Velocity monitoring (back emf) for safety check;
9. Energy check (IIT) to test stall condition;
10. Power-up self diagnostics; and
11. Downloadable diagnostics system.

## TORQUE PROCESSOR BOARD

More advanced robot performance is produced by controlling the torque applied at the arm workpoint when the arm is in motion to control the arm workpoint position in accordance with a command trajectory. Thus, axis drive forces are adjusted in accordance with actually experienced workpiece loading to satisfy position and trajectory commands with greater speed, accuracy and efficiency.

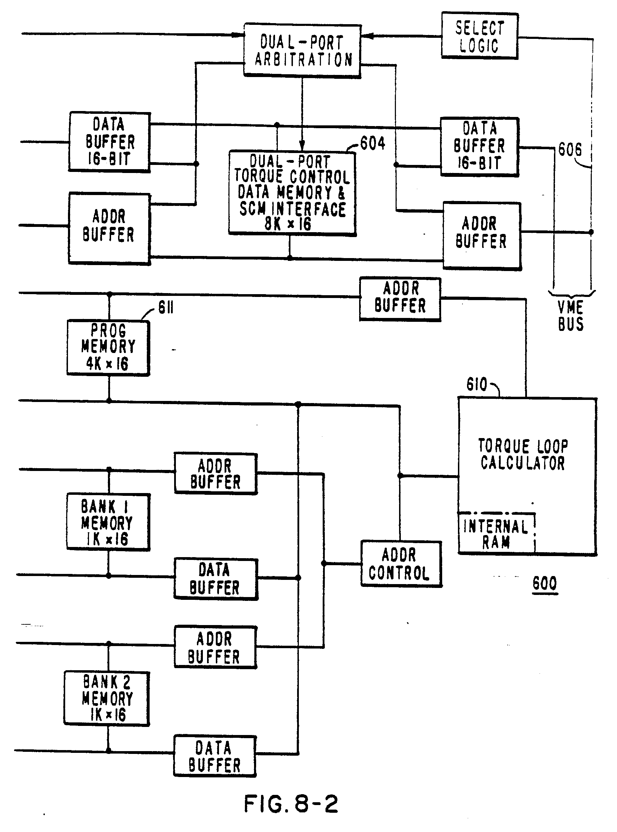

The torque control is embodied on a generic control circuit board 600 (Figures 8-1 and 8-2) called a torque processor (TP) board i.e., an electronic board usable to provide torque control for a wide variety of robots having different load capacities, different types of drives, different numbers of axes, etc.

The torque processor board 600 employs digital circuitry to generate voltage commands for each joint motor or axis drive on the basis of torque commands obtained from a higher control level (SCM board) and feedback currents obtained through the arm interface (AIF) board 800 from the axis drives. Thus, the torque control loops for all of the joint motors are closed through the TP board circuitry.

In the case of electric drives, the feedback current is the motor winding current which is proportional to actual motor torque. For hydraulic drives, the feedback signal is also proportional to actual motor torque.

The digital torque control circuitry is preferably structured with multiple digital processors so that needed control computation and control support functions can be achieved for all axes accurately and efficiently within sampling frequency requirements.

In particular, a torque control manager 602 interfaces with a dual port SCM interface memory 604 for the exchange of stored torque control data between the SCM (servo control module) and the TP (torque processor) control levels. Axis torque commands and control loop parameters are downloaded from the SCM to the TP interface memory 604 through a data bus 606 preferably of the VME type. In return, status data is uploaded to the servo control level (SCM). The memory interface 604 between the TP and SCM boards is a dual port shared memory scheme which serves as a slave to the VME bus 606. Other board memories include a ping-pong memory 608, program EPROM 614, local RAM 616, and TP calculator memory 611.

The torque control manager 602 also directs the flow of current feedback from circuitry on the AIF board 800 at the next lower control level to the torque processor board 600 for torque control loop operation. Drive voltage commands resulting from torque control calculations are directed to the arm interface (AIF) board 800 by the torque control manager 602. The ping-pong (bank switched) memory 608 operates under the control of handshake flags to store command, feedback, and status data so that it is available when needed for torque control calculations or for higher control level reporting requirements or for axis drive control.

A coprocessor 610 provided in the form of a digital signal processor operates as a torque loop calculator which receives torque commands and feedback currents from the torque control manager 602 through the ping-pong memory 608, calculates drive voltage commands for the various robot axes from the torque errors computed from the torque commands and feedback currents, and transfers the drive voltage commands through the ping-pong memory 608 to the arm interface circuitry on command from the torque control manager 602.

With the described digital circuit structure, all needed torque control functions are able to be performed rapidly (250 microsecond sampling rate or better) and accurately within frequency response requirements. Specifically, the rapid calculating capability of the digital signal processor 610 is employed for the torque control calculations as the data organizing and directing capability of the torque control manager 602 is employed for most other functions thereby enabling highly improved control performance to be achieved efficiently and economically.

The torque control manager 602 can, for example, be a Motorola 68000 which has an architecture well suited for the tasks described for data management but which has a calculating speed (i.e., over 4 microseconds for a $16 \times 16$ bit multiplication) too limited to meet torque control bandwidth requirements. The torque calculator 610 can for example be a Texas Instruments TMS 320 digital signal processor which has an architecture set for Z transform calculations (i.e., a calculating speed of 200 nanoseconds for a $16 \times 16$ bit multiplication) but which is otherwise generally unsuitable for the kinds of tasks assigned to the torque control manager 602.

## TORQUE CALCULATOR BANK-SWITCHED INTERFACE

The external interface capability of the TMS 320 reflects the fact that the device was primarily intended to be used in stand alone applications. The TMS 320 is very efficient at performing computational operations; however operation cannot be suspended to allow access to its peripheral circuitry by other devices. As such, usage of the device in a coprocessor application requires specialized interface circuitry. This interface circuitry provides the capability for the 68000 to load the program memory of the TMS 320, and provides a facility for interchange of information between the TMS 320 and the 68000. Access to the TMS 320 program memory by the 68000 requires the TMS 320 be in the reset condition, that is the TMS 320 reset input must be asserted. The state of the TMS 320 reset signal, FRESb is directly controllable as a latched output from the 68000.

The primary interface for interchange of information between the TMS 320 and the 68000 is provided by implementation of a concept referred to as bank switched memory. The bank switched memory consists of two identical, physically separate, 1K by 16-bit RAM arrays (see Fig. 8-2). These arrays are referred to as banks. Both banks are resident within the same address space. At any given point in time, ownership of one of the memory banks is associated with the 68000, i.e. 602, and ownership of the other bank is associated with the TMS 320, i.e. 610. Since the memory appears as a single 1K by 16-bit RAM, access to the memory by either processor is totally transparent to operations by the other processor. This provides for simultaneous access to the interface memory by both processors. Control and handshake signals are associated with switching of the bank ownership.

There are four states associated with the 68000 to TMS 320 interface. These states are referred to as idle, go, processing and done. Assertion of the TMS 320 reset signal forces the interface to be in the idle state. The interface will remain in the idle state until the go state is requested by the 68000. It is to be noted that bank switching can only be effected while the interface is in the idle state. A request for bank switching, at any other time will not be performed until the idle state is reached.

In operation, the 68000 will write information consisting of commands and data in the bank memory, request a bank switch, and set the go state. Switching of the banks makes this information available to the TMS 320. The TMS 320 detects the go state, sets the processing state, and operates on the data, writing the results back into the bank memory. Concurrently, the 68000 can write the bank memory with the next set of commands and data transparent to the TMS 320 operation. The TMS 320 will set the done state upon completion of the required processing. The 68000 detects the done state, forces the idle state, and switches the banks to obtain access to the results of the TMS 320 calculations.

The bank switched memory appears as I/O locations to the TMS 320. Circuitry external to the TMS 320 is required for efficient usage of this memory by the TMS 320 because of the limited I/O ports provided by the TMS 320. Four TMS 320 I/O ports are associated with the bank switched memory and handshake flags. Access to the memory by the TMS 320 is provided by a binary up/down counter. The counter is operated in a post-decrement or post-increment mode. Execution of an output to port 0 will result in the counter being loaded with the data value being output. This will then serve as the bank memory address for the next bank memory. Operations 1 will result in either reading or writing of the bank memory with a post-increment of the memory address. Operations on part 2 will result in either reading or writing of the bank memory with a post-decrement of the memory address. Thus, the memory address counter need only be preset an address at the beginning of a series of read or write operations. Successive I/O operations on port 1 or 2 will result in access to successive memory locations.

The TMS 320 BIOb pin and I/O port 3 are associated with the handshake interface with the 68000. The 68000 request the GO state by outputting a XXX1 to address 7EA07. This forces the TMS 320 BIOb signal pin the logical "1". The TMS 320 acknowledges by setting the PROCESSING state. The PROCESSING state is set by the TMS outputting a data value of XXX1 to I/O port 3. After completion of the required processing the TMS 320 sets the DONE sate by outputting a XXX2 to I/O port 3. The 68000 then forces the IDLE state by outputting a XXX0 to address 7EA07. Indica tion of the IDLE state is reflected by the BIOb signal pin being at a logical "0".

The TMS 320 program memory 611, 4K by 16-bits, is implemented with static high speed, access time of 70 nanoseconds or less, RAM. Contents of this memory must be downloaded by the 68000 before the TMS can be allowed to begin program execution. Access to the TMS 320 program memory by the 68000 is only allowed when the TMS 320 is being held reset. The 68000 can force the TMS 320 to be reset by writing a 0 to location 7EA01 will release the reset to the TMS 320.

Assertion of the FRESb signal to the TMS 320 will force the TMS 320 to be reset. During reset, the TMS 320 will force its data and control lines to the tri-state condition. However, the address lines are not tri-stated. Therefore, address buffers, devices U41 and U312 are required to permit access to the program memory by the 68000. The TMS 320 provides three signals for external indication of the operation being performed. These signals are FMEMb, which is asserted for indication of a program memory read operation; FDENb, which is asserted for indication of an I/O read operation; and FWEb, which is asserted for indication of either a program memory of I/O write operation. It is to be noted that circuitry external to the TMS 320 on the torque processor module does not support the table write instruction implementation. As such, the TMS 320 cannot write into its program memory. The memory devices used for implementation of the TMS 320 program memory include two input control signals, write enable, WEb, and chip select, CSb. A memory read operation is performed by assertion of the CEb signal with the WEb signal non-asserted. A memory write operation is performed by assertion of both control signals. It is to be noted these devices do not provide an output enable signal. Therefore, assertion of CSb and WEb during memory write operations must be essentially coincident in order to prevent data bus contention between the memory devices and the data bus drivers.

The circuitry 608 shown in Figures 8-1 and 8-2 provides control signal interface to the TMS 320 program memory. This circuitry multiplexes the memory control signals between either the 68000 or the TMS 320, depending on the state of the TMS 320 reset signal, FRESb. Byte operations from the 68000 are supported. The signal ENTPAb is asserted provided the 68000 is attempting to access the TMS 320 program memory and the TMS 320 is reset. This signal being asserted allows the 68000 write high, WTHIGHb, and write low, WTLOWb, signals to be gated to the write enable inputs of the respective bytes of TMS 320 program memory. Assertion of ENTPAb also allows the 68000 data strobe signals, LPUDSb and LPLDSb to be gated to the chip enable inputs of the respective bytes of TMS 320 program memory.

The TMS 320 provides for implementation of 8 I/O ports. The torque processor module implementation utilizes 4 of these I/O ports for operations related to the bank memory. No attempt is made to fully decode the I/O port addresses. As such, the 4 unused ports overlap the 4 used ports. That is, for example, TMS 320 operations on port 0 or port 4 will result in the same function being performed.

The bank memory and associated bank switch logic is shown in Figures 8-1 and 8-2. Address buffers provide for bank memory address signal line multiplexing. Inputs to the 68000 address multiplexer consist of the 68000 address signal lines and inputs to the TMS 320 multiplexer consist of the outputs of the bank memory address counter shown in Figure 8-2. Data buffers provide for bank memory data signal line multiplexing. Word and byte operations for 68000 related access to the bank memory are supported. Generation of multiplexer enable control signals is provided by a bank switch control PAL. The TMS 320 related multiplexer enable signal, TB1ENb, is asserted whenever the TMS 320 has ownership of the bank. The 68000 related multiplexer enable signal, LPB1ENb is only asserted when the 68000 has ownership of the bank and access to this memory by the 68000 is being attempted.

Bank memory bank switch control logic comprises the bank switch control PAL, and the bank memory control signal multiplexers. The bank switch logic supports two possible sources for determining bank switching. These two sources are referred to as hard tick and soft tick. The hard tick signal is derived from hardware on a fixed time basis. In the case of the torque processor module, this signal is derived by dividing the PWM ramp frequency by two. The soft tick, STICK, is derived from software. The signal TSEL is used to select between the hard and soft tick for determination of bank selection. TSEL is output controllable by the 68000. This signal being in the logical "0" state selects the STICK signal for bank switch selection. STICK being in the logical "0" state selects bank 1, circuitry shown on page 5 of the schematics, for ownership by the 68000. The state of TSEL is determined by the state of data bit 0 when a write operation is performed to location 7EA05, and the state of STICK is determined by the state of data bit 0 when a write operation is performed to location 7EA05. The presently intended applications of the torque processor module use the STICK signal for bank memory selection. The other inputs to the bank switch control PAL consist of the 68000 bank memory select signal, TBSELb, and the interface handshake flags, TSF1 and TSF2. TSF1 and TSF2 are used by the bank switch control to effect bank switching only when the interface is in the IDLE state.

The interface 608 also consists of 68000 data and address signal line multiplexer enable signals, LPB1ENb and LPB2ENb; TMS 320 data and address signal multiplexer enable signals, TM1ENb and TM2ENb; and the bank memory control signal multiplexer enable signal lines. The signals TB1ENb and TB2ENb are also used to select the source for the bank memory control signals. Switching of the control lines for the bank memory during the bank switch operation requires a special sequence during the switching operation. This sequence requires that both signal lines TB1ENb and TB2ENb be asserted, so that the TMS 320 related control signals are multiplexed to the bank memory control signals. Then the bank memory control signal multiplexer enable signals are non-asserted, forcing the outputs to the tri-state condition. Then either TB1ENb or TB2ENb, according to corresponding new ownership of the bank memory by the 68000 as determined by the state of the selected tick signal, is non-asserted. This is then followed by assertion of the appropriate control signal multiplexer signal. The TMS 320 data and address multiplexer enable signal and memory control signal remain then asserted until the next bank switch operation. The 68000 related data, address and memory control multiplexer enable signals only become asserted when the 68000 is requisition access to the bank memory.

Another circuit (see Fig. 8-1) is used to generate the TMS 320 bank memory switch control signals. One signal line of this circuit will be asserted whenever a TMS 320 bank memory read or write operation is performed and other signal line will be asserted whenever a TMS 320 bank memory write operation is performed. These signal lines are then multiplexed to the appropriate bank memory chip select and write enable signals.

The bank memory address counter (Fig. 8-2) is reset by the assertion of the FRESb signal. TMS 320 output on part 0 or 4 forces WTCNTb to be asserted which forces the counter to be parallel loaded with the data value being output. Input or output on ports 1 or 5 will result in reading or writing of data to or from the appropriate bank memory.

Device 630 provides for state storage of the interface handshake flags. In the idle state both halves of 630 are reset. The 68000 request the go state by writing a 1 to address 7EA07. This forces the signal LPGR to transition to the logical "1" state, which clocks TSF1 to a logical "1". LPGR being in the logical "1" state also forces the reset signal to TSF2 to be non-asserted. Device 630 provides for synchronization of the FBIO signal with the TMS 320 clock. The TMS 320 sets the PROCESSING state by outputting a data value of XXX1 to port 3 or 7. This results in setting TSF2 to a logical "1". The TMS 320 sets the DONE state by outputting a data value of XXX2 to port 3 or 7. This forces TSF2 to the logical "0" state. The 68000 forces the IDLE state by writing a 0 to address 7EA07, which forces LPGR to the logical "0" state, resetting TSF1.

## TORQUE CONTROL PROGRAMMING

The torque processor board 600 is operated under the control of programs executed in the on board processors 602 and 610 to implement torque command signals from the higher SCM control level.

The torque processor software generally performs the following tasks which are partitioned as indicated:

### Torque Control Manager 602

Communication with SCM
Command handling
Current sampling, conversion and offset adjustment
Commutation switch flag (state reading)
Ping-pong memory management
PWM chip management
Diagnostics
Error reporting

### Torque Loop Calculator 610 (program cycling based on 250 microsecond interrupt)

Overcurrent check - absolute and average
Torque loop calculations
Current averaging
PWM compensation
Commutation compensation
Back emf check - monitors velocity for safety
Energy check - tests for stall conditions

### TP MANAGER

More particularly, the torque control manager 602, as its name implies, directs most of the torque processor board operations. The torque loop calculator 610 affects board operations in the sense that calculated outputs enable certain board operations to occur under the direction of the torque control supervisor 602.

The programming for the torque control manager 602 includes various system housekeeping programs which support the operation of application programs involved in embodying the invention. The application programming is stored in an EPROM memory 614 (Fig. 8-1) referred to as the TCM (torque control management) program memory. Operating data is stored in a local RAM memory 616 referred to as a TC (torque control) data base memory.

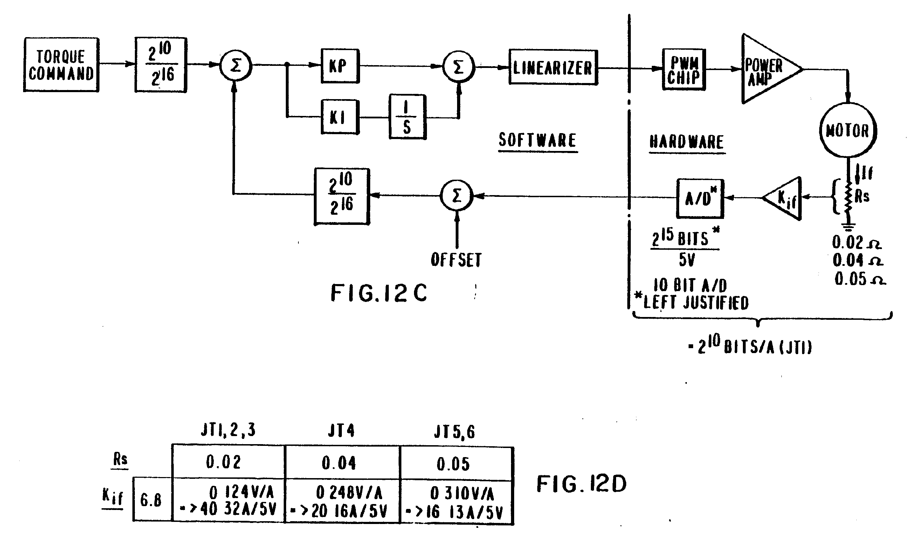

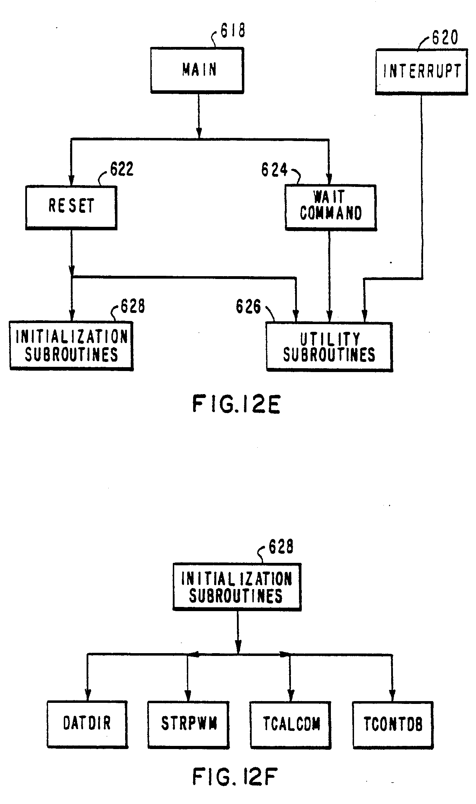

The torque control management programs include a main program 618 (Figure 12E) and an interrupt program 620. Generally, the main program 618 includes a reset subprogram 622 which provides the initialization service needed at the arm interface and torque processor control levels for startup of TP board operation. The reset subprogram 622 additionally signals the higher SCM control level when the TP board 600 is ready for operating commands.

Thereafter, a wait command subprogram 624 administers the execution of diagnostic and other high priority nonmotion commands from the higher SCM control level. During motion control, torque commands are periodically generated, preferably each millisecond, and transferred under the control of the torque manager interrupt program 620 through the ping-pong memory 608 to the torque loop calculator 610. The interrupt program 620 is operated cyclically by interrupt signals generated at the sampling rate (preferably every 250 microseconds) by an interrupt clock located in the lower level AIF board 800. The interrupt clock also provides the timing control for generation of the SCM torque commands every millisecond.

The interrupt program 620 in turn performs various administrative functions needed to support the operation of the torque loop calculator 610 as it performs torque calculations for each of the six axes of the robot arm during each interrupt cycle. Voltage commands resulting from torque loop calculations are routed from the ping-pong memory 608 for storage in the TC data base memory 616 and then through a data bus 607, preferably the VMX type, to the AIF board circuitry for conversion to pulse width modulated signals by the axis drives. Current and status feedback data is also transferred from the VMX bus 607 for storage in the TC data base memory 616 and subsequent routing through the ping-pong memory 608 for use in the torque calculator 610.

The bus 607 operates in the specific embodiment in accordance with VMX specifications for timing and signal pin number association. However, full VMX bus specifications associated with arbitration, multiple bus

32

masters, and 24-bit address capability are not supported. Further, certain signals not specified in the VMX bus specifications are employed for control, interrupt, and error condition status information.

Various subroutines 626 are employed by the reset and wait command subprograms 622 and 624 and the interrupt program 620. The reset subprogram 622 also employs initialization subroutines 628.

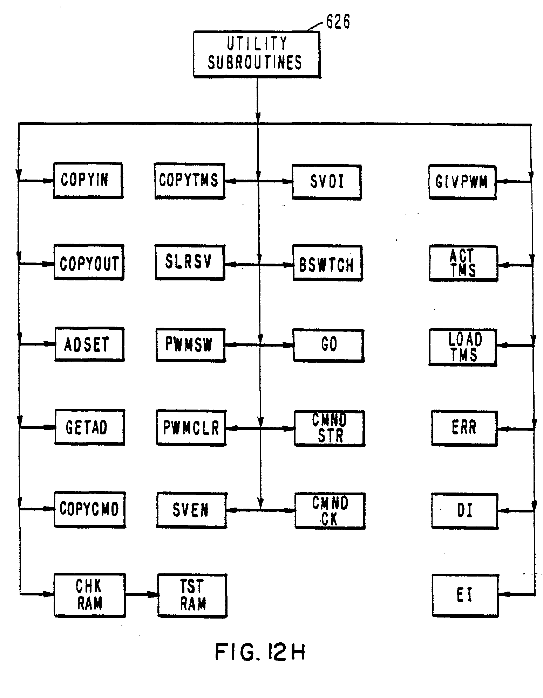

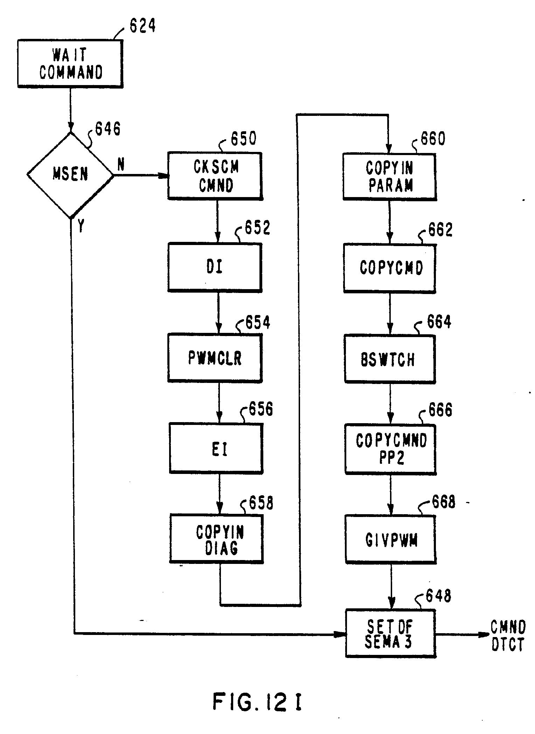

As shown in Figure 12H, the utility subroutines include the following with the functions indicated:

CHECKRAM - preselected memory diagnostics - check all RAM memories on board 600.

RAMTEST - apply bit tests to selected memory locations.

GETAD - enable transfer of analog input to memory.

AD-SET - set analog/digital converters in feedback channels.

COPYIN - copy specified parameters for 6 arm joints from torque control data SCM interface memory 604 to TC data base memory 616.

COPYOUT - copy specified parameters for 6 arm joints from TC data base memory 616 to torque control data SCM interface memory 604.

COPYTMS/S-COPYTMS - copy to/from TC data base memory 616 and ping-pong memory 608.

COPYCMD - copy command from TC data base memory 616 to ping-pong memory 608.

CLRSERVO - clear on-line torque loop calculation data in TC data base memory 616 and ping-pong memory 608.

PWMSW - on/off switch for PWM chip which is located in the arm interface control level and normally generates power amplifier commands for the arm drives.

PWMCLEAR - zero output command to PWM chip.

SVENABLE - specify maximum voltage command acceptable for execution.

SVDISABLE - hold PWM at zero output.

LOADTMS - download program to RAM memory 611 for the torque loop calculator 610.

ACTTMS - activate/deactivate torque loop calculator 610.

GIVPWM - apply voltage command to PWM chip.

COMMCHECK - receive position feedback data for all 6 drives and set respective flags if different from the next previous data.

COMMSTORE - store commutation state for all 6 joint motors.

GO - send GO signal to control register 630 (Figure 8A) for torque loop calculator 610.

BSWITCH - switch command for ping-pong memory 608.

ERR - report error to higher SCM control level.

DI - disable execution of interrupt program 620.

EI - enable execution of interrupt program 620 - schematic - interface buffers etc.; timing chart; TMS control algorithms; TMS flowchart; commutation switch function; incorporate Daggett TP write-up and related drawings; interface circuitry for SCM interface memory 604 - general - details in Daggett write-up.

The initialization subroutines 628 employed in the reset subprogram are shown in Figure 12F and include the following:

DATDIR - create in the TC data base memory 616 a data directory for the SCM interface memory 604.

STRPWM - store PWM I/O address in TC data base memory 616.

TCALCDB - clear and initialize the torque loop calculator data base in the internal RAM memory of the torque loop calculator 610.

TCONTDB - clear data base parameters in the TC data base memory 616.


## PROGRAM FLOW CHARTS FOR TP BOARD MICROPROCESSORS

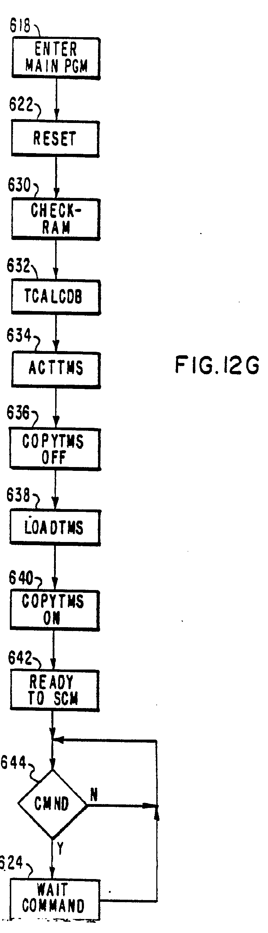

The main program 618 is illustrated in greater detail in Figure 12G. Once the torque processor board 600 is started, the torque control manager 602 enters the main program 618 and executes the reset subprogram 622 to provide initialization service. As a result, the identification code for the torque control manager 602 is written onto the VME data bus 607 for communication to the higher control levels that may be packaged together in any particular robot application.

In addition, all semaphores are set to the same invalid state and the torque loop calculator 610 is cleared and reset. The local input/output hardware latch 607 operates as a selector for hardware or software control for the torque loop calculator 610 and a flag is set to enable control from the torque control manager 602 when the software control flag is set.

In its final phase of execution, the reset subprogram 622 calls the utility subroutine PWMEN and a signal is thus generated for the next lower control level (arm interface level) to clear the arm drive circuitry and specifically to switch a controlling digital device referred to as the PWM chip to the OFF state.

The main program 618 continues the start-up procedure by calling the utility subroutine CHECKRAM in block 630 to provide memory diagnostics on all RAM memories on the TP card 600. Next, the initialization subroutine TCALCDB is called as indicted at 632 to clear/initialize the torque loop calculator data base in the TC data base memory 616.

The torque loop calculator 610 is then activated to the ON state by the subroutine ACTTMS as shown at 634. Next, the utility subroutine COPYTMS is called in block 636 to disable data copy to and from the TC data base memory 616 and the ping-pong memory 608. The utility subroutine LOADTMS is then called to download the TMS programming to the memory 611 as indicated at 638.

In block 640, the utility subroutine COPYTMS is again executed to enable copy to and from the TC data base memory 616 and the ping-pong memory 608. A signal is then generated by block 644 for the next higher SCM control level that the TP board 600 is now ready for robot control operation.

During subsequent active robot control operation, the main program 618 enters a wait command mode in which it undergoes continuous looping operating awaiting special high priority commands that may be generated by the higher SCM control level. Thus, block 644 determines whether a special command has been sent down to the TP board 600. Looping continues on the block 644 until a command is detected at which time the wait command subprogram 624 is called. After its execution, the command detection loop is re-entered until the next SCM command is received. In the block 644, SCM command detection is performed by looking at semaphore 3 to determine whether a flag has been set to signify that the higher SCM control level has downloaded a special command to the TP board 600.

As shown in Figure 12I, the wait command subprogram 624 first determines whether the system is ready for controlled robot arm motion, i.e., whether the higher SCM control level has just generated a master servo enable signal as indicated in block 646. In the master servo enabled mode, the SCM control generates a series of torque command signals for execution by the TP board 600. Preferably, the torque commands are generated once each millisecond as clocked from the AIF control level.

If a master servo enable signal has been generated to provide priority motion control, block 648 sets the semaphore 3 flag down acknowledging to the higher SCM control level that the command has been received and that a response has been taken. The wait command subprogram then returns to the SCM command detection loop as robot arm motion control is implemented.

On the other hand, if the master servo is disabled, block 650 first checks an SCM command setup bit and block 652 next disables interrupt program execution since a command having higher priority than motion commands must be ascertained and implemented. Block 654 then calls the subroutine PWMCLEAR to set the output voltage command to zero. Next, the interrupt program is enabled to resume arm motion control on an interrupt control basis.

In blocks 658 and 660, a determination is made whether a diagnostic command or a parameter change command has been downloaded, and the SCM command is copied by the subroutine COPYIN in the TP data base memory 616 for execution. Block 662 executes the utility subroutine COPYCMD to transfer the command to bank 1 of the ping-pong memory 608. Thereafter, BSWITCH is executed by block 664 to enable block 666 to transfer the SCM command to bank 2 of the ping-pong memory 608. In turn, the torque loop calculator 610 then executes the SCM command, and block 668 generates a signal for the SCM control level that the downloaded SCM command has been executed. The block 648 then sets the semaphore 3 down flag and program execution continues as previously described.

The interrupt program 670 is shown in greater flow chart detail in Figures 12B-1 through 12B-4. It is initiated as indicated at block 670 once the interrupt clock signal from the AIF board 800 is enabled in the wait command subprogram 624. Thereafter, it is executed at the control loop sampling rate, i.e., the interrupt rate of once every 250 microseconds.

Block 672 disables the interrupt and block 673 determines whether the master servo is enabled to permit robot control. If it is, the SV-ENABLE, ADSET, COMMCHECK and COMMSTORE utilities are executed in blocks 674-677.

If the master servo is not enabled, i.e., robot control is not permitted, PWMSW subroutine is executed in block 678 to disable PWM motor control chips on the AIF board 800 and the utilities PWMCLR and CLRSV are executed in blocks 679 and 680.

Thereafter, an end interrupt branch 681 is entered and block 682 checks for shutdown errors block and 683 executes robot shutdown if a shutdown error exists. If block 684 detects that the interrupt clock tick (generated every 250 microseconds) has reached a 3 count in the current millisecond common cycle time, block 685 resets the counter to 0 and the program ends. If not, block 686 increments the counter, block 687 stores the motor commutation states and the program ends.

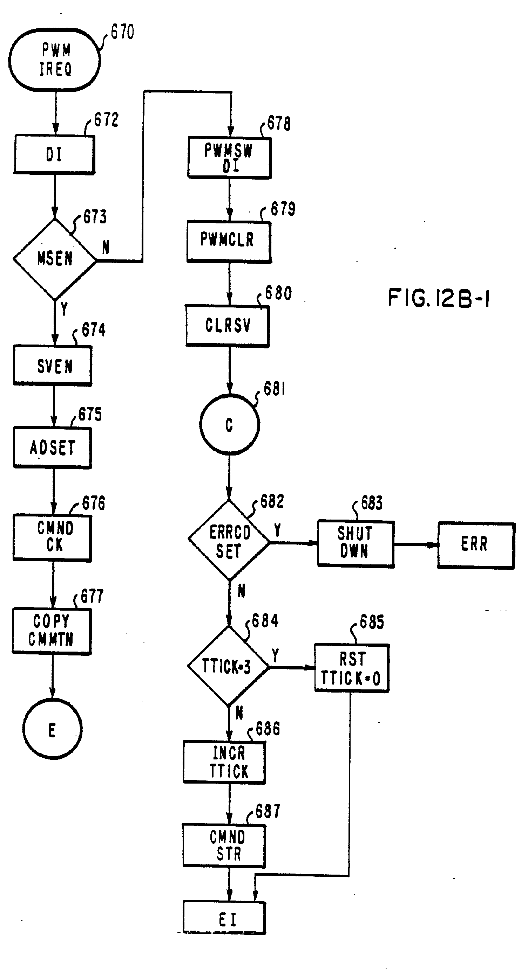

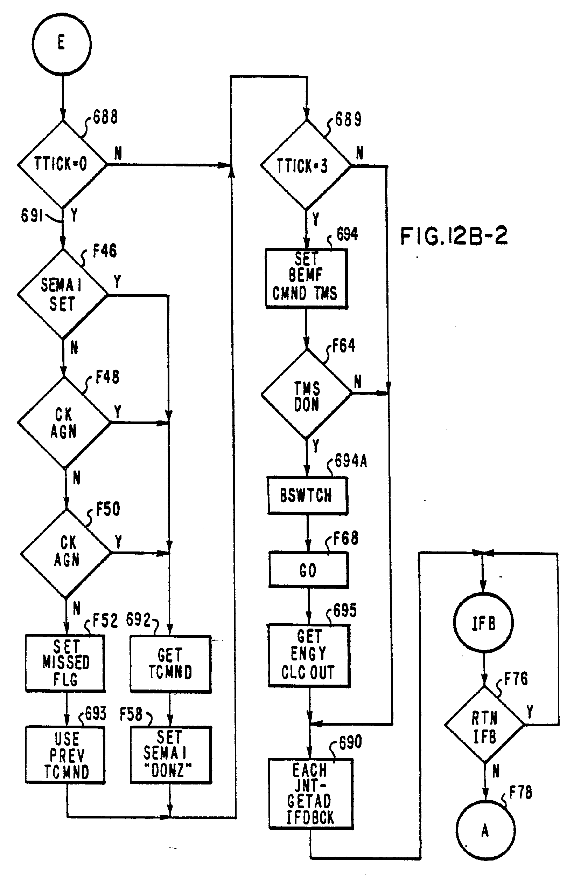

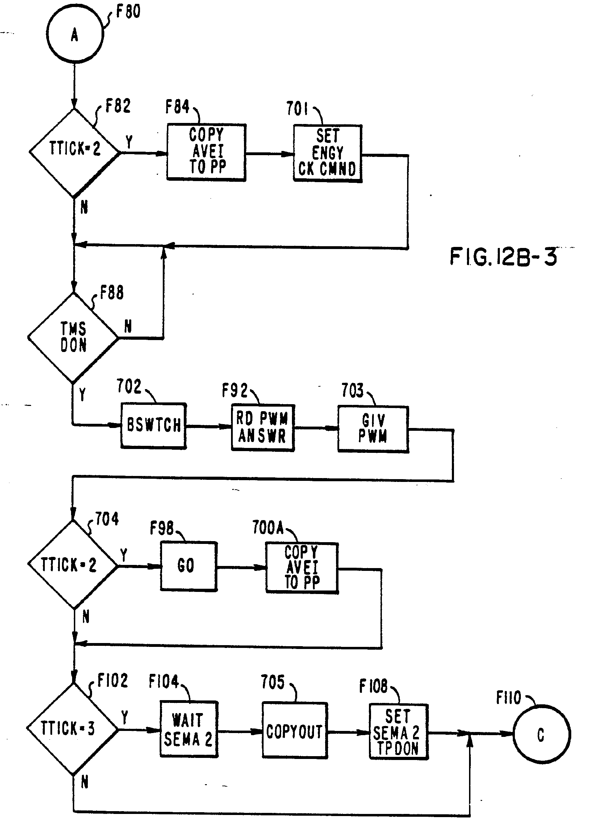

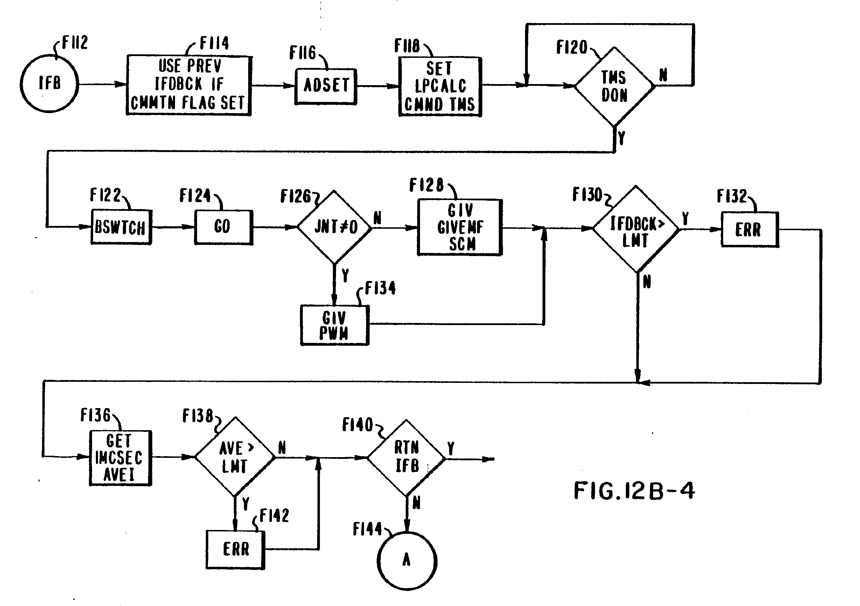

With reference again to the case of an enabled master servo shown in Fig. 12B-2, blocks 688 and 689 check for a tick count of 0 and 3. If neither exists, block 690 next gets the current feedback for each robot axis. If the tick count is zero, branch 691 gets the new torque command (box 692) or, if missed, uses the previous torque command (box 692). At the tick count of 3, back emf command is set to TMS (box 694) and energy calculation output is obtained (box 695) and the ping-pong memory switch is set (box 694A).

The routine for fetching current feedback and performing other functions to be performed after each tick is designated as IFB, and it is looped as shown in Fig. 12B-4 until the six axes have been completed. As shown, the ping-pong memory switch BSWTCH is set in block F122, PWM voltage commands are outputted by box F134 and BACKEMF is outputted by box F128. Limit checks are also made at F130 and F138.

On return to main program branch "A" at decision block F76, box F84 as shown in Figs. 12B-3 copies average current to the ping-pong memory and box 701 sets the energy check command if the tick count is 2 (see F82). Box 702 sets the ping-pong memory switch BSWTCH and box 703 outputs PWM voltage commands.

Block 704 again checks the tick counter and if the count had not been but is now 2, block 700A copies average current to the ping-pong memory. Thereafter, flags are set and certain data is copied out if the tick count is 3 in block 705. Finally, the end interrupt branch "C" at block 681 is entered to close out the execution of the interrupt program 620.

## TP CALCULATOR

Programming for the TP calculator 610 is executed by a MAIN program cyclically at the sampling rate, to provide calculator (TMS) reset, and calculator (TMS) RAM check, clear and initialization and thereafter, waits for a torque command from the torque manager 602.

When availability of a torque command is indicated, the torque loop control algorithm is executed for all six joint motors. Then, energy calculations are made and back emfs are calculated prior to ending the program execution.

## CONTROL ALGORITHMS

In Figure 2, there is shown a robot control loop arrangement for the specific embodiment. A more detailed diagram of the torque control loop portion of the overall robot control is shown in Figures 3 and 12C-D. The following control algorithms are executed in the torque calculator 604 in the implementation of the torque control loop portion of the overall robot control loop arrangement.

### PI Control Algorithm

This algorithm is described in terms of a 250 micro second sample period.

1) Input: torque command  $T_c$   from SCM (1 ms. update rate)
feedback torque  $T$    from A/D converter
(250 micro sec. update rate)
$T_c$, $T$ are scaled as follows: 10 significant bits stored in 16-bit quantity left justified with a sign bits. This format is selected to simplify the A/D interfacing.

SDDD DDDD DDXX XXXX

Output:
PWM command  $PWM_{out}$   to PWM command register
(250 micro sec. update rate)

2) Principle:

$$PWMin = Kp \frac{(s + 1/tau)}{s} *Terr$$

Terr = Tc - T

Kp : torque loop proportional gain
tau : time constant of integral (mechanical time constant of motor)

3) Algorithm      /* get error */
T(n) = (input data from A/D)
      /* normalize the size */
Terr = (Tc(n)*2**10 - T(n)*2**10)/2**16
      /* compute next integral */
temp(n) = integ + KI * Terr
      /* check the integration limit */
if (temp <= - intlmt) then temp = -intlmt
if (intlmt <= temp) then temp = intlmt
      /* store the integral value for next time */
integ = temp
      /* get PI result */
temp = integ/2**16 + KP * Terr
      /* check the overflow */
if (temp > 78FF) then temp = 78FF
if (temp > 8680) then temp = 8680
      /* now linearize the PWM* */
if (temp >= 200) then PWMout = temp + 700
if (200>temp >=0) then PWMout = temp *2 + 500
if (0>temp >= FDC0) then PWMout = temp *2 + FB80
if (FDC0 > temp) then PWMout = temp + F980

KI = (KP/tau)*Ts
Ts = sample period = 250 micro sec.

4) Scaling of KP and KI

```
     i)   dimensions      kp : [V/N-M]
                          tau,TS : [sec]

  Torque        Current       Terr*2**6      PWMout       Motor Volt
   N-M            A             bits          bits           Volt
  >------Kt----------Kad---------KP*2**-16-----Kpwm--------->

     <===========================Kp=========================>


     Kt      torque - current gain   [A/N-M]
     Kad     A/D converter gain      [bit/A]
     Kpwm    PWM gain                [V/bit]
```

ii) equation

```
MOTR = 2**13 * Imax/Vmax * R(ohm)
MOTL = 2**13 * Imax/Vmax * 1/delt * L(H)
SV   = 2**-8 * Vmax
```

where Krpm = (SV/KE) * VEL

ii) example

```
Vmax = 300V, Imax = 20A, R = 0.49 ohm, L = 5.5 mh
KE   = 120V/Krpm, delt = 4 msec
MOTR = 268, MOTL - 751
Krpm = 9.76 * 10**-3 * VEL
```

```
  Vin           PWMout         VEL           VELemf
   V             bits          bits           bits
  -----Kpwm----------2**-9---+--------2**-16*SV-----1/KE---
                            |
                            |
  Iin                       |
   A                        |            Kpwm = Vmax/2**15
  -----Kad--2***2-6)--MOTR- |            Kad  = 2**15/Imax
              --MOTL- |
```

Energy Check Algorithm

The energy check calculates motor energy and alarms the SCF when energy exceeds a specified limit for a specified period of time.

1) Input:   current        CUR1 1 msec averaged current
energy limit    ELIMIT from SCM Board (constant)
time constant   TAU from SCM Board (constant)

Output:   alarm        ECODE to SCM Board

2) Principle:

```
            i*i              Energy
i------x---------1/(1+as)---------Threshold--------Alarm
    |   |            1st order filter
    |---|


            i = current [A]
```

3) Algorithm:   temp  = CUR1**2 - ENERGY
ZOENGY = ZOENGY + temp
ENERGY = ZOENGY / 2**16 * TAU
if |ENERGY| > ELIMIT
    then ECODE = OVENGY

4) Scaling:

i) condition of alarm output    if step input of i**2 = k*limit is applied, then output an alarm condition tx seconds after step is applied.

ii) equation   a   = delt * 2**16/TAU
    TAU = delt * 2**16/a
        = about 20 to 40 for delt = 4 msec

## TP CYCLING OPERATION

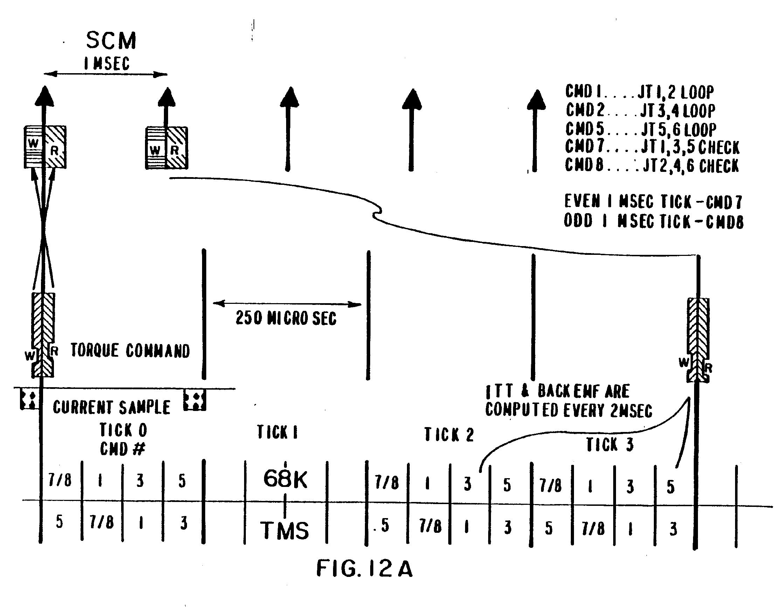

The cyclic operation of the TP circuitry is shown in Figure 12A to clarify the manner in which the various control events are interrelated. As shown by the upper scale, the SCM board 400 operates on a 1 millisecond cycle. The TP board 600 operates on a 1/4 millisecond sampling cycle as shown by the lower scale. The four TP board sampling intervals are marked by ticks 0 through 3.

The latest torque commands are received by the torque manager 600 in the order shown in each sampling interval for the six joints on the 68K scale. With a 62.5 microsecond delay, the torque commands are transferred to the TP calculator in the same order. Current feedbacks are received at the beginning of each sampling interval for all joints and transferred to the TP calculator.

## BASE AIF BOARD - ROBOT ARM DEPENDENT CIRCUITRY

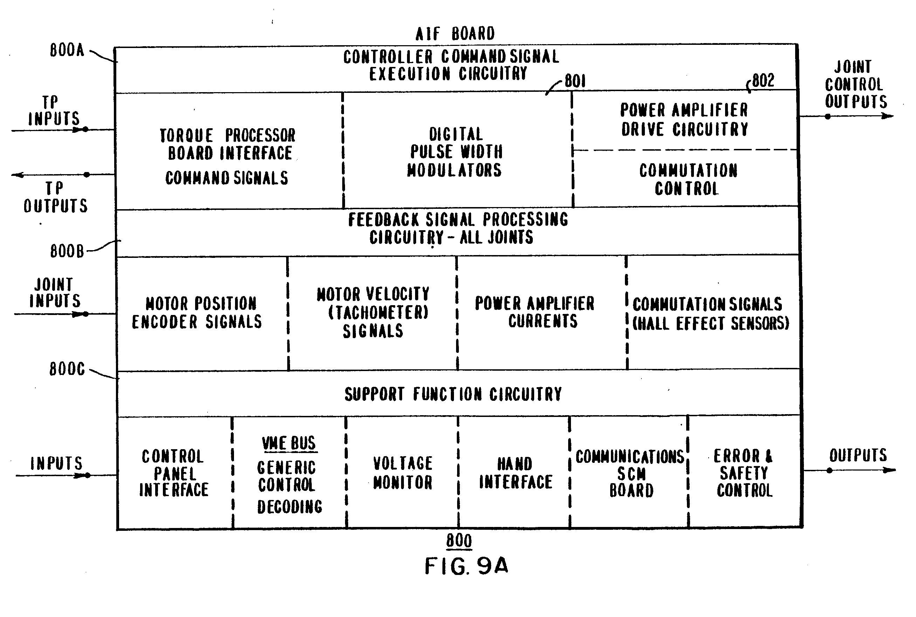

Referring to Figure 9A, the AIF board 800 or 800A functions as a base unit in the assembly of electronic boards in a robot control package arranged in accordance with the invention. With the use of a few like AIF boards having some differences, a wide variety of robot controls can be produced. With the use of each particular AIF board, different robot controls can be provided with differing levels of control performance by the choice of electronic boards interconnected with the AIF board. In all cases, the robot control has capability for varied communication and coordinated control interfacing with other robots and machines and higher level supervisory computers.

The control system architecture is arranged so that electronic boards at levels above the AIF board house only (and preferably most or all) control software and circuitry that is substantially independent of the robot arm being controlled. Further, the higher level boards contain essentially no arm dependent circuitry.

On the other hand, the AIF board houses substantially all of the robot arm dependent circuitry and software and as desired or appropriate additional software/circuitry that may be independent of the robot arm being controlled. The particular arm dependent circuitry disposed on the AIF board is determined in accordance with the robot or family of robots to be controlled.

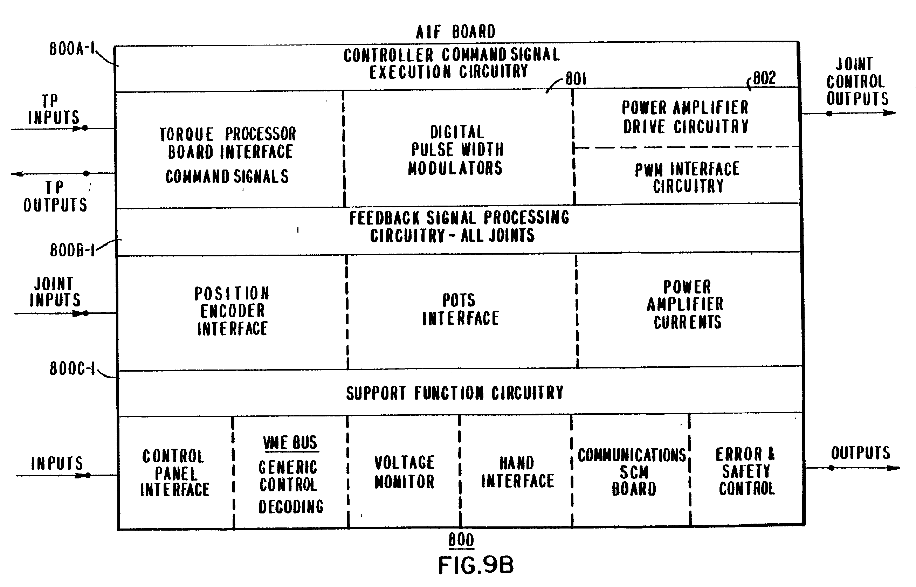

In the present embodiment, two different AIF boards have perhaps 70% common circuitry with the other 30% being different. The AIF board 800 (Figure 9A) is provided with brushless DC motor control circuitry and absolute position and tachometer feedback circuitry to adapt it for controlling the Unimation 860 robot. Brush type DC motor control circuitry and incremental position feedback circuitry adapt a similar AIF board 800A (Figure 9B) for controlling the Unimation 700 Series robots.

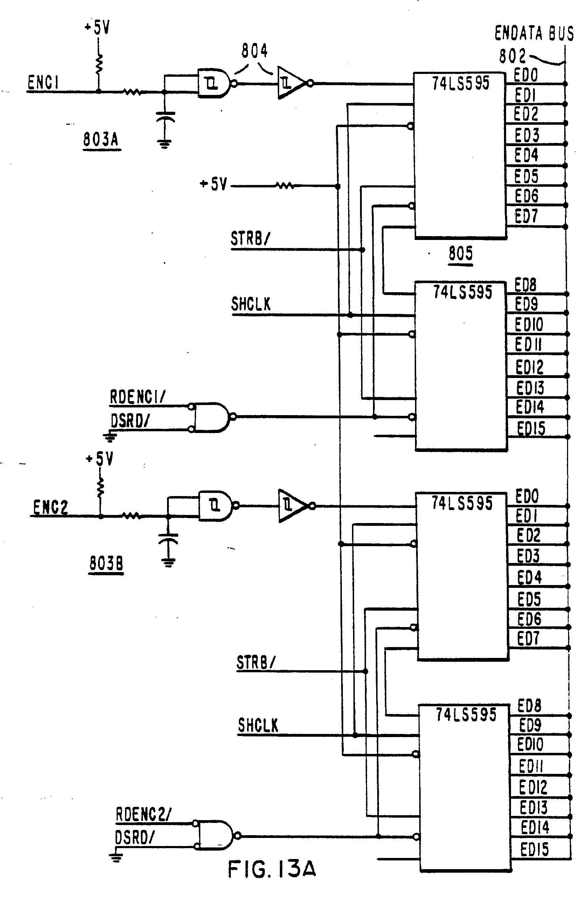

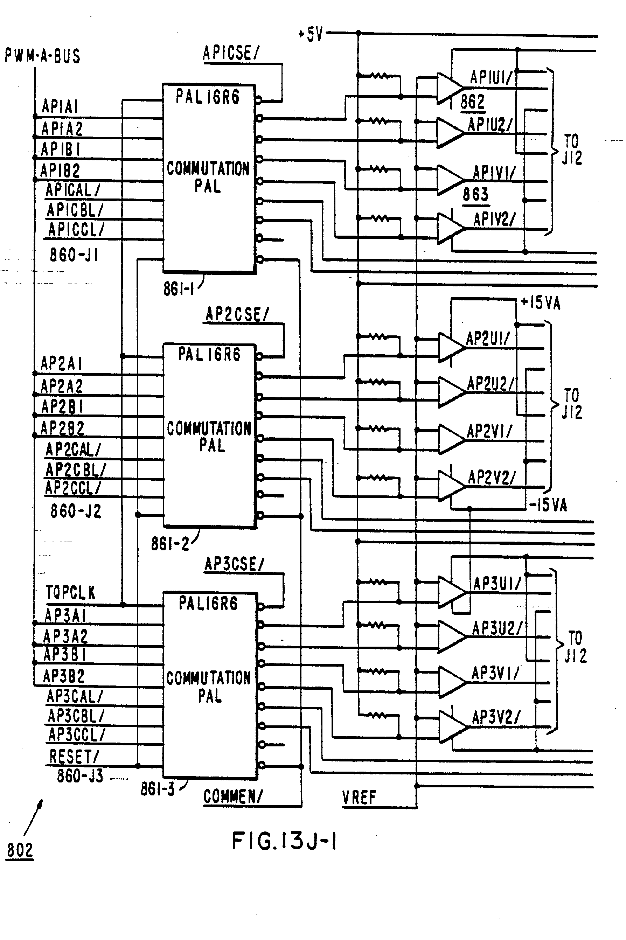

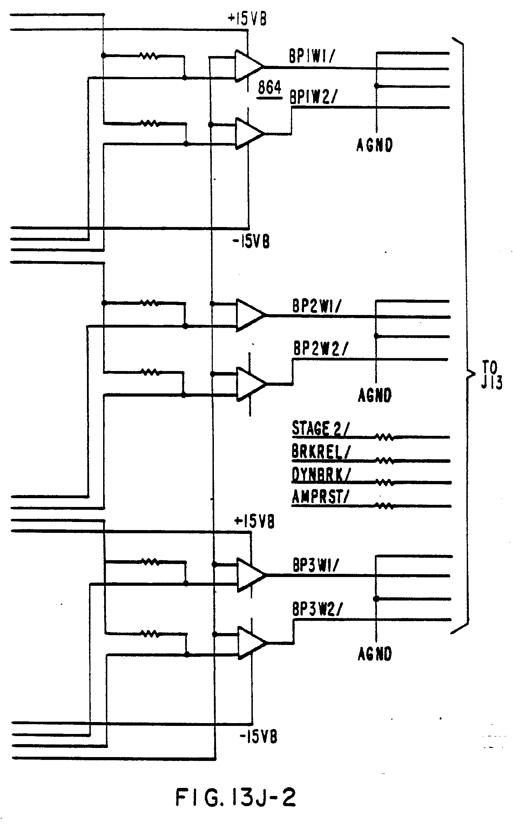

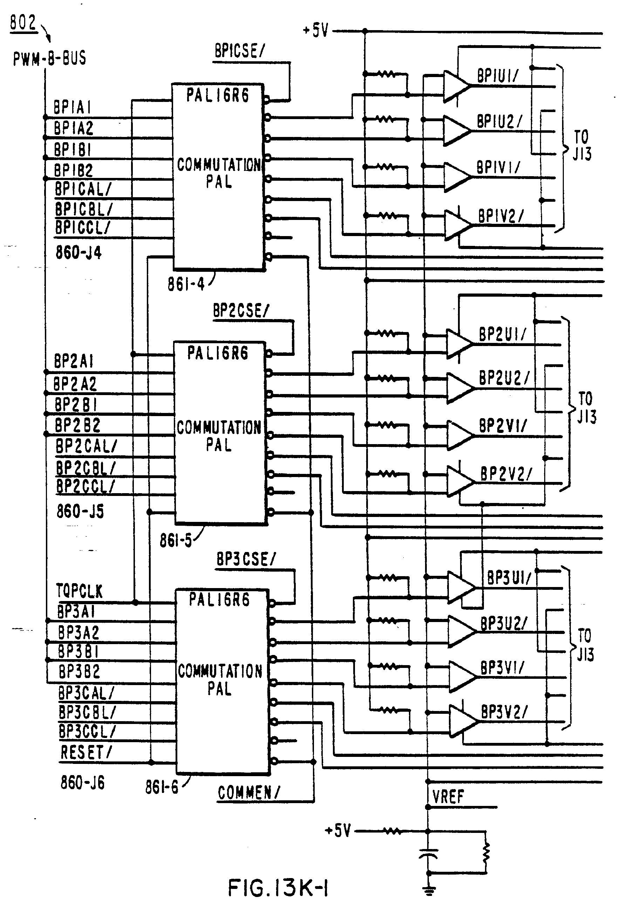

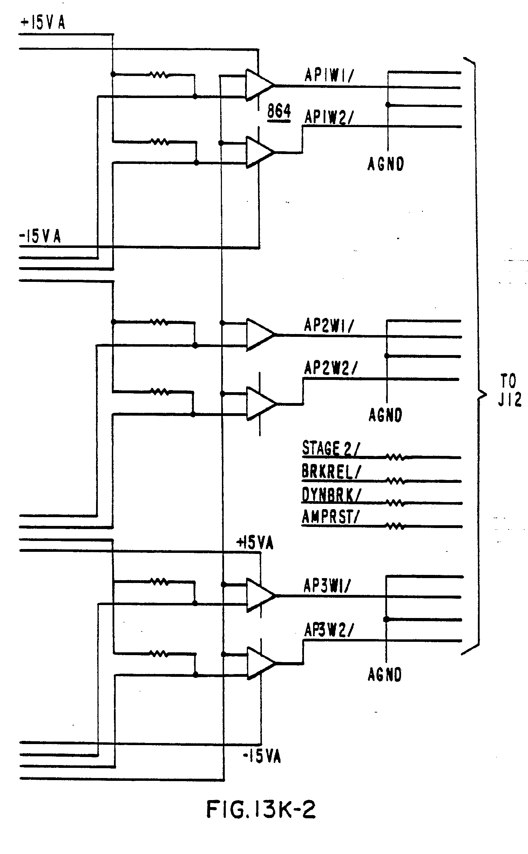

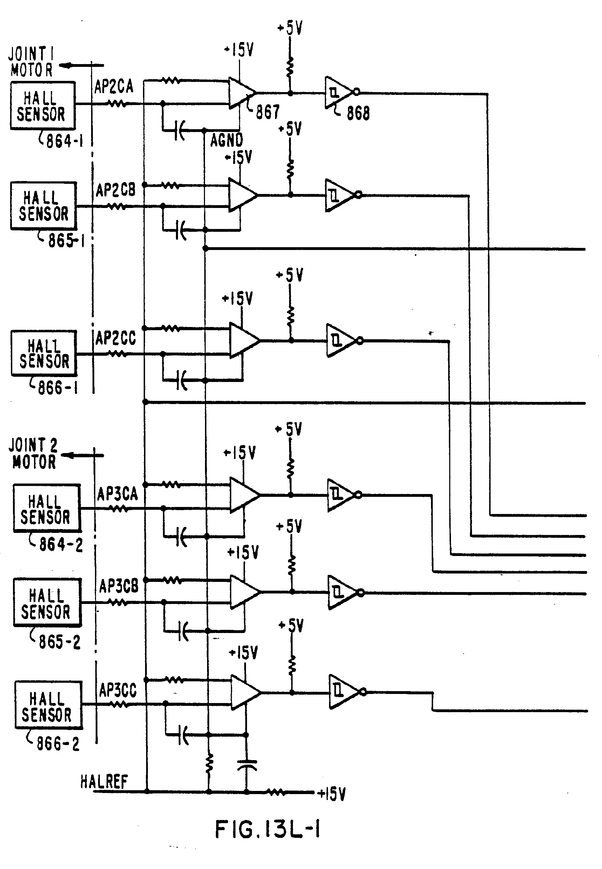

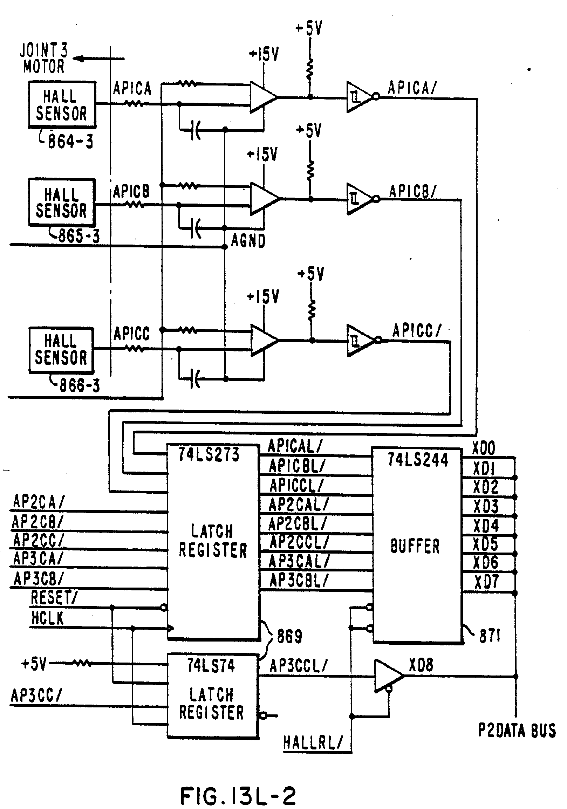

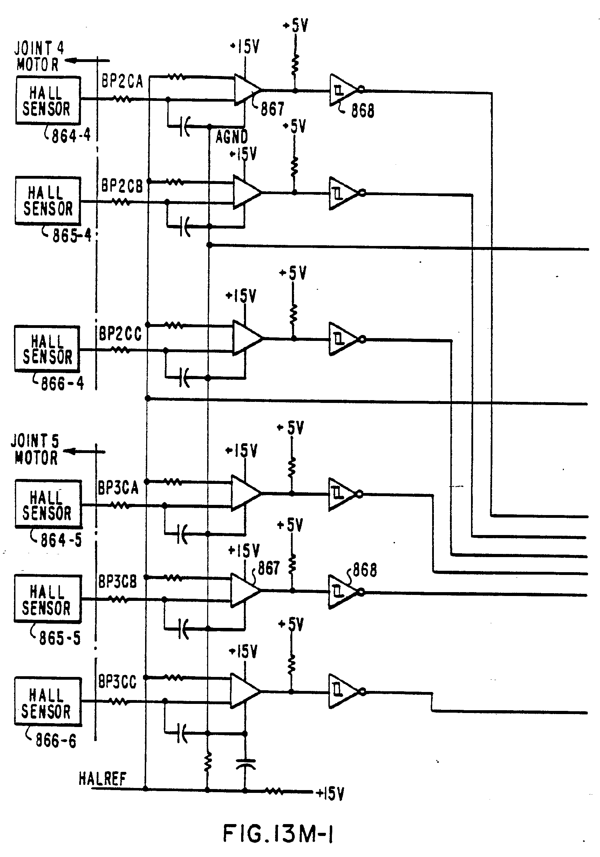

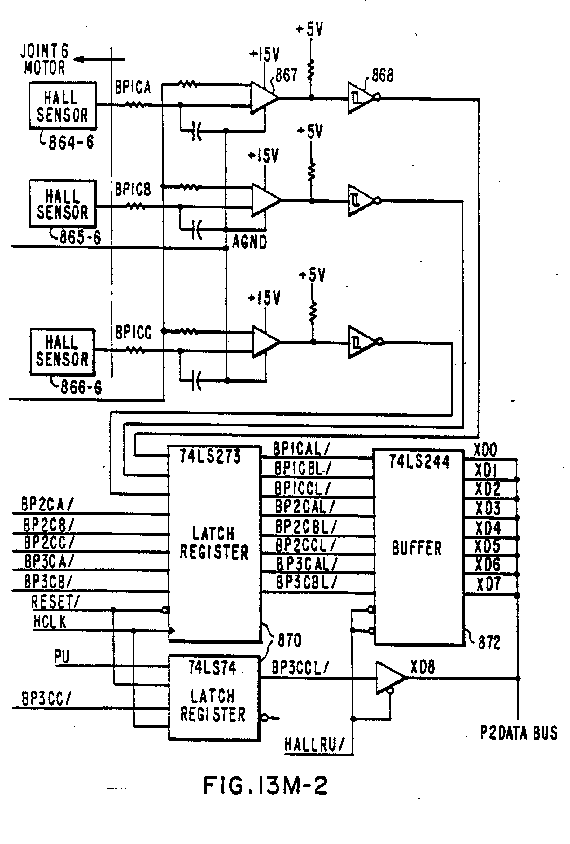

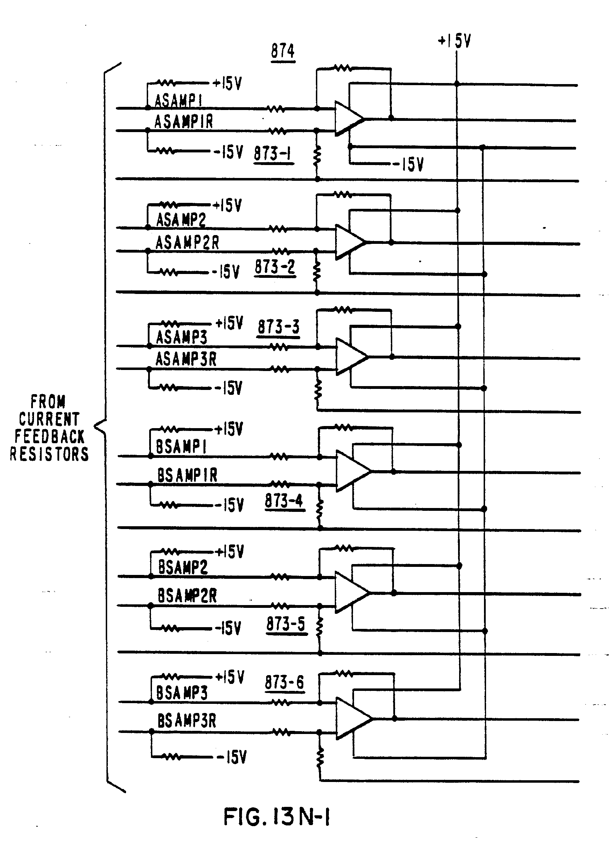

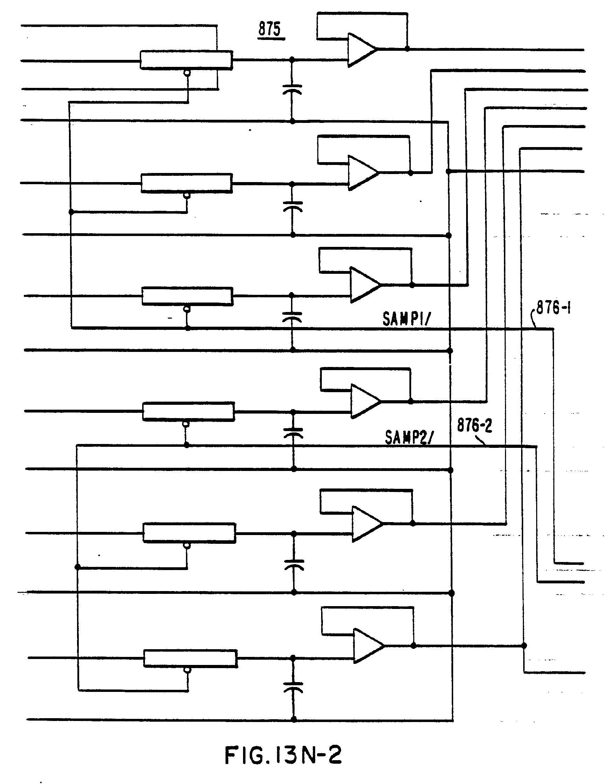

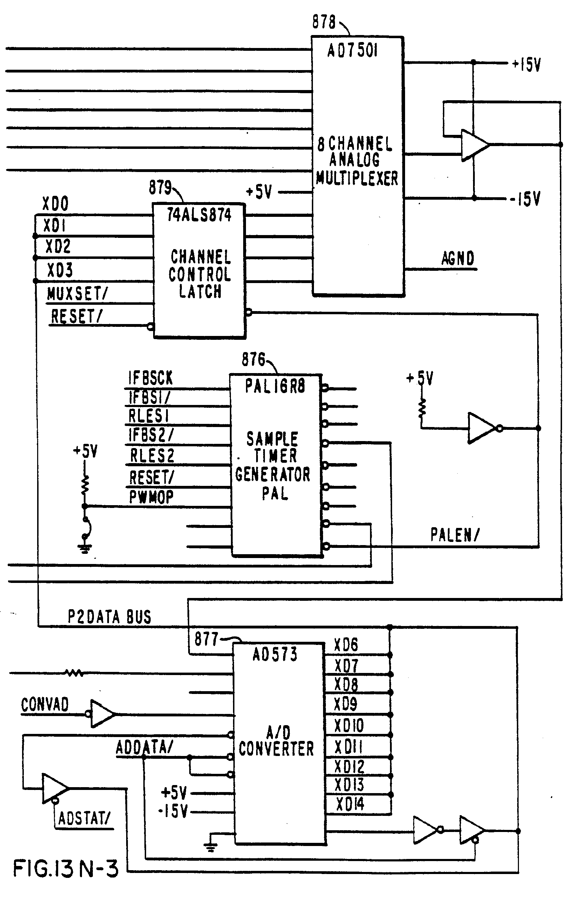

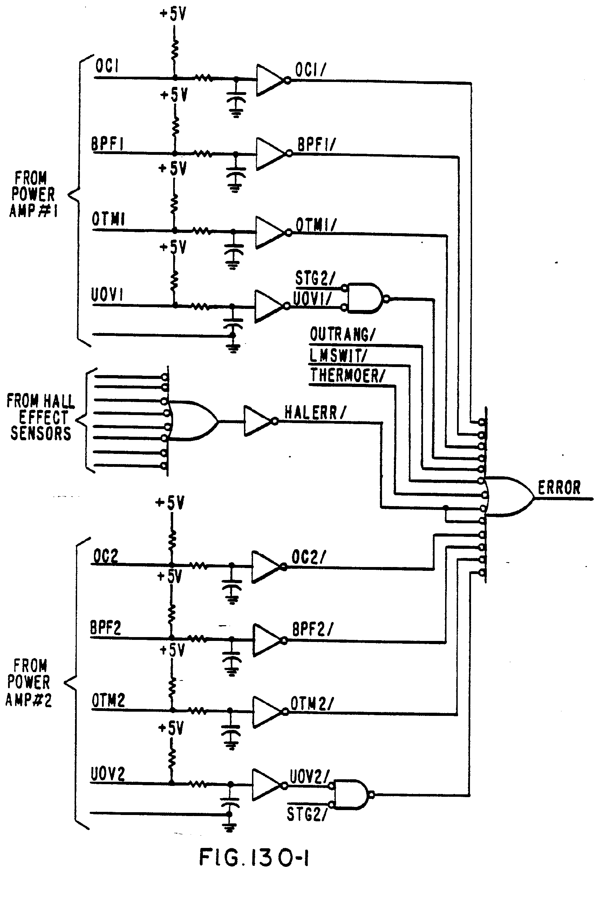

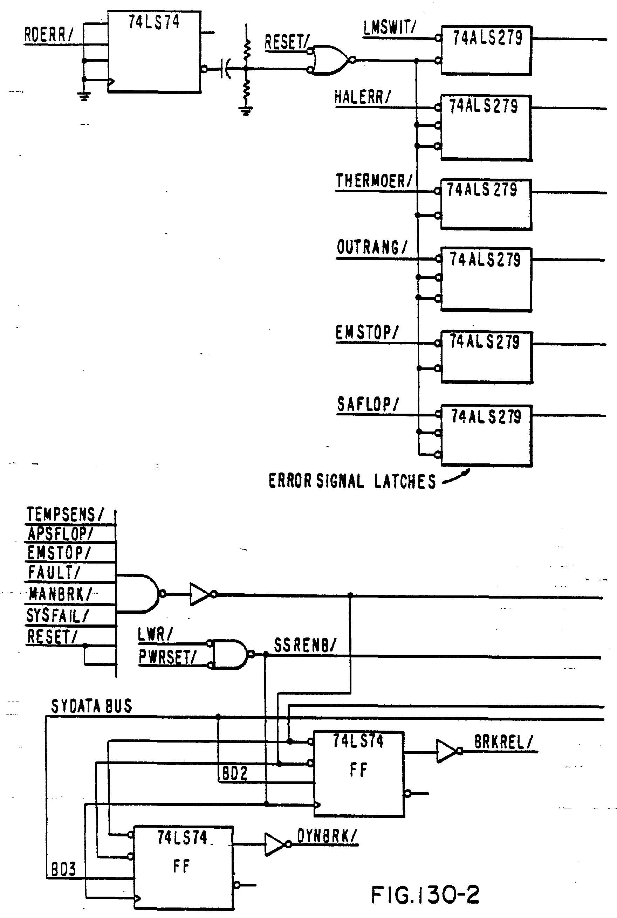

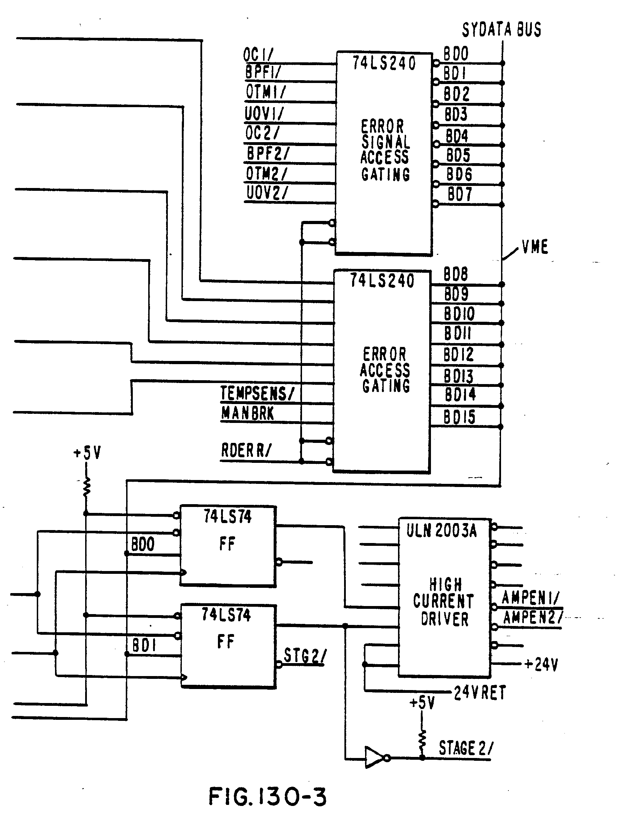

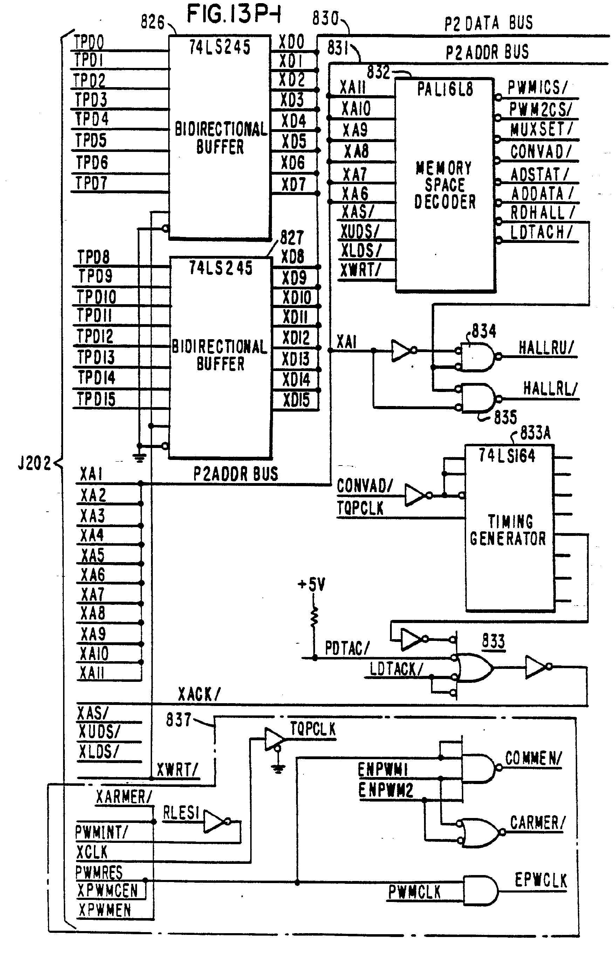

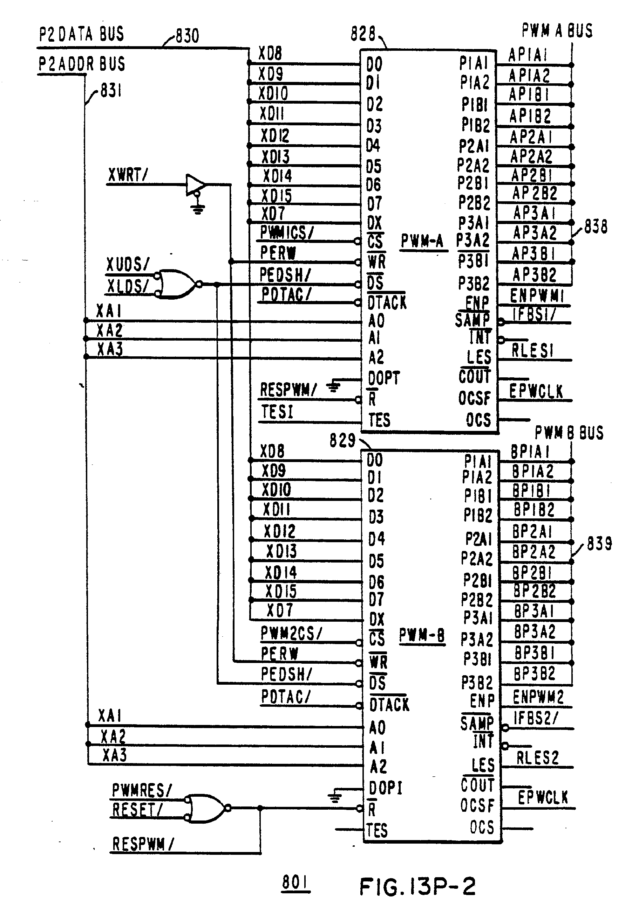

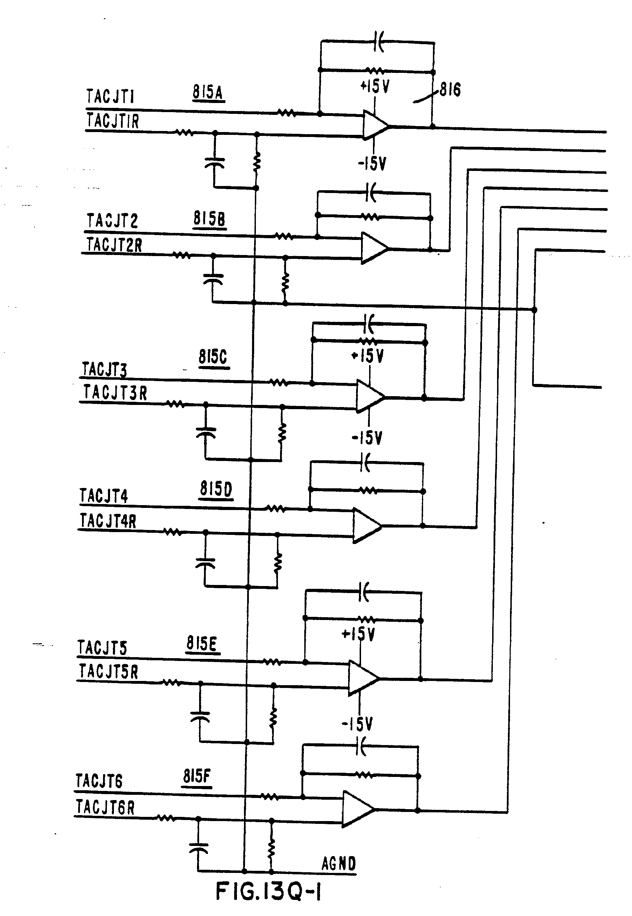

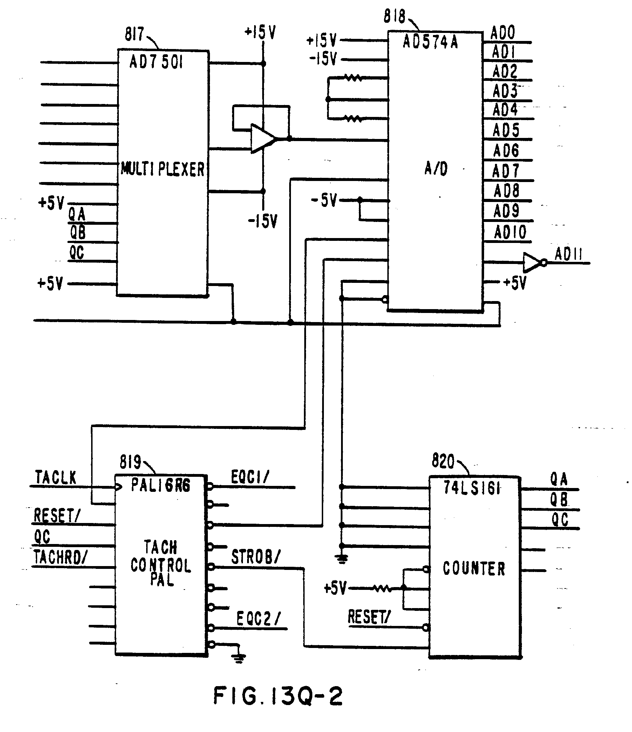

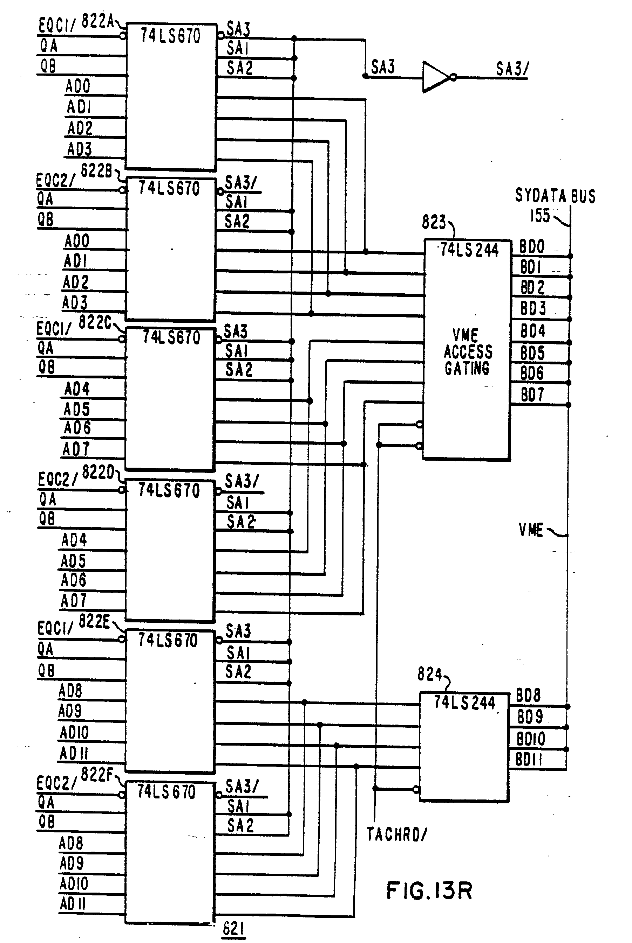

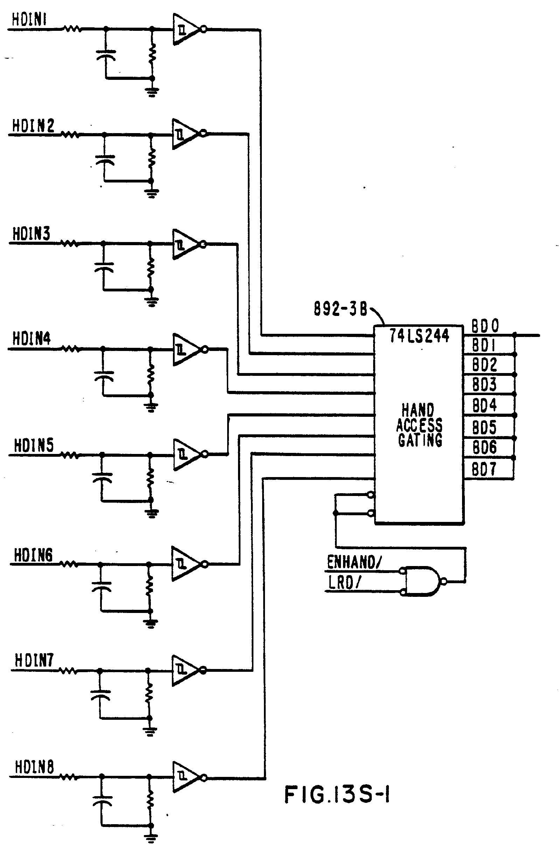

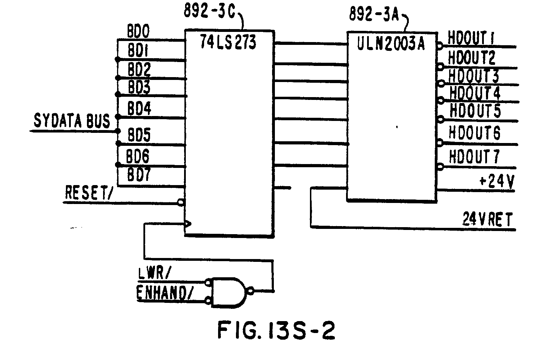

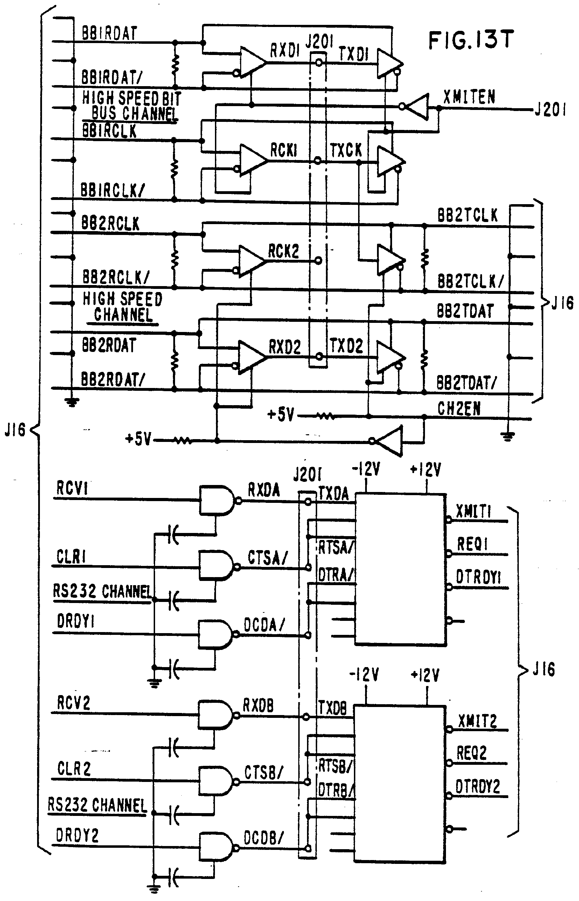

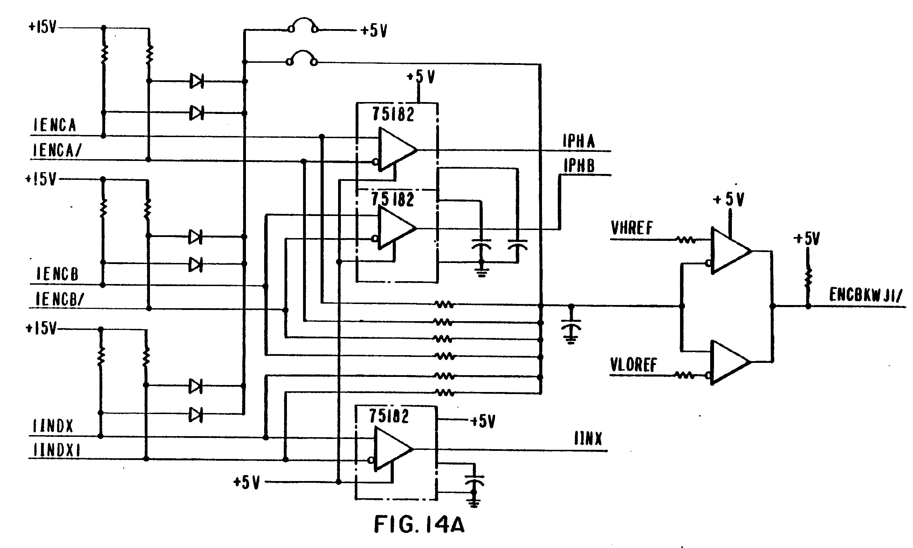

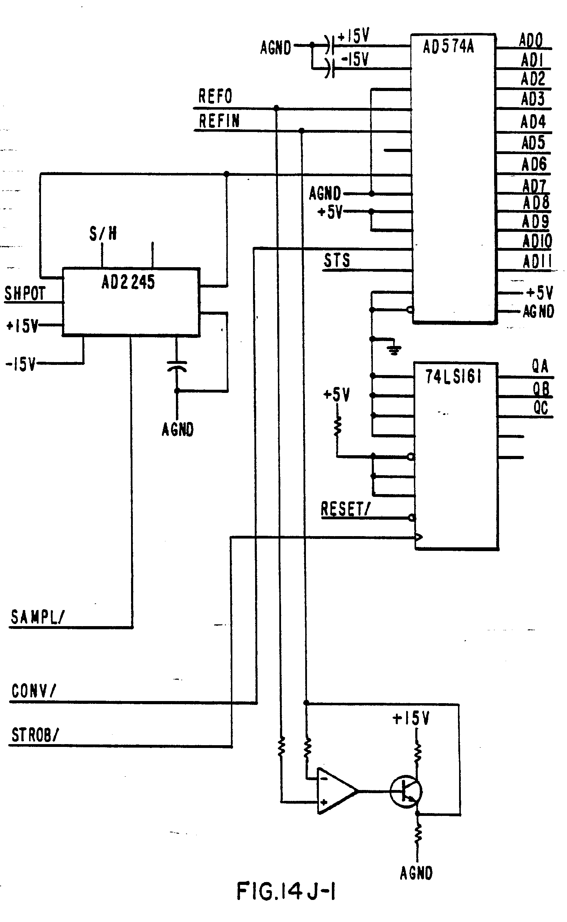

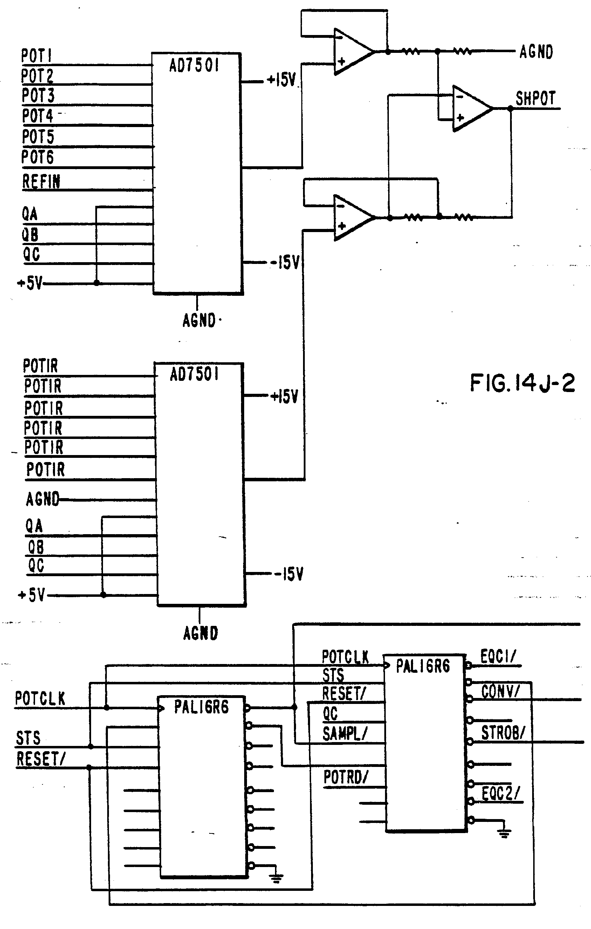

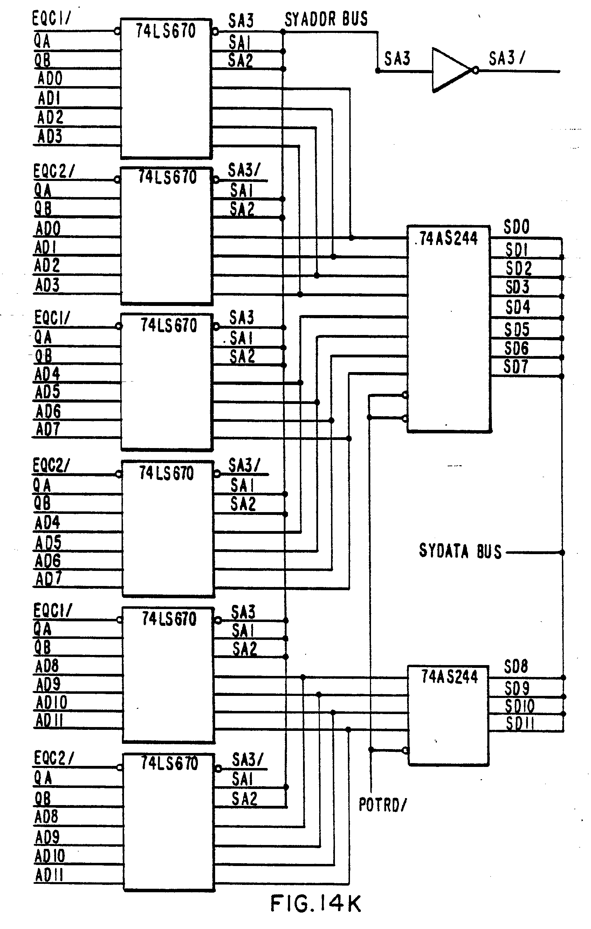

Circuitry on the AIF board 800 including that which adapts it to the 860 robot is shown in Figures 13A-13T. Circuitry on the AIF board 800 that adapts the board to the PUMA robots is shown in Figures 14A-14K.

## ARM INTERFACE CIRCUITRY

The arm interface circuitry (Figures 9A and 9B) disposed on the AIF board 800 operates primarily to:

1. Process control command signals to develop drive signals for power amplifiers which operate the axis motor as indicated by box 800A;

2. Process current, position, velocity and communication feedback signals as indicated by box 800B for use in the higher level control loops and the drive circuitry;

3. Perform various support functions as indicated by box 800C including control of VME bus operations, network communications interfacing, supply voltage monitoring, control panel interfacing, robot hand interfacing, and error and safety monitoring and control.

The digital robot control system is universally applicable to various kinds and sizes of robot arms because:

1. The overall control circuitry is generally structured to provide the basic control functions needed for universal application to robot arms;

2. The arm dependent board circuitry is disposed on the arm interface board - thereby enabling all higher level circuit boards to be packaged in a robot control system independently of the characteristics of the particular robot arm to be controlled;

3. The arm interface circuitry on the board 800 is organized so that a limited number of different arm interface boards can accommodate the requirements of a wide variety of robot arms including hydraulic robot arms, electric robot arms (brush type or brushless motors), large high power robot arms, small low power robot arms, robot arms produced by different manufacturers, etc.

4. Communications capability is included to enable application to robot arms in work cells, robot networks, and automated factories.

Thus, the robot control circuitry is structured to provide low cost control system manufacture and improved robot arm control and performance while simultaneously enabling ready modification of the robot control system for universal application to varied types of robot arms. In addition, as a result of its modularity, the control system can be readily packaged to provide different levels of control capacity and performance according to user needs.

## ARM DRIVE CONTROL

As previously described, the higher level control looping generates current command signals for the robot arm axes so that the arm workpoint (effector) is moved to commanded positions under controlled velocity, acceleration and torque in accordance with a user's robot program. Pulse width modulation circuitry 801 and drive circuitry 802 are provided on the arm interface board 800 to develop axis motor drive signals, in this instance for application to power amplifiers which provide the drive currents to brushless D.C. electric motors respectively associated with the six axes of arm motion.

As shown in Figure 13P-1, axis voltage command signals (TPDO-15) from the torque processor board 600 are received on the arm interface board 800 by a pair of bidirectional buffers 826 and 827. Circuitry on the AIF board 800 processes the voltage command data to develop digital TTL logic level signals to control the base or gate drive circuitry of the power amplifiers which supply the motor drive currents to the axis motors. As previously indicated, the motor currents and axis position and velocity data are fed back through the AIF board 800 to the higher level control loops for closed loop position, velocity and torque control.

Pulse width modulation is employed in developing the power amplifier control signals. With the employment of width modulated digital control signals, the solid state switches which control the motor currents within the power amplifiers can be operated much more efficiently to control motor current levels through pulsating on/off control as opposed to continuous amplitude control.

Referring to Figure 13P-2, the pulse width modulation circuitry is preferably embodied in pair of LSI pulse width modulation (PWM) chips 828 and 829. Generally, the PWM chips 828 and 829 are specially designed from a standard Large Scale Integrated (LSI) gate array chip in which a multitude of isolated transistors are formed by a silicon mask deposit within a semiconductor wafer. In this case, circuitry is specifically implemented in a CMOS 3 micron, single metal, 1500 gate, gate array chip. The desired circuit design is produced on the PWM chip by disposing a customizing metal mask on the chip to interconnect the transistor gates in a predetermined pattern which produces the desired circuitry.

Generally, the PWM chip operates as a microprocessor peripheral device (i.e., under the control of a microprocessor higher in the control loop configuration) to provide digital pulse width modulated signal generation for control of three axes having DC brush type motor drives. Among the embodiments, the PWM chip can be used with additional processing circuitry to provide PWM signal generation for three axes having DC brushless type motor drives.

Other general operating features include a diagnostic mode of operation which allows PWM ramp generation to be verified under microprocessor control without generation of output control signals. With respect to safety, a watchdog function disables PWM generation unless axis voltage commands are updated by the torque board microprocessor within three PWM cycles, software controls are used to enable and disable PWM generation, and programmed voltage limits independently prevent axis voltage commands from exceeding safe values.

A ramp generated internally by the PWM chip for the purpose of controlling output pulse width has a ramp frequency which can be controlled by an internal oscillator or by an external clock. Further, the PWM generates an interrupt signal synchronized to current feedback sampling and a current feedback sampling pulse synchronized to the PWM ramp.

With continued reference to Figure 13P-2, voltage command data (XD1-15) is transferred to registers within the PWM chips 828 and 829 over a data bus 830. Command data for axes 1, 2 and 3 is sent to the PWM chip 828, command data for axes 4, 5 and 6 is sent to the PWM chip 829.

Address and control signals (Figure 13P-1) from the torque control supervisor on the torque processor board are coupled to an AIF address bus 831. A memory space decoder 832 responds to input signals and generates PWM select signal PWM1CS or PWM2CS which is applied to the PWM chip 828 or 829. It also generates MUXSET and CONVAD for analog to digital conversion control in the current feedback path, ADSTAT and ADDATA and RDHALL for data read control and LDTACK for data signal reception acknowledgements to the torque manager 4 through gate control circuitry 833. A timing generator 833A delays for a predetermined time period the generation of the acknowledge signal. Within PWM chip 828 or 829, address signals XA1, XA2 and XA3 route each voltage command data signal from the data bus 830 to an internal axis command data register corresponding to the axis to which the command signals applies.

In the brushless DC motor embodiment of the invention (see Figures 13L-1, 13L-2, 13M-1 and 13M-2), 864, 865,866, Hall effect sensors are disposed about each drive motor stator periphery to generate magnetic rotor position signals for use in commutation switching control. A total of nine sensors are employed for each of the six axis motors. Referring back to Figure 13P-1, RDHALL generated by decoder 832 actuates either gate 834 or gate 835 to generate read signal HALLRU for axes 1, 2 and 3 or read signal HALLRL for axes 4, 5 and 6 (see Figures 13L-2 and 13M-2).

Safety/error control circuitry 837 (Fig. 13P-1) responds to torque board reset signals PWMRES to provide PWM reset independently of other control reset signals so as to assure that the PWM output is not started until everything else in the system is initialized. In addition, PWM reset allows direct PWM shutdown for drive or other error without requiring that other parts of the control system be shut down. COMMEN is generated to enable/disable motor commutation, EPWCLK is applied to the PWM chips 828 and 829 to generate modulation ramp. XARMER represents an error condition in which the two PWM chips are determined to be out of synchronization.

Three sets of output drive control signals from the PWM chip 828 are applied to a bus 838 (Fig. 13P-2) called PWM A BUS for the three corresponding motor axes. Similarly, the output control signals from the PWM chip 829 are applied to a bus 839 called a PWM B BUS for the other three corresponding motor axes.

The output signal TES1 from the PWM chip 838 is a clock signal which is divided elsewhere on the AIF board to become the synchronizing signal VTICK for the higher level control loops.

## POWER AMPLIFIER DRIVE CIRCUITRY FOR BRUSHLESS DC MOTORS

Separate drive circuit channels 860J1-860J6 (Figures 13J and 13K) are provided on the AIF board 800 to process and couple the PWM digital outputs to the power amplifiers for the respective brushless DC robot joint motors. Since the drive circuit channels are alike, only the channel 860J1 will be described.

At the input of the drive circuit channel 860J1, the PWM-A digital drive pulses AP1A1-2 and AP1B1-2 are applied to a PAL device 861-1. As previously described, the A and B pulses are time shifted, the A2 and B2 pulses are relatively wide enable pulses and the A1 and B1 pulses have varying time width to function as control pulses (within the B2 and A2 time spans, respectively).

In addition, feedback commutation signals AP1-CAL-CBL-CCL from the joint 1 brushless DC motor are applied to the PAL device 861-1. As shown in Figure 13L, three Hall effect sensors 864-1, 865-1, 866-1 are disposed about the periphery of the joint 1 motor to respond to magnetic flux changes and indicate the position of the rotor and which way the rotor is moving. Like sensors are employed for each joint motor as shown. Each sensor signal is routed to a comparator 867 which operates a gate 868 when the sensor signal reaches a reference level.

The nine gate output signals from the nine comparator circuit channels which process the Hall effect sensor signals from joint motors 1, 2 and 3 are applied to a latch register 869 which in turn generates commutation signals for the commutation PALS 861. A latch register 870 similarly generates commutation signals that are applied to the PALS 861 for joint motors 4, 5 and 6. Respective buffers 871 and 872 access the commutation signals to the P2 data bus for the torque processor board 600 thereby providing a basis for generating the commutation signals which control the switching of winding connections, i.e., control over which two of the three motor windings receive the motor drive current pulses.

Thus, the PAL device 861-1 (Fig. 13J-1) logically operates analog driver circuits 862, 863 and 864 to generate commutation timed signal sets APAU1-U2, AP1V1-V2 and AP1W1-W2 for application to the power amplifier switches which in turn direct motor drive current pulses through the joint 1 motor windings in accordance with the commutation control and in accordance with the pulse width modulation control. The currents through the windings of the other joint motors are similarly controlled by the other PAL devices 861.

The motor winding and power switch circuitry for each joint motor is shown in Figures 13J and 13K. The switches are operated to direct current through two of the three windings at any one point in time, and the winding connection switching is rotated about the windings under PAL control. The effective magnitude of the motor current depends on the switch ON time which in turn is controlled by the PWM output.

## FEEDBACK CIRCUITRY

## POSITION FEEDBACK

A position encoder channel is provided for each axis. In this case, the encoders are absolute position devices intended for use with Unimate 860 robot arms which are relatively large, high powered machines. An encoder position count is generated for each unit of movement and the output from each encoder is applied as a serial data signal to the arm interface board 800 for routing over an encoder data bus 802 as feedback for the control looping on the servo control board 400.

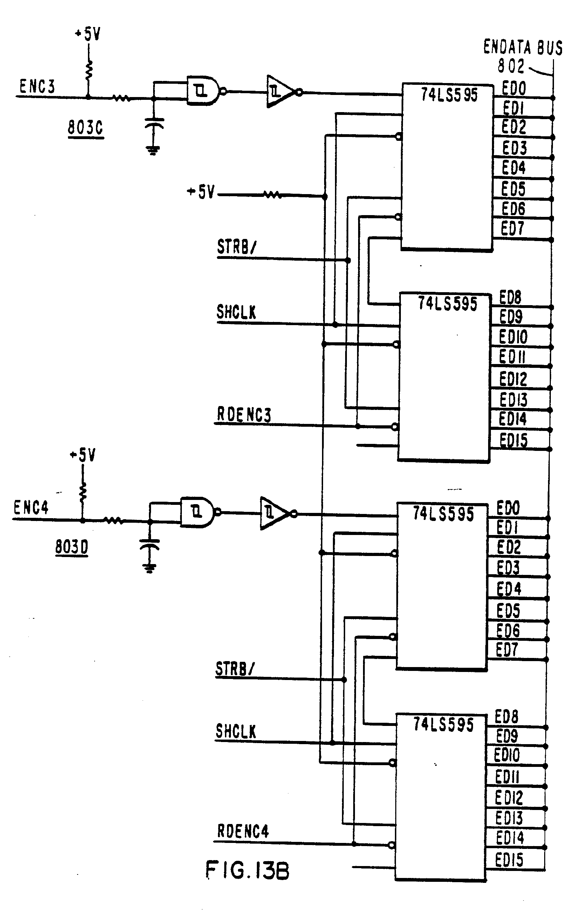

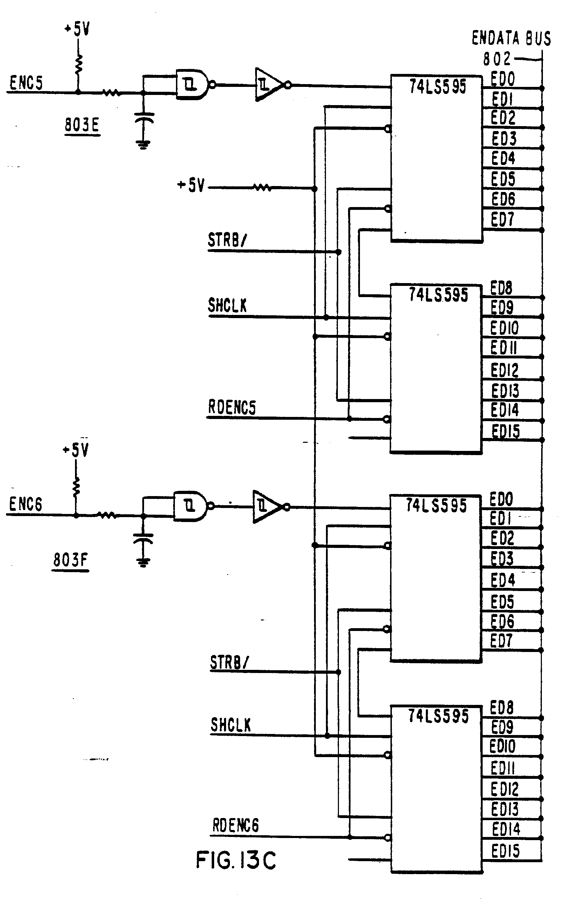

In Figures 13A, 13B, and 13C, there are shown input circuits 803A-F for receiving the respective serial encoder data signals ENC1-ENC6 for the respective arm axes. In this instance, the serial encoder signals are structured in the gray code with sixteen bits.

Each serial encoder signal is coupled through a gate circuit 804 to a 16-bit shift register 805 which converts the serial signal to a parallel data signal and applies it to the encoder data bus 802. All parallel encoder position signals are applied from the encoder bus 802 to gating circuity which operates to convert the position feedback signals from gray code to binary code.

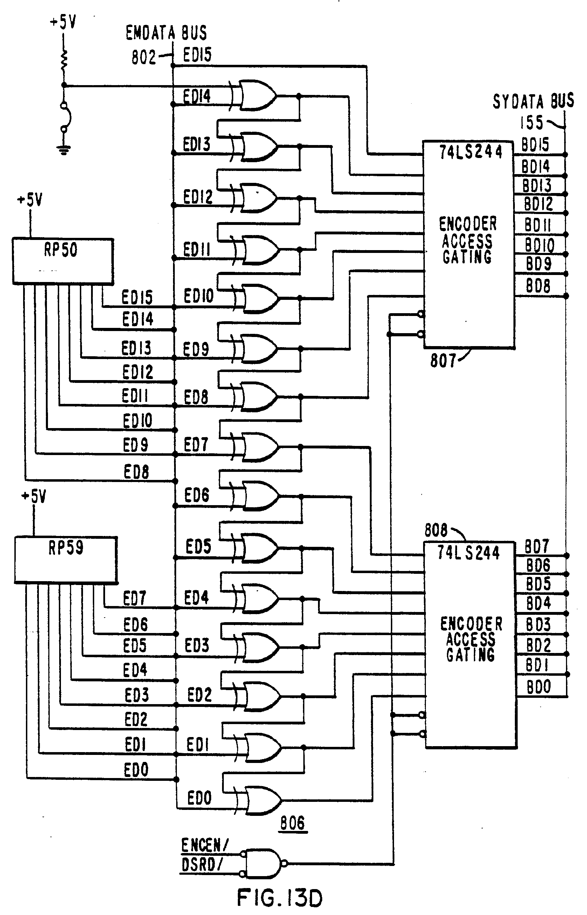

The parallel binary coded position feedback signals 802 are then applied to encoder gating chips 807 (Fig. 13D) and 808 which interface the position feedback signals to the VME data bus 155 for delivery to the servo calculator on the higher level SCM board 400. An encoder enable signal ENCEN from the SCM servo manager 400 via gate 806 operates the encoder chips 807 and 808 to gate the position feedback signals 802 to the VME bus 155.

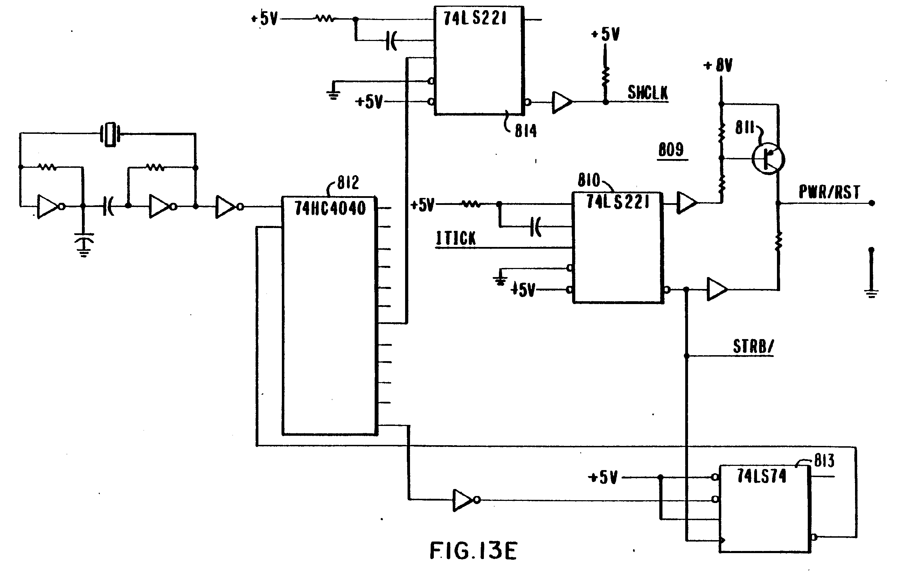

Synchronization of the position feedback data flow is provided by circuitry 809 shown in Figure 13E. Thus, multivibrator chip 810 is cycled by the VTICK or ITICK signal to operate drive transistor 811 and produce the signal PWR/RST every millisecond to direct the encoders to read in current position data and shift or convert the same to a serial output to the arm interface encoder circuitry. Chips 812, 813 and 814 operate with associated circuitry to generate a signal SHCLK which synchronizes the serial-to-parallel conversion by the shift registers 805 (Figure 13A) with the read-in operation of the encoders. With the generation of updated position feedback data on the VME bus every millisecond under VTICK control, such data is synchronously available for control command calculations every millisecond in the position, velocity and acceleration control loops on the SCM board 400.

## VELOCITY FEEDBACK

Analog velocity feedback signals are generated by the tachometers 140 (Figure 3) over six analog channels 815A-F, one for each joint or arm axis (see Fig. 13Q). In each channel, the tachometer signal and a reference tachometer signal are applied to a difference amplifier 816 which generates an output signal representative of the joint velocity. The velocity output signals are all applied to the input of a multiplexer 817 which in turn is coupled to an analog/digital converter 818.

A tachometer control PAL 819 operates with counters 820 to control (QA, QB, QC), the multiplexer 817 and apply in sequence the multiplexer channels to the analog/digital converter 818. Further, the tachometer control PAL 819 controls the timing of the analog-to-digital conversion of successive velocity feedback signals from the six multiplexer channels. After each conversion, the resultant digital velocity feedback signal (AD0-AD10) is stored in register circuitry 821 (see Fig. 13R).

Six register chips 822A-F are included in the register circuitry 821. Each register chip is 4 bits wide by 4 bits deep. Since the six joints require a 6-bit depth for signal storage, register pairs are employed to provide the required storage depth. Three separate register pairs are employed to provide a 12-bit width needed for the output signals from the analog/digital converter 818.

Velocity feedback signals are applied to the VME bus 155 through VME access gating chips 823 and 824 under the control of a read request signal TACHRD from the servo control manager 400.

## MOTOR DRIVE CURRENT FEEDBACK - TORQUE CONTROL

Feedback circuitry used to process the motor drive current feedback signals from the respective power amplifier feedback resistors for the six joints is shown in Figure 13N. The current feedback circuitry includes respective feedback channels 873-1 through 873-6. Each feedback channel includes a differential operational amplifier 874 having its output coupled to a sample and hold circuit 875. A PAL device 876 generates sample time signals 876-1 and 876-2 under PWM synchronizing control 1FBSCK. The sample/hold feedback signals from all of the joints are coupled to an analog-to-digital converter 877 through a multiplexer 878 under the control of a channel control latch 879. The digital motor current feedback signals are coupled to the P2 data bus for use by the digital controls on the torque processor board 600.

## GENERIC VME BUS CONTROL CIRCUITRY

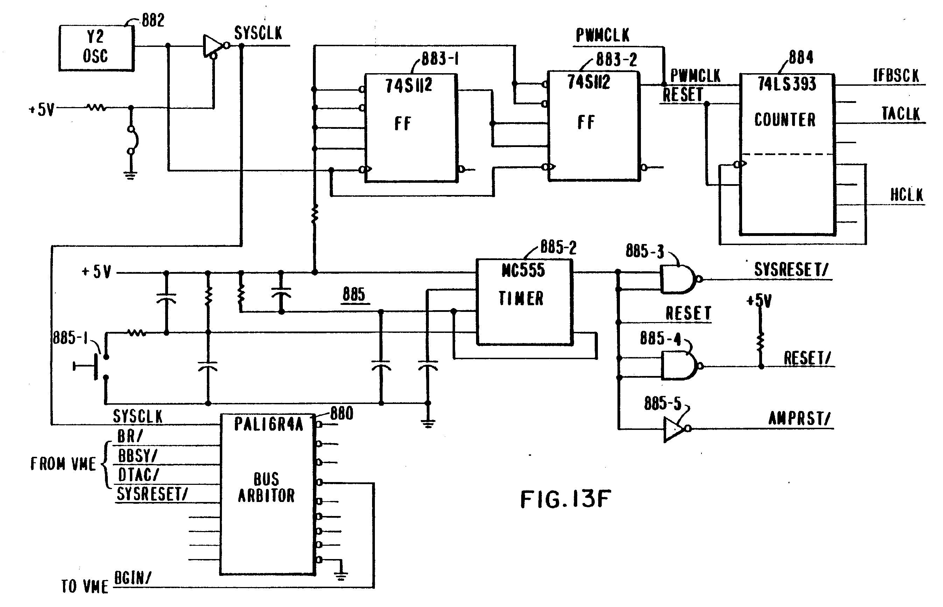

Various generic control functions are provided for the VME bus by circuitry located on the AIF board 800. As shown in Figure 13F, a PAL device 880 is programmed to operate as a bus arbiter, i.e., to arbitrate requests for bus access from units coupled to the VME.

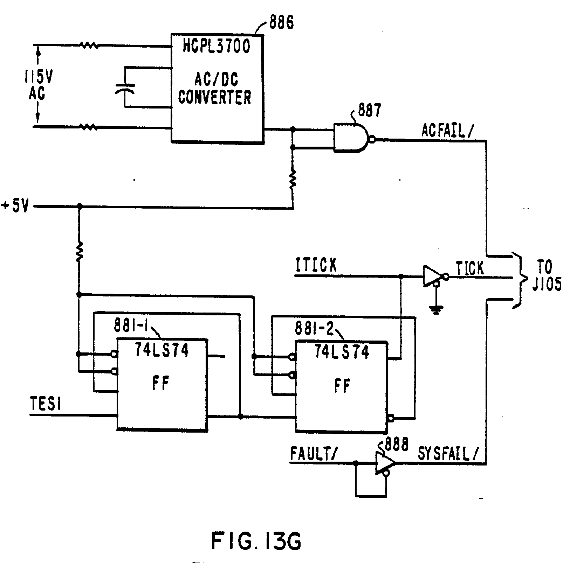

As shown in Fig. 13G, 4 KHz signal TES1 from the PWM chip is applied to a pair of flip-flops 881-1 and 881-2 for division down to a 1 KHz signal, i.e., the system synchronizing signal TICK.

Referring back to Fig. 13D, a 16 MHz oscillator 882 generates the system clock signal SYSCLK. It also has an output applied to a pair of flip flops 883-1 and 883-2 for division down to a 4 MHz signal PWMCLK which is applied to the PWM chips. A counter 884 processes PWMCLK to generate still lower frequency output signals 1FBSCK, TACLK and HCLK.

Reset circuity 885 is provided on the AIF board 800 for the whole system. Thus, a reset button switch 885-1 on the control panel is coupled through RC circuitry to a timer 885-2 which debounces reset switch operation. Gate devices 885-3, 885-4 and 885-5 respectively generator signals SYSRESET, RESET and AMPRST for resetting various board circuits.

Monitoring circuity (Fig. 13G) includes an AC/DC converter 886 which operates a NOR gate 887 to generate a signal ACFAIL when there is a failure of the system 115 VAC applied to the input of the converter 886.

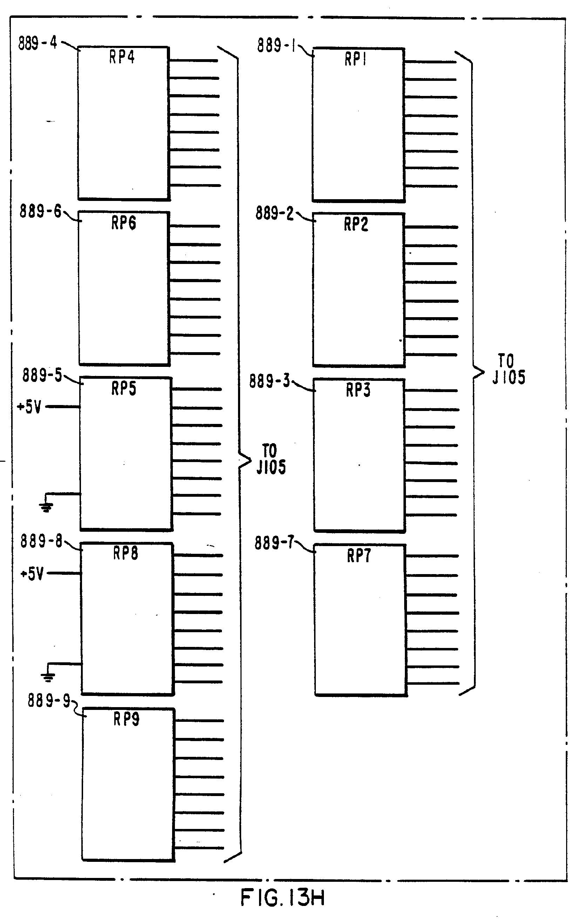

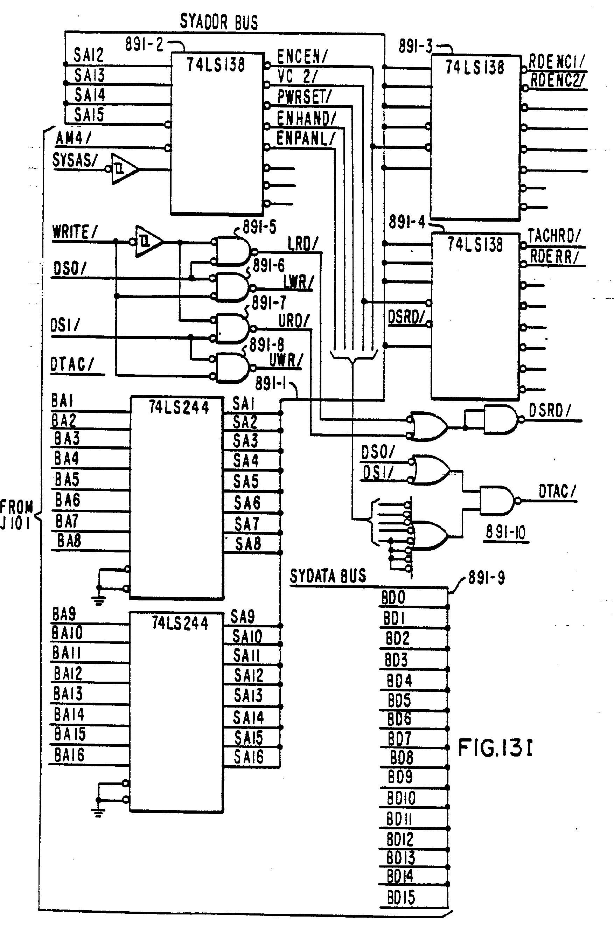

An error condition driver 888 generates a system signal SYSFAIL upon generation of the error signal FAULT. A plurality of resistors 889-1 through 889-9 (see Fig. 13H) operate as transmission line terminators for the various bus conductor line circuits.

## VME DECODING CIRCUITRY

Referring to Fig. 13I, decoding circuitry is provided on the AIF board 800 to provide access from the VME bus to various AIF circuits in accordance with address signals on the VME bus. Thus, address signals are applied from the VME bus to a system address bus 891-1 for decoding by chips 891-2, 891-3 and 891-4.

Read/write control is provided by gates 891-5 through 891-8. Data is sent over a bus 891-9 called SYDATA-BUS. Once data is transferred, it is acknowledged by signal DTAC from logic circuit 891-10.

## OTHER AIF CIRCUITRY

Additional circuitry on the AIF board 800 includes:

Control panel interface 892-1 (not detailed) - detects panel switch operations and operates indicator lights on the panel.

Voltage monitor 892-2 (not detailed) - the various circuit supply voltages are monitored by comparison to reference voltages; signals are generated to indicate out-of-range values.

Hand interface 892-3 (Figure 13S) - seven user defined on/off output signals are generated by block 892-3A to control the end effector; eight user defined arm tip inputs are processed through access gate 892-3B; command data and gated arm tip inputs are routed over the SYDATA bus to buffer 892-3C and the output device 892-3A.

Communications interface 892-4 (Figure 13T) - connects to the SCM board over communications connectors J16 and J201 and provides driver, receiver, and level converter circuitry for the two high specs (1 megabaud) synchronous channels (including the bit bus channel) and the two slower standard RS232 synchronous channels (about 9600 band) as indicated.

Error and safety control 892-5 (Fig. 13O) - provides error signal processing circuitry to turn off the power amplifiers and stop the arm directly (i.e., as opposed to via microprocessors) under predetermined conditions; circuitry is also provided to operate LED status indicators on the AIF board 800 for the following error conditions:

SYSFAIL - System Failure
LMSWIT - Joint Limit Switch Off
SAFLOP - Safety Loop Broken
TEMPSENS - Over Temperature
THERMOER - Motor Overload
OUTRANG - Voltage Out of Range
FAULT - Hardware Failure
EMSTOP - Emergency Stop Occurrence
MANBRK - Manual Brake Released

## POWER AMPLIFIER DRIVE CIRCUITRY FOR BRUSH TYPE DC MOTORS

In Figures 14A-14K, there is shown circuitry employed on an AIF board designed for use with a PUMA 760 robot. The illustrated circuitry includes only that circuitry which differs from circuitry on the AIF board for the 860 robot (Figures 13A-13T). The balance of the circuitry on the PUMA 760 AIF board is essentially like that on 860 AIF board.

Since the PUMA 760 employs incremental position detection (see Fig. 9B), encoder signal processing circuitry is employed on the PUMA 760 AIF board as shown in Figures 14A through 14F-2 and 14L.

Three encoder signals are returned from each of the six arm joints: ENCA, ENCB and INDX. Figures 14A through 14F-1 show like encoder signal processing circuits for the six joints. Each encoder signa is first 1) filtered to exclude noise and 2) checked for a broken wire condition.

As shown for joint 1 in Figure 14A, device 75182 substantially cancels any noise in each encoder feedback signal. The filtered encoder signals (PHA) are applied to gate array devices GA3000 in Figures 14G-1 and 14G-2. These devices in effect read and temporarily store the encoder feedback signals for the system. From the gate arrays, the encoder signals go to transceivers 74LS245 for transmission over the VME bus to the SCM board where the arm position feedback is read and used in control computations. Each time the INDX signal occurs, a device 75182 generates an interrupt signal over the VME bus for the SCM to make an encoder read.

The following is a list of most of the gate array signals and their functions:

SA1 to SA4 - Decode One of 16 Registers Within The GA3000
ENCLDS - Low Data Select - To Read Lower Byte
ENCLK - 2 Megahertz Clock
VMECE - VME Bus Enable
RESET - System Clear of All Internal Registers
ENCRW - Enable Read (HI) or Write (LO)
ENCCS - Chip Select
ENCUDS - To Read Upper Byte
ENCDTAC - Select Acknowledge Directly From Chip to VME Bus

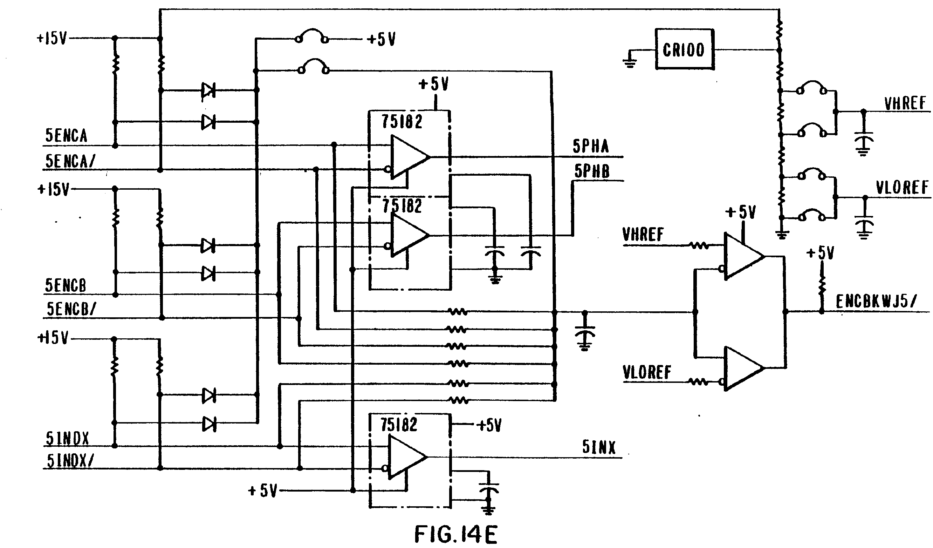

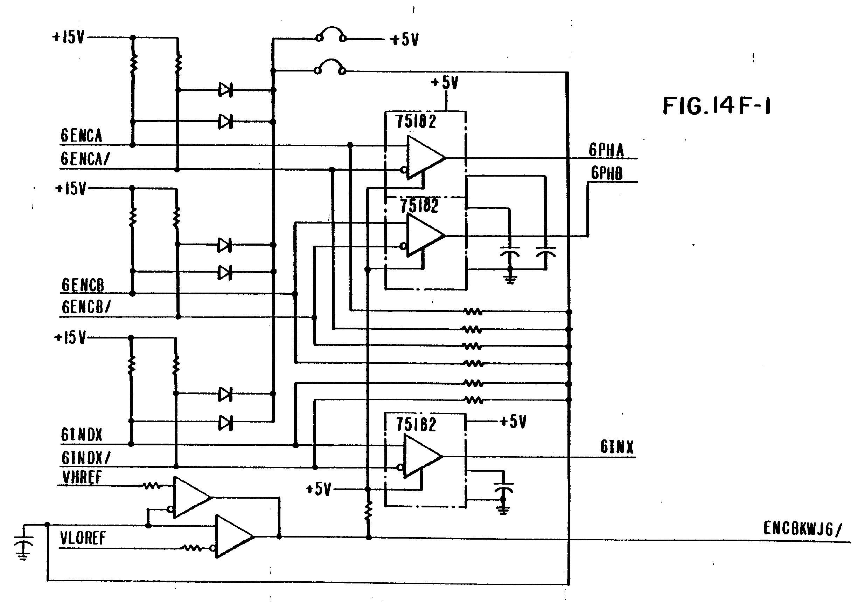

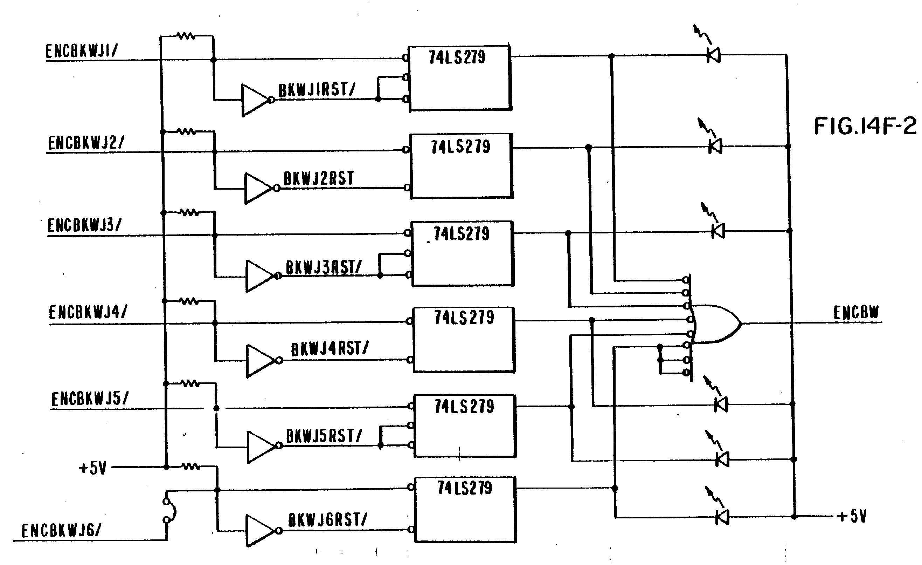

Broken wire signals ENCBRKW are generated by high and low signal comparators for each joint (Figures 14A-14F-1). High (6 volts for PUMA 760) and low (ground for PUMA 760) reference signals are generated as shown in Figure 14E. The broken wire signals are applied to respective latches S279 that operate visual indicators as shown in Figures 14F-2. An AND gate generates a signal ENCBW for display any one joint shows a broken encoder wire. In addition, a broken wire signal is applied to the system error circuitry, specifically to latch U14 to provide an error reading to the system software and to SYSFAIL device U2 to disable the SCM board and thereby incapacitate the robot control as a whole.

The PUMA 760 PWM circuitry in Figures 14H and 14I differs from the 860 PWM circuitry in that it employs reverse polarity on the 339 comparators.

In Figures 14H, 14J-2 and 14K there is shown circuitry associated with PUMA 760 position potentiometers employed to indicate arm joint positions during power-up and thereby allow the user to initialize the arm position. The 860 robot makes no use of such potentiometers.

The six pots are connected to analog multiplexers AD7501 (Fig. 14J-2) and thereafter to a sample and hold circuit AD2245 (Fig. 14J-1) and a 12-bit analog-to-digital converter AD574A. The digital output signals are coupled from the converter to a FIFO resistor system. POT signals that are read one at a time are applied from the FIFO resistor through a receiver S244 to the VME bus for system reading and display. PAL device 16R6 (Figure 14J-2) controls the starting time of each A-to-D conversion cycle.

## ROBOT CONTROL PACKAGING - BASIC AND EXPANDED CONTROLS

The TP board 600 generally houses torque (current) servo control circuitry. In turn, the SCM board 400 contains position and velocity servo control circuitry, a capability for arm solutions generation, and a communications and system resources capability which enable a basic robot control to be configured from AIF, TP and SCM boards. The system control (SC) board 500 provides a separate arm solutions capability which enables expanded control with higher level performance, i.e. faster trajectory time.

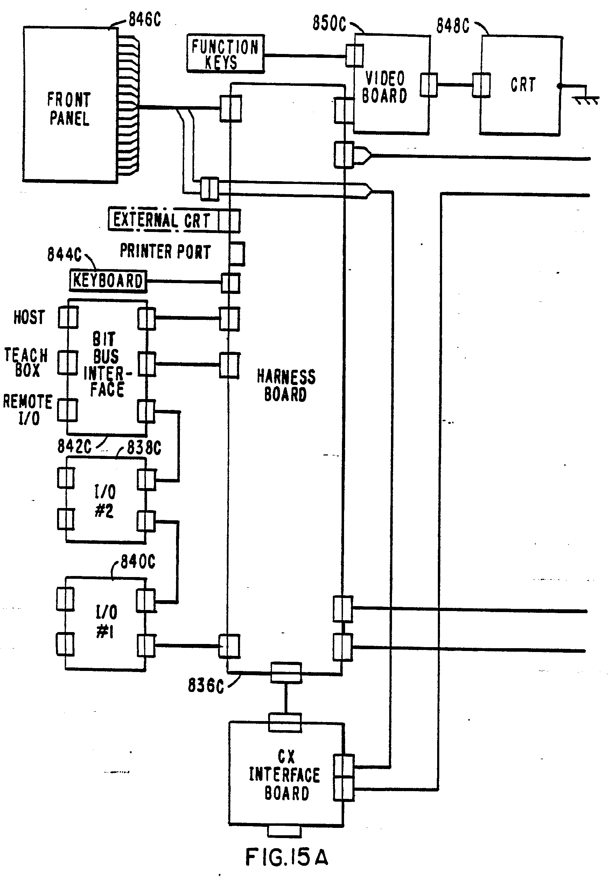

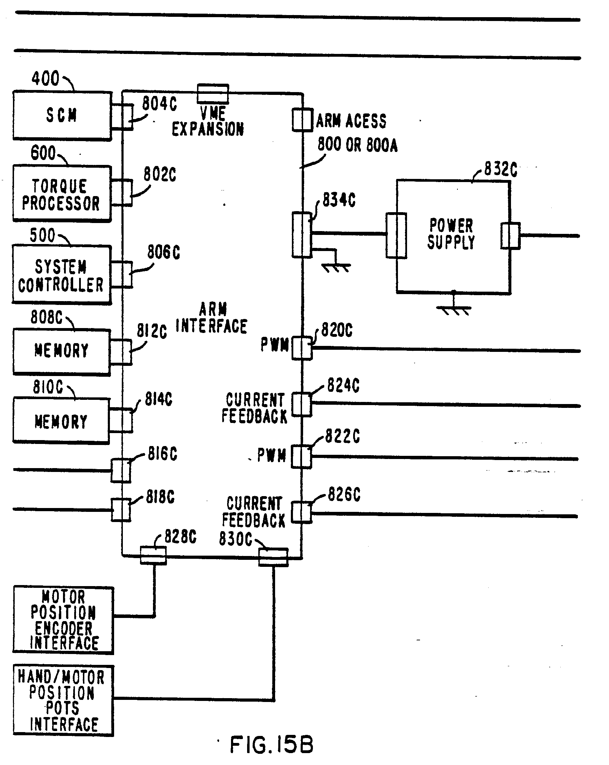

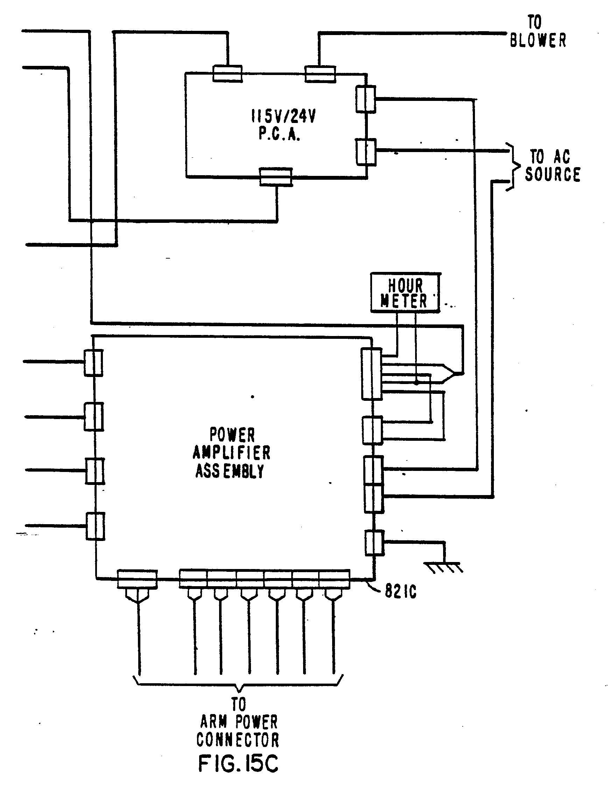

To package a basic robot control as shown in Figures 15A, 15B and 15C, a TP board 600 and an SCM board 400 are assembled with an AIF board such as the board 800 or 800A. The AIF board 800 or 800A is provided with a slot connector 802C for the TP board 600 whereby a conventional multipin interconnector provides respective connections for the VME bus and the VMX bus between the AIF board 800 or 800A and the TP board 600. Another slot connector 804C similarly makes necessary connections for the SCM board 400 with the AIF board 800 or 800A.

Generally, the VME bus is a system bus that carries 24 bus address lines and 16 data lines and further carries position and velocity feedback signals and TP board commands. The VME bus thus connects commonly between the AIF, TP and SCM boards. The VMX bus connects only between the AIF board 800 or 800A and the TP board 600 and carries current feedback and commutation status signals.

In packaging the expanded robot control referred to previously, the SC board 500 is also assembled with the basic control by insertion in AIF slot connector 806C as shown in Figure 15B. An interconnector then connects the VME bus between the SC and AIF boards thereby making the VME bus common to all boards.

Further control expansion can be achieved by adding additional memory boards 808C, 810C to slots 812C and 814C respectively or by adding additional electronic boards having added computer capacity for higher level control and/or expanded control functioning.

Connectors 816C and 818C are provided for a harness board 836C (Figure 15A) which provides for connections I/O interfaces 838C and 840C, a bit bus interface 842C (for teach box, remote I/O, etc.), a keyboard 844C, a panel 846C and a CRT 848C through a video board 850C.

Connectors 820C-830C are also provided on the AIF board 800 or 800A for PWM and feedback connections to the robot power amplifiers 821C (Figure 15C) and for connection to external systems or devices including input/output devices, any supervisory computer, any robot or machine controls, and any programmable controllers. Among the connections, a power supply 832C supplies board power through interconnector 834C.

Finally, the particular AIF board selected determines the type robot that the assembled basic or expanded control can operate.

## ARM DRIVE CONTROL - BRUSHLESS DC MOTORS

As previously described, the higher level control looping generates current command signals for the robot arm axes so that the arm workpoint (effector) is moved to commanded positions under controlled velocity, acceleration and torque in accordance with a user's robot program. Pulse width modulation circuitry and drive circuitry are provided on the arm interface board 800 to develop axis motor drive signals, in this instance for application to power amplifiers which provide the drive currents to brushless D.C. electric motors respectively associated with the six axes of arm motion.

Separate drive circuit channels are provided on the AIF board 800 to process and couple the PWM digital outputs to the power amplifiers for the respective brushless DC robot joint motors.

In the motor winding and power switch circuitry for each brushless joint motor, the switches are operated to direct current through two of the three windings at any one point in time, and the winding connection switching is rotated about the windings under PAL control. The effective magnitude of the motor current depends on the switch ON time which in turn is controlled by the PWM output.

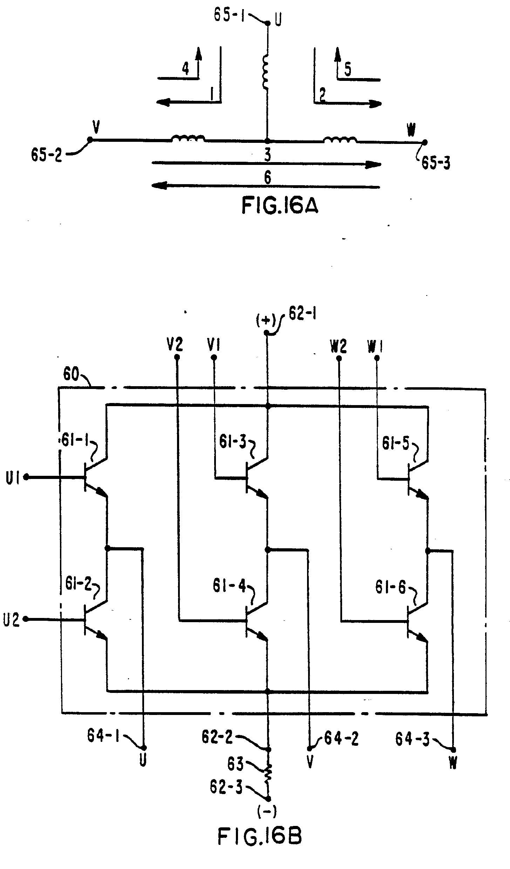

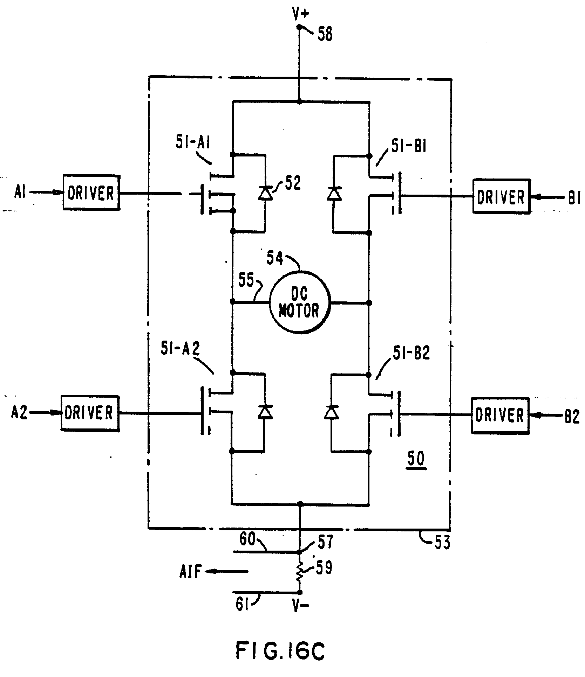

In Figure 16A, there is shown the stator winding circuitry for DC brushless motors employed as axis drives in various robots including the Unimation 860 robot which is more powerful than the Unimation 700 Series robot shown in Figure 1.

A commercially available, low cost hybrid power amplifier block 60 (Figure 16B) is provided for energizing the DC brushless motor windings. As indicated by the dotted box, the power amplifier block 60 is packaged to include the six semiconductor switches 61-1 through 61-6 needed for operating the three phase windings of the brushless DC motor. The block 60 is a low cost power amplifier mainly because the device is packaged to contain a simple switching circuit configuration without internal control loops. The switches of block 60 are operated to direct current through two of the three windings at any one point in time, and the winding connection switching is rotated about the windings under PAL control. The effective magnitude of the motor current depends on the switch ON time which in turn is controlled by the PWM output.

The power amplifier block 60 is provided with external power supply terminals 62-1 and 62-2. A current sense resistor 63 is connected to the terminal 62-2 for series connection to the power supply so as to provide motor current feedback signals for control loop operation.

The power amplifier block 60 additionally includes external terminals 64-1, 64-2 and 64-3 for respective connection to the free ends 65-1, 65-2 and 65-3 of the Y connected motor windings. External terminals 66-1 through 66-5 are also provided for application of the switch control signals U1 and U2, V1 and V2 and W1 and W2 from the PWM commutation circuitry. To prevent power supply shorting and switch burnout, the power switches are always controlled so that only one switch can be on at a time in each of the respective pairs of switches 61-1 and 2, 61-3 and 4 and 61-5 and 6.

The control signals U1, V1 and W1 are the basic pulse width control signals that control the level of drive current through the motor windings. The control signals U2, V2 and W2 enable the six motor windings conduction paths in rotation and generally provide for the flow of freewheeling motor currents.

said position command generating means including planning program means (204A) for generating a motion profile with specified motion parameters for implementing each robot program command;

said position command generating means further including trajectory program means (202A) for generating said position commands to satisfy each robot program command in accordance with its motion profile;

second microprocessor means [Fig. 5, 220A] adapted to be coupled to said system resource means;

said position command generating means further including said first microprocessor servo means for execution of said planning and trajectory program means in a basic control configuration for said robot or said second microprocessor means for execution of said planning and trajectory program means in an expanded performance control configuration for said robot [Fig. 6]; and

interfacing memory means [Fig. 6B; Figs. 7-1 and 7-2] for coupling said first and second microprocessor means for data communications therebetween when the expanded control configuration is employed.

2. A digital robot control as set forth in claim 1 wherein program memory means [Fig. 6B, 108A] are provided for storing said planning and trajectory program means for loading into either of said microprocessor means.

3. A digital robot control as set forth in claim 2 wherein said system resource means includes said program memory means.

4. A digital robot control as set forth in claim 1 wherein said communication means includes a DMA con troller [Fig. 6B, 116A] for managing and executing data communications for the robot control loop means thereby freeing said microprocessor means from corresponding communications load burden.

5. A digital robot control as set forth in claim 1 wherein said interfacing memory means [Fig. 6B] is a dual port memory.

6. A digital robot control as set forth in claim 1 or 4 wherein said system resource means includes said interfacing memory means and means are provided for arbitrating [Fig. 6B] in accordance with predetermined rules access to specific facilities within said system resource means by said first and second microprocessor means and said DMA controller.

7. A digital robot control as set forth in claim 3 wherein said system resource means further includes said interfacing memory means (110A, 112A), nonvolatile data memory means (108A), and clock means (114A) for system time stamping.

8. A digital robot control as set forth in claim 7 wherein said system resource means further includes at least two additional communication controllers (118A, 120A) to provide at least two additional communication channels.

9. A digital robot control as set forth in claim 1 wherein said first microprocessor servo means includes a position/velocity microprocessor servo means [Fig. 7-1 and 7-2] for executing said program means in the basic control configuration and for operating the position/velocity control loops and generating torque commands, and wherein said second microprocessor servo means includes a torque processor servo means [Figs. 8-1 and 8-2] for operating the torque control loop and generating said voltage commands.

10. A digital robot control as set forth in claim 9 wherein said position/velocity microprocessor servo means includes a data management processor (402) and a position/velocity control calculator microprocessor (404) and a floating point calculator (406) coordinated by said management microprocessor to perform the defined position/velocity servo means functions.

11. A digital robot control as set forth in claim 9 wherein said robot control is modular comprising:

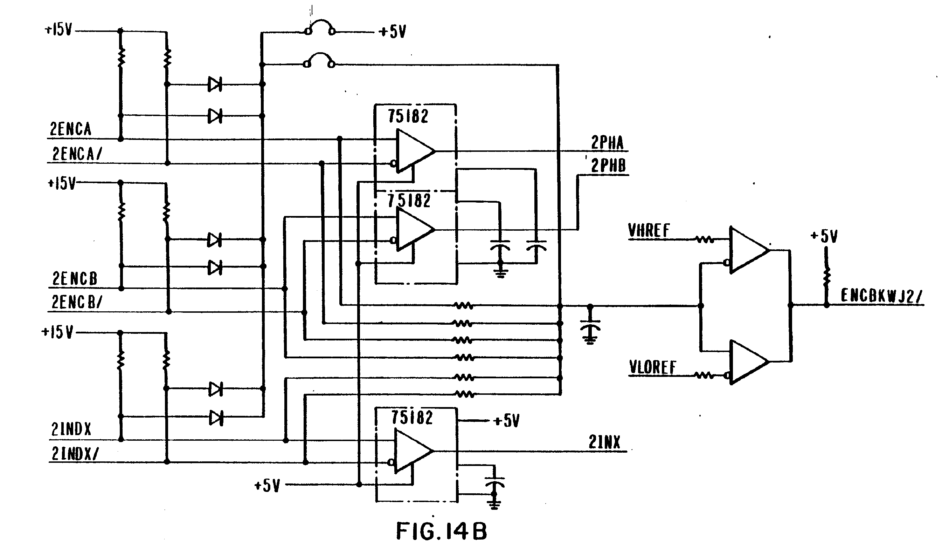

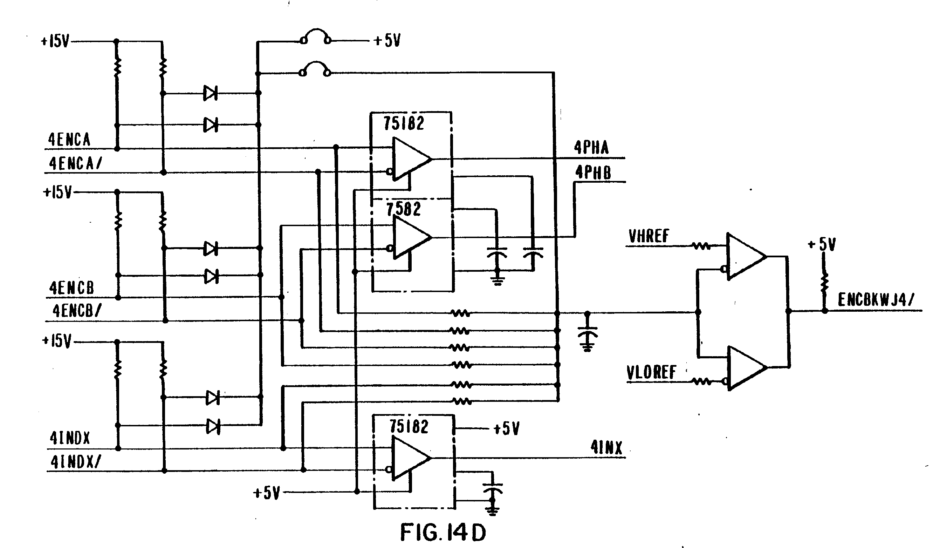

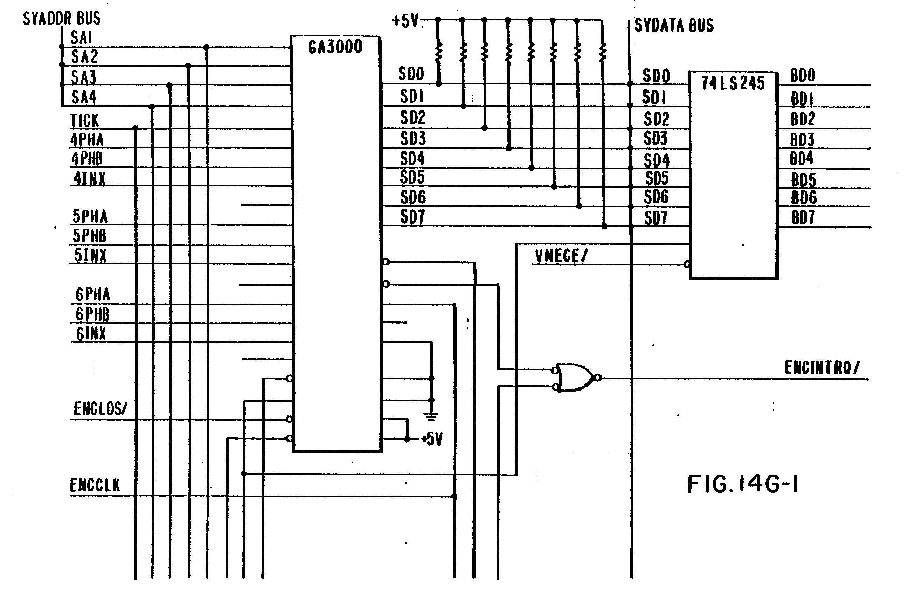

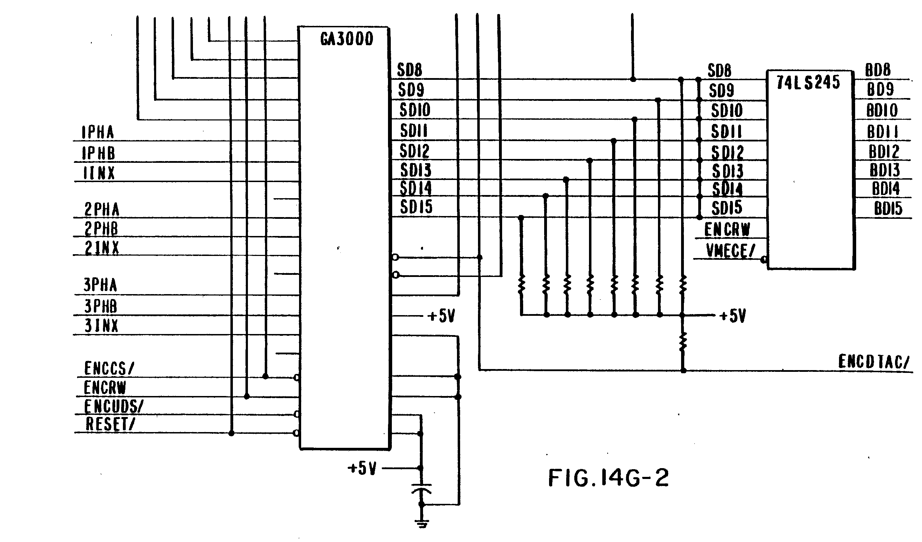

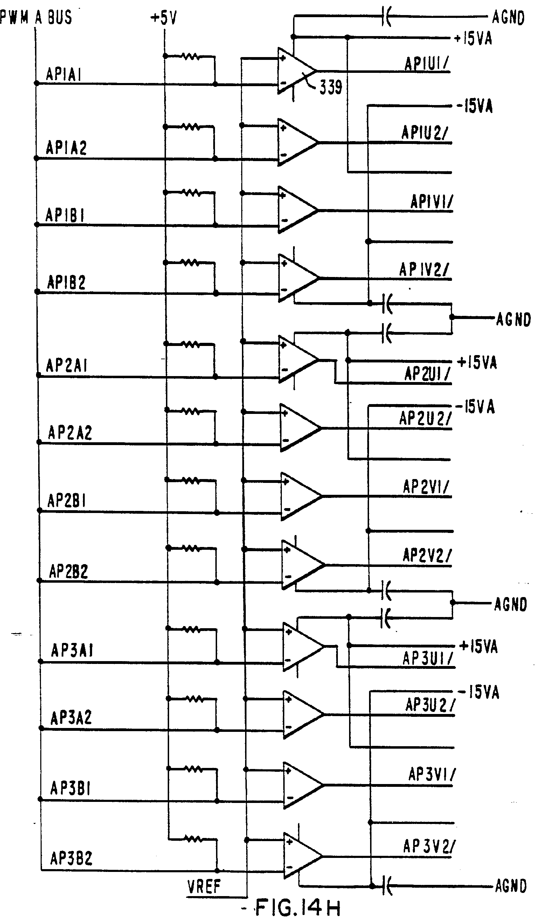

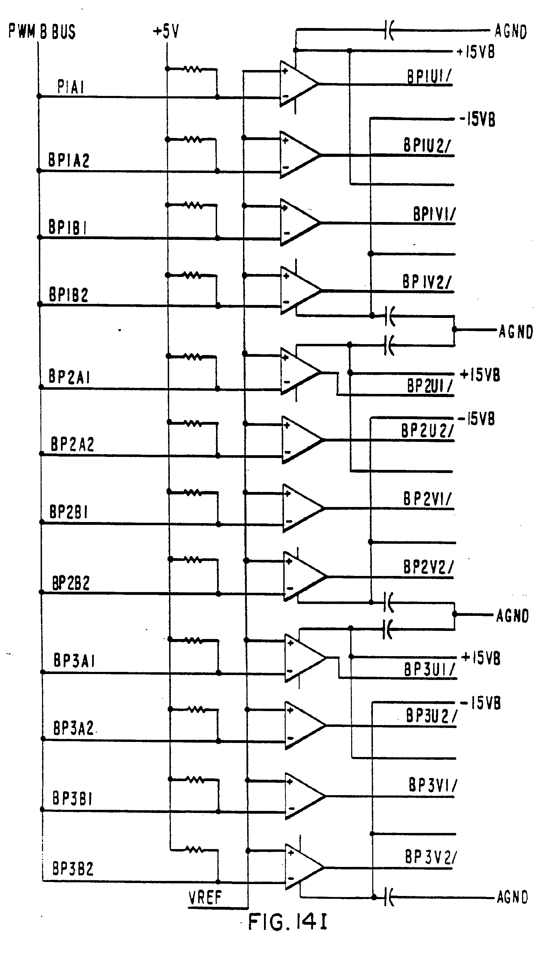

an arm interface module [Fig. 6, 800] having circuitry [Figs. 13 and 14] for performing robot arm dependent functions including circuit means for generating power amplifier control signals in response to input voltage command signals;

said arm interface module circuitry further including cirucit means for processing and manipulating position, velocity and motor current feedback signals;

a torque processor module (600) having torque microprocessor servo means [Fig. 8-1 and 8-2] for operating each of respective torque control loops for the respective joint motors;

said torque microprocessor servo means generating said voltage commands in response to input torque commands and feedback motor current signals;

a servo control module (400) having position/velocity microprocessor servo means [Fig. 7-1 and 7-2] for operating position and velocity control loops for the respective joint motors;

said position/velocity microprocessor servo means generating said torque commands in response to input position commands and feedback position and velocity signals;

said servo control module further including the system resource means [Fig. 7-2, 403] for providing general support for the operation of said servo means and including data communicating control means (403) for communications interfacing (402) with local input/output devices and other systems and devices;

means for storing program means (500 or 410, 412) operative when executed to provide trajectory planning and interpolation and to generate position commands in accordance with predefined moves set forth in a robot program;

means (405) for coupling said program storing means to said position/velocity microprocessor servo means to enable execution of said program means therein; and

means (VME Bus) for interconnecting said servo control, torque processor and arm interface modules to provide a complete basic control for said robot joint motors.

12. A modular robot control as set forth in claim 11 wherein there is provided at least one system level module (500) having system microprocessor means operative to execute said program means; and

means (VME Bus) for interconnecting said system module with said position/velocity servo module so as to couple said system resource means (106A) thereto and so as to enable generated position commands to be applied to said position/velocity servo means.

13. A modular robot control as set forth in claim 11 wherein said control signal generating means in said arm interface module generates control signals [Figs. 13 and 14] for power amplifiers supplying brushless DC joint motors or for power amplifiers supplying brush type DC motors according to the type of motors provided on the robot; and

said feedback circuit means [Figs. 13 and 14] in said arm interface module includes means for generating position and velocity feedback signals from incremental motor position sensors or for processing position and velocity feedback signals respectively from absolute motor position sensors and motor-tachometers.

14. A modular robot control as set forth in claim 11 wherein said control signal generating means on said arm interface board includes pulse width generator circuit means [Fig. 13P].

15. A modular robot control as set forth in claim 13 wherein said arm interface board further includes circuit means [Fig. 13N] for processing feedback current signals.

16. A robot control as set forth in claim 11 which control is variably packagable and adaptable [Fig. 15A, B and C] for use with a relatively wide variety of robots wherein:

said arm interface module is embodied on a first electronic board [Fig. 13] including substantially all control circuitry dependent on a first robot type to be controlled including motor drive circuitry and position and velocity feedback processing circuitry, and at least a second electronic arm interface board [Fig. 14] including substantially all control circuitry dependent on a second robot type to be controlled including motor drive circuitry and position and velocity feedback circuitry; and

said torque processor module and position/velocity servo module are embodied on electronic control board means having control and resource circuitry capable of providing at least complete basic robot control and structured to operate substantially independently of any particular robot type to be controlled out of a group of different controllable robot types; and including interconnector means [see Fig. 15] for coupling said electronic control board means with one of said arm interface boards to form an assembled control for the robot type associated with said one arm interface board.

17. A robot control as set forth in claim 16 wherein said electronic control board means includes a torque processor electronic board (600) including torque servo control circuitry and a servo control electronic board (400) including position and velocity servo control circuitry and arm solution and system resource circuitry, said arm interface and torque processor and servo control boards forming a basic robot control [Fig. 6A].

18. A robot control as set forth in claim 17 wherein said electronic control board means further includes a system control electronic board (500) including arm solution circuitry, said arm interface and torque processor and servo control and system control boards forming a robot control having expanded control capability [Fig. 6A] with faster trajectory time.

19. A robot control as set forth in claim 16 wherein each of said arm interface boards includes interconnection means [see Fig. 15] for coupling motor drive circuitry to power amplifiers associated with motors for the robot joints.

20. A robot control as set forth in claim 16 wherein each of said arm interface boards includes interconnection means [see Fig. 15] for external coupling to supervisory computer means and other robot and machine controls and programmable controllers and input/output devices.

21. A digital control for a robot as set forth in claim 1 wherein:

said first servo control means [Fig. 7-1 and 7-2] performs control support tasks and calculation tasks for said control loop for all of the joint motors;

said first servo control means includes a first microprocessor (404) having a relatively high computing performance capability and a relatively low data processing interface capability for performing calculation tasks including computing output control commands from stored algorithms for said one control loop for each joint motor;

said first servo control means further includes a second microprocessor (402) for supervising the operation of said first servo control means and performing servo control support tasks in said one control loop for each joint motor including the routing of control command, status and feedback data to and from said first microprocessor and including:

communication means [Fig. 6C, 200; Fig. 7-1, 434] for interfacing said first (204) and second (202) microprocessors relative to each other and relative to higher (206) and lower level (210) control circuitry so as to enable said first servo control means to operate said one control loop for each joint motor and control the controlled variable for said one control loop;

said communication interfacing means including a first memory bank (214) and a second memory bank (216);

means (200) for coupling said first microprocessor to one of said banks to write command and feedback data thereto and to read calculated control data therefrom and for coupling said second microprocessor to the other of said banks to read command and feedback data therefrom and to write calculated control data thereto; and

means (218) for cyclically cross-switching said microprocessors and said banks at the control sampling rate so that said first microprocessor can supply new control calculations for control loop operation based on new control commands and feedback data in each control cycle.

22. A robot control as set forth in claim 21 wherein said first servo control means performs tasks for both position and velocity control loops with said first microprocessor performing calculation tasks for both loops and said second microprocessor performing control support tasks for both loops.

23. A robot control as set forth in claim 21 wherein said first servo means performs tasks for a torque control loop.

24. A robot control as set forth in claim 22 wherein second servo control means [Fig. 8-1 and 8-2] are provided for performing control support tasks and calculation tasks for a torque control loop for each joint motor, said second servo means including third (610) and fourth (602) microprocessors operating like said first and second microprocessors and further including another communication means (608) structured like and operating said third and fourth microprocessors like the first defined communications means.

25. A servo control [Fig. 6C] for operation in a control loop in a robot control system that operates a robot [Fig. 1] having multiple axes (21-26) driven by respective joint motors (212), said servo control comprising:

a first microprocessor (204) for performing calculation tasks including computing output control commands from stored algorithms for said one control loop for each joint motor;

said first microprocessor having a relatively high computing performance capability and a relatively low data processing interface capability;

said first servo control means further including a second microprocessor (202) for supervising the operation of said first servo control means and performing servo control support tasks in said one control loop for each joint motor including the routing of control command, status and feedback data to and from said first microprocessor;

communication means (200) for interfacing said first and second microprocessors relative to each other and relative to higher (206) and lower (210) level control circuitry so as to enable said first servo control means to operate said one control loop for each joint motor and control the controlled variable for said one control loop;

said communication interfacing means including a first memory bank (214) and a second memory bank (216);

means (200) for coupling said first microprocessor to one of said banks to write command and feedback data thereto and to read calculated control data therefrom and for coupling said second microprocessor to the other of said banks to read command and feedback data therefrom and to write calculated control data thereto; and

means (218) for cyclically cross-switching said microprocessors and said banks at the control sampling rate so that said first microprocessor can supply new control calculations for control loop operation based on new control commands and feedback data in each control cycle.

26. A servo control as set forth in claim 25 wherein said first microprocessor performs torque loop calculations [Fig. 8-2, 610] to generate voltage commands from torque commands and motor drive current feedback handled by said second microprocessor (602) for all of the robot axes.

27. A servo control as set forth in claim 25 wherein said first microprocessor [Fig. 7-1, 404] performs position and velocity loop calculations to generate torque commands from position commands and position and velocity feedback handled by said second microprocessor (402) for all of the robot axes.

28. A robot comprising:

an arm having a plurality of joints;

each of said joints having an electric motor drive;

a power amplifier operable to supply drive current to each motor;

respective digital feedback control loop means for respectively controlling said power amplifiers for said joint motors;

means for generating digital motor current, position and velocity feedback signals for said control loop means;

each of said digital feedback control loop means including digital position and velocity control loops;

each of said feedback control loop means further including a digital torque control loop responsive to torque commands from said position and velocity control loops to generate voltage commands for operating the associated power amplifier and joint motor;

system resource means providing general support for the operation of said digital feedback control loop means and including data communicating means for interfacing with local input/output devices and other systems and devices;

first microprocessor servo means coupled to said system resource means and generating said voltage commands in response to position commands and said current, position and velocity feedback signals;

means for generating said position commands in accordance with predetermined moves set forth in a robot program;

said position command generating means including planning program means for generating a motion profile with specified motion parameters for implementing each robot program command;

said position command generating means further including trajectory program means for generating said position commands to satisfy each robot program command in accordance with its motion profile;

second microprocessor means adapted to be coupled to said system resource means;

said position command generating means further including said first microprocessor servo means for execution of said planning and trajectory program means in a basic control configuration for said robot or said second microprocessor means for execution of said planning and trajectory program means in an expanded performance control configuration for said robot; and

interfacing memory means for coupling said first and second microprocessor means for data communications therebetween when the expanded control configuration is employed.

29. A robot as set forth in claim 28 wherein program memory means are provided for storing said planning and trajectory program means for loading into either of said microprocessor means.

30. A robot as set forth in claim 29 wherein said system resource means includes said program memory means.

31. A robot as set forth in claim 28 wherein said communication means includes a DMA controller for managing and executing data communications for the robot control loop means thereby freeing said microprocessor means from corresponding communications load burden.

32. A robot as set forth in claim 28 wherein said interfacing memory means is a dual port memory.

33. A robot as set forth in claim 28 wherein said system resource means includes said interfacing memory means.

34. A robot as set forth in claim 31 wherein said system resource means includes said interfacing memory means and means are provided for arbitrating in accordance with predetermined rules access to specific facilities within said system resource means by said first and second microprocessor means and said DMA controller.

FIG. I

FIG. 2

0 269 374

FIG. 3

FIG. 4

222A

## SERVO CONTROLLER MODULE

204A

| SYSTEM PLANNING - SUPERVISORY FUNCTIONS - MONITORING |
| :---: |
| 202A |
| TRAJECTORY CALCULATION ARM SOLUTION |
| 206A |
| POSITION LOOP CONTROL & VELOCITY LOOP CONTROL |
| 210A |
| SYSTEM RESOURCE FUNCTIONS |

SYSTEM BUS

218A

226A · OPTIONAL PROCESSING MODULES (AS REQUIRED)

220A

208A · TORQUE LOOP PROCESSING

TORQUE PROCESSOR MODULE · 223A

225A

216A · ARM INTERFACE MODULE

SERIAL COMM.

ARM DEPENDENT FUNCTIONS

217A · INPUT/OUTPUT

POWER AMPLIFIERS 3-AXES

POWER AMPLIFIERS 3-AXES

ROBOT MECHANICAL ASSEMBLY

FIG.5

0 269 374

EXTENDED
CONTROL

SYSTEM
CONTROL
BOARD ~500

30

400 SERVO
CONTROL
BOARD

TORQUE
PROCESSOR
BOARD ~600

HARDWARE
INDEPENDENT
OF ROBOT ARM

155 VME BUS

BASIC
CONTROL

VMX BUS

ROBOT ARM
DEPENDENT
HARDWARE

WORK
CELL
LINK ~152

ARM
INTERFACE
BOARD

156

I/O ~153

800

SUPERVISORY

154

POWER
AMPLIFIER
BLOCKS ~150

ROBOT ~20

FIG. 6

FIG.6A

FIG.6B

FIG. 6C

FIG. 7-I

FIG. 8-I

FIG. 7-2

FIG. 8-2

AIF BOARD

CONTROLLER COMMAND SIGNAL EXECUTION CIRCUITRY

800A

TP INPUTS

TP OUTPUTS

| TORQUE PROCESSOR BOARD INTERFACE COMMAND SIGNALS | DIGITAL PULSE WIDTH MODULATORS | POWER AMPLIFIER DRIVE CIRCUITRY |
| --- | --- | --- |
| | | COMMUTATION CONTROL |

801    802

JOINT CONTROL OUTPUTS

FEEDBACK SIGNAL PROCESSING CIRCUITRY - ALL JOINTS

800B

JOINT INPUTS

| MOTOR POSITION ENCODER SIGNALS | MOTOR VELOCITY (TACHOMETER) SIGNALS | POWER AMPLIFIER CURRENTS | COMMUTATION SIGNALS (HALL EFFECT SENSORS) |
| --- | --- | --- | --- |

800C

SUPPORT FUNCTION CIRCUITRY

INPUTS

| CONTROL PANEL INTERFACE | VME BUS GENERIC CONTROL DECODING | VOLTAGE MONITOR | HAND INTERFACE | COMMUNICATIONS SCM BOARD | ERROR & SAFETY CONTROL |
| --- | --- | --- | --- | --- | --- |

OUTPUTS

<u>800</u>

FIG. 9A

0 269 374

AIF BOARD

CONTROLLER COMMAND SIGNAL
EXECUTION CIRCUITRY

| TORQUE PROCESSOR BOARD INTERFACE COMMAND SIGNALS | DIGITAL PULSE WIDTH MODULATORS | POWER AMPLIFIER DRIVE CIRCUITRY |
| | | PWM INTERFACE CIRCUITRY |

FEEDBACK SIGNAL PROCESSING
CIRCUITRY - ALL JOINTS

| POSITION ENCODER INTERFACE | POTS INTERFACE | POWER AMPLIFIER CURRENTS |

SUPPORT FUNCTION CIRCUITRY

| CONTROL PANEL INTERFACE | VME BUS GENERIC CONTROL DECODING | VOLTAGE MONITOR | HAND INTERFACE | COMMUNICATIONS SCM BOARD | ERROR & SAFETY CONTROL |

800A-1

TP INPUTS

TP OUTPUTS

800B-1

JOINT INPUTS

800C-1

INPUTS

801  802

JOINT CONTROL OUTPUTS

OUTPUTS

800

FIG.9B

0 269 374

VTICK INTERRUPT  452

BOOKKEEPING & OVERHEAD  470

SHORT "TICK"  N → LONG "TICK" OVERHEAD  471

Y

SET-UP TMS-320 STATES  472

SERVICE FOREGROUND/ BACKGROUND INTERFACE  484

TMS READY  485  N →

Y

TRANSFER DATA TO TMS- SWITCH BANKS  486

TMS OK  487  N →

Y

TMS READY  488  N →

Y

TRANSFER DATA TO TP  489

ERROR CONDITION PROCESSING  489'

SYNCHRONOUS DATA LOGGER  490

ONE-SHOT DATA LOGGER  491

RTE

FIG. 10A

0 269 374

RESET | VTICK | UNSCHEDULED INTERRUPT | WATCHDOG TIMER INTERRUPT
457

453 — INTINI | 452 — SERVO | 454 — C & UNEX | ERROR

450 — MAIN

EXIT

FIG. IOB

INTINI — 453

INISRC

INSRCOM

INIFIX

INCONF

INTMS   FIG.IOC

INIAIB

INROB

INJTMS

INJONT

INBUF

INIDLC

CRTINI

BB INIT

450 — MAIN

456 — RDMASC   FIG.IOD

FIG. 10E

FIG.IOF

F146

SYNCHRONOUS
DATALOGGER

F148

SEMAPHORE =
1

N →

Y

F150

START TICH =
TICH CNTR

F152

$A_1$ = PTR TO ADDRESSES
$A_2$ = PTR TO DATA

F154

$(A_1)$ = 0

Y →

N

F156

$(A_2)+ = (A_1)+$

F158

END TICK =
START TICK

F160

EXIT

FIG.IOG

F162

ONE SHOT
LOGGER

F164

TRIGGER = 1

N →

Y

F166

EVENT CNTR ++
$A_1$ = PTR TO LIST
$A_2$ = PTR TO DATA

F168

EVENTS > MAX

Y →

N

F170

$(A_1)$ = 0

Y →

N

F172

$(A_2)+ = (A_1)+$

F174

PTR TO LIST = $A_1$
TRIGGER = 0

F176

EXIT

FIG.IOH

PROGRAM
EDITOR

ROBOT
PROGRAM ⌐414A

PATH
PLANNING ⌐410A

TRAJECTORY
INTERPOLATION ⌐412A

TO SERVO
CONTROL

FIG.10I

410A
ENTER

413A
PATH
MOVE

416A
COMPUTE DIST TO BE
TRAVELLED ALONG
PATH USING SPLINE FIT
OR CIRCULAR ARC
EQUATIONS

420A
STRAIGHT
LINE MOVE

422A
COMPUTE STRAIGHT
LINE DISTANCE
$$DIST = \sqrt{\Delta X^2 + \Delta Y^2 + \Delta Z^2}$$

418A
COMPUTE ACCEL, DECEL
SLEW TIMES IN
CARTESIAN SPACE USING
ACCEL, DECEL PROFILES

424A
JOINT
MOVE

ERROR
"MOVE TYPE UNKNOWN"

426A
COMPUTE END POINT
JOINT ANGLES
TO FIND DISTANCE IN
JOINT SPACE

428A
USE ACCEL/DECEL PROFILES
TO COMPUTE ACCEL, DECEL,
SLEW TIMES IN
JOINT SPACE

434A
COMPUTE CP
COEFFICIENTS TO
MERGE THIS SEGMENT
TO LAST SEGMENT

432A
CP

430A
FIND LIMITING ACCEL,
DECEL, SLEW TIMES OF
ALL COMPUTED
(TIME PROFILE)

436A
END

FIG.10J

FIG.IOK

FIG.IOL

FIG.11 A

FIG.11B

FIG. 12 A

FIG. 12 B-1

Flowchart:

670 — PWM IREQ

672 — DI

673 — MSEN
- N → (to 678 branch)
- Y ↓

674 — SVEN

675 — ADSET

676 — CMND CK

677 — COPY CMMTN

E

678 — PWMSW DI

679 — PWMCLR

680 — CLRSV

681 — C

682 — ERRCD SET
- Y → 683 SHUT DWN → ERR
- N ↓

684 — TTICK=3
- Y → 685 RST TTICK=0
- N ↓

686 — INCR TTICK

687 — CMND STR

EI

0 269 374

FIG.12B-2

FIG.12B-3

FIG.12B-4

0 269 374

FIG.12C

SOFTWARE | HARDWARE

TORQUE COMMAND → $\dfrac{2^{10}}{2^{16}}$ → Σ → KP, KI, $\dfrac{1}{S}$ → Σ → LINEARIZER

OFFSET

$\dfrac{2^{10}}{2^{16}}$ ← Σ ← A/D* ← $K_{if}$

PWM CHIP → POWER AMP → MOTOR

If, Rs

0.02 Ω
0.04 Ω
0.05 Ω

$\dfrac{2^{15}\ \text{BITS}^*}{5V}$

10 BIT A/D
*LEFT JUSTIFIED

$\approx 2^{10}$ BITS/A (JTI)

| | JT1,2,3 | JT4 | JT5,6 |
|---|---|---|---|
| Rs | 0.02 | 0.04 | 0.05 |
| $K_{if}$   6.8 | 0 124V/A ->40 32A/5V | 0 248V/A ->20 16A/5V | 0 310V/A ->16 13A/5V |

FIG.12D

0 269 374

618

MAIN

620

INTERRUPT

622

RESET

624

WAIT
COMMAND

628

INITIALIZATION
SUBROUTINES

626

UTILITY
SUBROUTINES

FIG.12E

628

INITIALIZATION
SUBROUTINES

DATDIR

STRPWM

TCALCOM

TCONTDB

FIG. 12F

FIG.12G

618 — ENTER MAIN PGM

622 — RESET

630 — CHECK-RAM

632 — TCALCDB

634 — ACTTMS

636 — COPYTMS OFF

638 — LOADTMS

640 — COPYTMS ON

642 — READY TO SCM

644 — CMND — N

Y

624 — WAIT COMMAND

FIG. 12H

FIG. 12 I

FIG. 13A

FIG.13B

FIG. 13C

FIG. 13D

0 269 374

FIG.13E

809

74LS221 814
74LS221 810
74HC4040 812
74LS74 813
811

+5V +8V
SHCLK
ITICK
PWR/RST
STRB/

0 269 374

FIG.13F

FIG. 13G

889-4  RP4

889-6  RP6

889-5  RP5
+5V

889-8  RP8
+5V

889-9  RP9

889-1  RP1

889-2  RP2

889-3  RP3

TO
J105

889-7  RP7

TO
J105

FIG. 13H

FIG.131

FIG.13J-1

FIG. 13J-2

FIG.13K-I

FIG.13K-2

FIG. 13L-1

FIG. I3L-2

FIG.13M-1

FIG.13M-2

0 269 374

FIG. 13N-1

875

SAMP1/

876-1

SAMP2/  876-2

FIG.13N-2

FIG.13 N-3

FIG. 13 O-1

# 74LS74

RDERR/

RESET/

LMSWIT/ | 74ALS279

HALERR/ | 74ALS279

THERMOER/ | 74ALS279

OUTRANG/ | 74ALS279

EMSTOP/ | 74ALS279

SAFLOP/ | 74ALS279

ERROR SIGNAL LATCHES

TEMPSENS/
APSFLOP/
EMSTOP/
FAULT/
MANBRK/
SYSFAIL/
RESET/

LWR/
PWRSET/

SSRENB/

SYDATA BUS

74LS74 FF

BRKREL/

BD2

DYNBRK/

BD3

74LS74 FF

FIG.130-2

FIG. 130-3

FIG.13P-1

0 269 374

**P2 DATA BUS** — 830

**P2 ADDR BUS** — 831

828 — **PWM A BUS**

XWRT/

XUDS/
XLDS/

XA1
XA2
XA3

RESPWM/
TES1

| PWM-A | |
|---|---|
| XD8 — D0 | PIA1 — AP1A1 |
| XD9 — D1 | PIA2 — AP1A2 |
| XD10 — D2 | PIB1 — AP1B1 |
| XD11 — D3 | PIB2 — AP1B2 |
| XD12 — D4 | P2A1 — AP2A1 |
| XD13 — D5 | P2A2 — AP2A2 |
| XD14 — D6 | P2B1 — AP2B1 |
| XD15 — D7 | P2B2 — AP2B2 |
| XD7 — DX | P3A1 — AP3A1 |
| PWM1CS/ — CS | P3A2 — AP3A2 |
| PERW — WR | P3B1 — AP3B1 |
| PEDSH/ — DS | P3B2 — AP3B2 |
| PDTAC/ — DTACK | ENP — ENPWM1 |
| XA1 — A0 | SAMP — IFBS1/ |
| XA2 — A1 | INT |
| XA3 — A2 | LES — RLES1 |
| — DOPT | COUT |
| RESPWM/ — R | OCSF — EPWCLK |
| TES1 — TES | OCS |

838

829 — **PWM B BUS**

| PWM-B | |
|---|---|
| XD8 — D0 | PIA1 — BP1A1 |
| XD9 — D1 | PIA2 — BP1A2 |
| XD10 — D2 | PIB1 — BP1B1 |
| XD11 — D3 | PIB2 — BP1B2 |
| XD12 — D4 | P2A1 — BP2A1 |
| XD13 — D5 | P2A2 — BP2A2 |
| XD14 — D6 | P2B1 — BP2B1 |
| XD15 — D7 | P2B2 — BP2B2 |
| XD7 — DX | P3A1 — BP3A1 |
| PWM2CS/ — CS | P3A2 — BP3A2 |
| PERW — WR | P3B1 — BP3B1 |
| PEDSH/ — DS | P3B2 — BP3B2 |
| PDTAC/ — DTACK | ENP — ENPWM2 |
| XA1 — A0 | SAMP — IFBS2/ |
| XA2 — A1 | INT |
| XA3 — A2 | LES — RLES2 |
| — DOPI | COUT |
| PWMRES/ RESET/ — R | OCSF — EPWCLK |
| — TES | OCS |

839

PWMRES/
RESET/

RESPWM/

801     FIG.13P-2

FIG.13Q-1

FIG.13Q-2

FIG.13R

HDIN1

HDIN2

HDIN3

HDIN4

HDIN5

HDIN6

HDIN7

HDIN8

892-3B

74LS244

BD0
BD1
BD2
BD3
BD4
BD5
BD6
BD7

HAND
ACCESS
GATING

ENHAND/

LRD/

FIG.13S-1

FIG. 13S-2

FIG.13T

FIG. 14A

0 269 374

FIG. 14B

0 269 374

FIG.14D

ENCBKWJ4/

+5V

VHREF

VLOREF

4PHA
4PHB

4INX

+5V

75182

7582

75182

+5V

+5V

+5V

+15V

4ENCA
4ENCA/

+15V

4ENCB
4ENCB/

+15V

4INDX
4INDX/

FIG.14E

0 269 374

FIG.14F-1

0 269 374

FIG.14F-2

ENCBKWJI/

BKWJIRST/

74LS279

ENCBKWJ2/

BKWJ2RST

74LS279

ENCBKWJ3/

BKWJ3RST/

74LS279

ENCBKWJ4/

BKWJ4RST/

74LS279

ENCBKWJ5/

BKWJ5RST/

74LS279

+5V

ENCBKWJ6/

BKWJ6RST/

74LS279

ENCBW

+5V

0 269 374

FIG.14G-1

0 269 374

FIG. 14G-2

0 269 374

FIG.14H

0 269 374

PWM B BUS

+5V

AGND

+15VB

PIAI

BPIUI/

-15VB

BPIA2

BPIU2/

BPIBI

BPIVI/

BPIB2

BPIV2/

AGND

AGND

BP2AI

+15VB

BP2UI/

BP2A2

-15VB

BP2U2/

BP2BI

BP2VI/

BP2B2

BP2V2/

AGND

AGND

BP3AI

+15VB

BP3UI/

BP3A2

-15VB

BP3U2/

BP3BI

BP3VI/

BP3B2

BP3V2/

VREF

AGND

FIG. 14 I

FIG. 14 J-1

FIG. 14 J-2

FIG.14K

FIG. 15 A

FIG.15B

0 269 374

TO
BLOWER

115V/24V
P.C.A.

TO AC
SOURCE

HOUR
METER

POWER
AMPLIFIER
ASSEMBLY

821C

TO
ARM POWER
CONNECTOR

FIG. 15C

0 269 374

FIG.16A

FIG.16B

FIG.16C